(19) **Europäisches Patentamt / European Patent Office / Office européen des brevets**

(11) **EP 4 095 767 A1**

(12) **EUROPEAN PATENT APPLICATION**
published in accordance with Art. 153(4) EPC

(43) Date of publication:
**30.11.2022 Bulletin 2022/48**

(21) Application number: **20915759.3**

(22) Date of filing: **22.04.2020**

(51) International Patent Classification (IPC):
**G06N 20/00** (2019.01)

(52) Cooperative Patent Classification (CPC):
**G06N 20/00**

(86) International application number:
**PCT/CN2020/086200**

(87) International publication number:
**WO 2021/147192 (29.07.2021 Gazette 2021/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.01.2020 CN 202010071871**

(71) Applicant: **Xiamen Etom Intell-Tech Group Co., Ltd Xiamen, Fujian 361000 (CN)**

(72) Inventors:
• **LIU, Yu**
  **Xiamen, Fujian 361000 (CN)**
• **SUN, Zailian**
  **Xiamen, Fujian 361000 (CN)**
• **MEI, Yu**
  **Xiamen, Fujian 361000 (CN)**

(74) Representative: **Loo, Chi Ching et al**
  **Albright IP Limited**
  **County House**
  **Bayshill Road**
  **Cheltenham, Gloucestershire GL50 3BA (GB)**

(54) **MACHINE HEURISTIC LEARNING METHOD, SYSTEM AND DEVICE FOR OPERATION BEHAVIOR RECORD MANAGEMENT**

(57) A machine heuristic learning method, system and device for operation behavior record management: one or more operation data dimensions are selected by means of a random algorithm; a value is randomly generated within a safety interval of the selected operation data dimension to form new operation data of the selected operation data dimension; and the device automatically executes the new operation data, enters a heuristic working state, and then performs self-learning on basic working condition data, the new operation data and evaluation data generated therefrom. The present method solves the problem of an accumulation of operation experience for automated production lines and unattended devices so that, at the same time, the operation behavior record management method, system, and device are enabled to break through the limitations of historical data, and optimize and evolve toward a more advanced self-operation and self-learning direction.

FIG. 1

**Description**

BACKGROUND OF THE INVENTION

1. Technical Field

The invention relates to a machine heuristic learning method, system and device for operation behavior record management.

2. Description of Related Art

The key to an operation behavior record management system is to accumulate operation experience of humans or machines in various circumstances, and induce and summarize the best experience to assist humans or machines in operations in such circumstances, so as to make a global improvement.

However, in the industrial field, there are many automated devices that maintain factory settings for tens of years and are unattended; and devices in public places may be not debugged for a long time due to management costs. The lack of a reasonable optimization on these devices will not only hinder the increase of the production capacity and cause energy waste, but also will impede the development from automated operations to intelligent operations.

BRIEF SUMMARY OF THE INVENTION

The invention provides a machine heuristic learning method, system and device for operation behavior record management. The machine heuristic learning method, system and device for operation behavior record management are a machine heuristic self-operation and self-learning method, system and device for enhancing the functions of an operation behavior record management method, system and device, are established based on a management system for one type of operation behavior records, and generate, together with the management system for this type of operation behavior records, new operation behavior records for the operation behavior record management system.

The operation behavior record management system mentioned in the invention refers to an implementation scenario of an intelligent system, and refines three types of data theories and specific solutions for specific implementation scenario in industrial and service fields. The invention provides a machine heuristic learning method, system and device for operation behavior record management. One or more operation data dimensions are selected by means of a random algorithm; a value is randomly generated within a safety range of the selected operation data dimension to form new operation data of the selected operation data dimension; and the device automatically executes the new operation data, enters a heuristic working state, and then performs self-learning on basic working condition data, the new operation data and evaluation data generated therefrom. The invention solves the problem of an accumulation of operation experience for automated production lines and unattended devices, and provides enhanced technical support for the application of the operation behavior record management method, system and device in these fields. The invention also realizes the innovation of operation behavior records of the operation behavior record management method, system and device, thus enabling the operation behavior record management method, system and device to break through the limitations of historical data, and optimize and evolve toward a more advanced self-operation and self-learning direction.

Wherein, the method comprises:

Establishing a safety range of operation data, a permissible safety range being set for operatable and/or settable parameters of automated production lines or unattended devices in factory;

Setting a constraint condition and a heuristic end condition: setting a constraint condition in a corresponding application scenario, especially a constraint condition involving security or national standards (such as emission standard); setting an emergency plan for the constraint condition, especially the constraint condition involving security or national standards (such as emission standard);

Performing a heuristic process: acquiring current basic working condition data, operation data and an emergency plan from a system, wherein the operation data comprises at least one operation dimension, and in case of no emergency plan, only the operation data is acquired; selecting at least one operation dimension by means of a random algorithm, randomly generating a value within a safety range of the selected operation dimension to form new operation data of the selected operation dimension, automatically executing the new operation data by the device, and entering a heuristic working state;

Checking the constraint condition; if the constraint condition is not met, starting the emergency plan if any;

Performing, after a working condition is stable, self-learning on the basic working data, the new operation data and evaluation data generated therefrom if the heuristic working state is not changed; and

If the heuristic end condition is not triggered, performing a next heuristic process; or, if the heuristic end condition is triggered, ending the heuristic self-learning state.

Sufficient samples can be obtained by randomly acquiring new operation data and simulating the operation data; and when the method is applied to actual production, safe and reliable operation data can be provided according to real-time production conditions.

In the present application, the basic working condition data is a type of factors that actually exist in the production process, cannot be changed or are better not to be changed, and have an impact on the production process and result, such as external inputs, external environments and production plans, and represents the intervention of humans in the production process, such as the configuration of machines and control of workers on devices.

Further, the constraint condition comprises a precondition of an optimization objective, a compliant constraint, and a negative list of operation data;

The precondition of the optimization objective means that the system fulfills the optimization objective under the condition of meeting the precondition, such as reducing energy consumption under the precondition that that quality of products is up to standard;

The compliant constraint refers to a case, appearing in various result evaluation data and caused by the basic working condition data and operations, that violates national standards, hinders the quality of products from reaching the standard, and has a negative influence on a subsequent process;

The negative list of the operation data refers to dangerous operation behaviors that should be prohibited out of consideration of device and personnel security.

Further, when the constraint condition is set, an isolation condition is also set, wherein the isolation condition is stricter than the constraint condition; and when the isolation condition is triggered in the heuristic working state, it is necessary to return to previous operation data.

The emergency plan comprises a preset value of the operation data and an alarm mode; and when the emergency plan is started, the operation data is modified into the preset value, and an alarm is triggered.

Further, the heuristic end condition is that the coverage rate of the basic working condition data reaches a preset proportion.

Further, the heuristic end condition is that the number of operation dimensions under the same basic working condition data reaches a preset value.

Further, the heuristic end condition is that an operation result of a new operation dimension reaches a desired effect.

Further, the evaluation data generated from the basic working condition data and the operation data comprises an optimization objective value or a restrictive result value.

Further, if the evaluation data is superior to recorded evaluation data corresponding to other operation data under the same basic working condition data, operation behavior records are updated.

The machine heuristic learning system for operation behavior record management comprises: a basic working condition data acquisition module, an operation data acquisition module, an evaluation data acquisition module and a data analysis module, wherein:

The basic working condition data acquisition module acquires basic working condition data and transmits the basic working condition data to the data analysis module;

The operation data acquisition module acquires operation data of the device and transmits the operation data to the data analysis module;

The evaluation data acquisition module acquires or calculates evaluation data and transmits the evaluation data to the data analysis module;

The data analysis module pre-stores corresponding basic working condition data, operation data, evaluation data and an emergency plan, a constraint condition, an isolation condition, a heuristic end condition, and a safety range of the operation data;

The data analysis module randomly generates new operation data within the safety range of the operation data, and enters a heuristic working state; checks the constraint condition, and if the constraint condition is not met, starts the emergency plan if any; performs, after the working condition is stable, self-learning on the basic working condition data, the new operation data and the evaluation data generated therefrom to form new operation behavior records if the heuristic working state is not changed; enters a next heuristic process if the heuristic end condition is not triggered; and ends the heuristic self-learning state if the heuristic end condition is triggered.

The machine heuristic learning device for operation behavior record management comprises: a basic working condition data acquisition device, an operation data acquisition device, an evaluation data acquisition device and a data analysis device, wherein:

The basic working condition data acquisition device acquires basic working condition data and transmits the basic working condition data to the data analysis device;

The operation data acquisition device acquires operation data of the device and transmits the operation data to the data analysis device;

The data analysis device pre-stores corresponding basic working condition data, operation data, evaluation data and an emergency plan, a constraint condition, an isolation condition, a heuristic end condition, and a safety range of the operation data;

The data analysis device randomly generates new operation data within the safety range of the operation data, and enters a heuristic working state; checks the constraint condition, and if the constraint condition is not met, starts the emergency plan if any; performs, after the working condition is stable, self-learning on the basic working condition data, the new operation data and the evaluation data generated therefrom to form new operation behavior records if the heuristic working state is not changed; enters a next heuristic process if the heuristic end condition is not triggered; and ends the heuristic self-learning state if the heuristic end condition is triggered.

From the above description, compared with the prior art, the machine heuristic learning method, system and device for operation behavior record management provided by the invention have the following advantages:

1. The invention solves the problem of an accumulation of operation experience for automated production lines and unattended devices, and provides enhanced technical support for the application of the operation behavior record management method, system and device in these fields;

2. The invention also realizes the innovation of operation behavior records of the operation behavior record management method, system and device, thus enabling the operation behavior record management method, system and device to break through the limitations of historical data, and optimize and evolve toward a more advanced self-operation and self-learning direction.

BRIEF DESCRIPTION OF THE SEVERAL VIEWS OF THE DRAWINGS

Accompanying drawings are described here to provide a further understanding of the invention, and constitute one part of the invention. Illustrative embodiments of the invention and descriptions thereof are used to explain the invention, and should not be construed as improperly limitations of the invention.

Wherein:

FIG. 1 is a diagram of Embodiment 32 of the invention;
FIG. 2 is a diagram of Embodiment 57 of the invention;
FIG. 3 is a diagram of Embodiment 58 of the invention;
FIG. 4 is a first diagram of Embodiment 59 of the invention;
FIG. 5 is a second diagram of Embodiment 59 of the invention;
FIG. 6 is a diagram of Embodiment 70 of the invention;
FIG. 7 is a diagram of Embodiment 71 of the invention;
FIG. 8 is a diagram of Embodiment 75 of the invention;
FIG. 9 is a diagram of Embodiment 78 of the invention;
FIG. 10 is a diagram of Embodiment 88 of the invention;
FIG. 11 is a diagram of Embodiment 89 of the invention;
FIG. 12 is a diagram of Embodiment 90 of the invention;
FIG. 13 is a diagram of Embodiment 91 of the invention;
FIG. 14 is a diagram of Embodiment 94 of the invention;
FIG. 15 is a first diagram of Embodiment 97 of the invention;
FIG. 16 is a second diagram of Embodiment 97 of the invention;
FIG. 17 is a third diagram of Embodiment 97 of the invention.

DETAILED DESCRIPTION OF THE INVENTION

To gain a better understanding of the technical problems to be solved by the invention and the technical solutions and beneficial effects of the invention, the invention will be described in further detail below in conjunction with the accompanying drawings and embodiments. It should be understood that the specific embodiments in the following description are merely used to explain the invention, and are not used to limit the invention.

Embodiment 1:

A machine heuristic learning method for operation behavior record management comprises the following steps:

S10: establishing a safety range of operation data, wherein a permissible safety range is set for operatable and/or settable parameters of automated production lines or unattended devices in factory;

S20: setting a constraint condition, an isolation condition and a heuristic end condition, wherein a constraint condition in a corresponding application scenario, especially a constraint condition involving security or national standards (such as emission standard) is set; the isolation condition is stricter than the constraint condition, and in some scenarios, the isolation condition does not need to be set; the constraint condition is that an operation result of a new operation dimension reaches a desired effect;

S30: setting an emergency plan, wherein an emergency plan is set for the constraint condition, especially the constraint condition involving security or national standards (such as emission standard); the emergency plan comprises a preset value of operation data and an alarm mode; in some scenarios, the emergency plan does not need to be set;

S40: acquiring current basic working condition data, operation data and an emergency plan from an intelligent optimization system, wherein the operation data comprises at least one operation dimension, and in case of no emergency plan, only the operation data is acquired;

S50: selecting one or more operation dimensions by means of a random algorithm, randomly generating a value within a safety range of the selected operation dimension to form new operation data of the selected operation dimension, writing the new operation data into a PLC or DCS of a device, automatically executing the new operation data by the device, and entering a heuristic working state;

S60: checking the constraint condition and the isolation condition; if the constraint condition is not met, starting the emergency plan, modifying the operation data into the preset value, and triggering an alarm; if the isolation condition is met, returning the operation dimension to a previous value;

S70: after a working condition is stable, performing, by the system, self-learning on the basic working data, the new operation data and evaluation data generated therefrom to generate new operation behavior records if the heuristic working state is not changed; and

S80: if the heuristic end condition is not triggered, returning to S40 to perform a next heuristic process; or, if the heuristic end condition is triggered, ending the heuristic self-learning state.

Embodiment 2:

A machine heuristic learning system for operation behavior record management adopts the method in Embodiment 1 and comprises: a basic working condition data acquisition module, an operation data acquisition module, an evaluation data acquisition module and a data analysis module, wherein:

The basic working condition data acquisition module acquires basic working condition data and transmits the basic working condition data to the data analysis module;

The operation data acquisition module acquires operation data of a device and transmits the operation data to the data analysis module;

The evaluation data acquisition module acquires or calculates evaluation data and transmits the evaluation data to the data analysis module;

The data analysis module pre-stores corresponding basic working condition data, operation data, evaluation data and an emergency plan, a constraint condition, an isolation condition, a heuristic end condition, and a safety range of the operation data;

The data analysis module randomly generates new operation data within the safety range of the operation data, and enters a heuristic working state; checks the constraint condition, and if the constraint condition is not met, starts the emergency plan if any; performs, after the working condition is stable, self-learning on the basic working condition data, the new operation data and the evaluation data generated therefrom to form new operation behavior records if the heuristic working state is not changed; enters a next heuristic process if the heuristic end condition is not triggered; and ends the heuristic self-learning state if the heuristic end condition is triggered.

Embodiment 3:

A machine heuristic learning method for operation behavior record management adopts the method in Embodiment 1 and comprises: a basic working condition data acquisition device, an operation data acquisition device, an evaluation data acquisition device and a data analysis device, wherein:

The basic working condition data acquisition device acquires basic working condition data and transmits the basic working condition data to the data analysis device;

The operation data acquisition device acquires operation data of the device and transmits the operation data to the data analysis device;

The data analysis device pre-stores corresponding basic working condition data, operation data, evaluation data and an emergency plan, a constraint condition, an isolation condition, a heuristic end condition, and a safety range of the operation data;

The data analysis device randomly generates new operation data within the safety range of the operation data, and enters a heuristic working state; checks the constraint condition, and if the constraint condition is not met, starts the emergency plan if any; performs, after the working condition is stable, self-learning on the basic working condition data, the new operation data and the evaluation data generated therefrom to form new operation behavior records if the heuristic working state is not changed; enters a next heuristic process if the heuristic end condition is not triggered; and ends the heuristic self-learning state if the heuristic end condition is triggered.

Embodiment 4:

The machine heuristic learning method for operation behavior record management in Embodiment 1 is applied to an air-conditioning system in a public area. This scenario mainly has the following attributes:

Basic working condition data: outside temperature and outside humidity;

Operation data: set temperature of air-conditioning unit, air inlet mode, and inlet air velocity;

Optimization objective: to make the current power as low as possible;

Constraint condition: the temperature, humidity and PM2.5 concentration acquired by sensors arranged in a personnel area are within designated ranges.

The process of this scenario:

1. Setting a safety range of the operation data;

   Set temperature of the air-conditioning unit: 21 °C -28 °C;
   Air inlet mode: 1-4;
   Inlet air velocity: level 1-level 5;

2. Setting an isolation condition: no safety problem, not needed;
3. Setting an emergency plan: no safety problem, not needed;
4. Acquiring the set temperature of the air-conditioning unit, the air inlet mode, and a current value of the inlet air velocity, that is, acquiring current basic working condition data;
5. Randomly selecting an operation dimension, randomly generating a piece of new operation data within a safety range of the operation dimension, writing the new operation data into a control system, and automatically executing the new operation data by the air-conditioning system;
6. Waiting for 10 minutes;
7. Learning the new operation data and an operation result generated therefrom;
8. Checking whether there is an end signal; if not, returning to Step 4; and
9. Ending the heuristic self-learning state.

Embodiment 5:

The machine heuristic learning method for operation behavior record management in Embodiment 1 is applied to an optimal operation scheme of an automated chemical device.

Specifically, gaseous ethylene, from a supplier's factory through a pipeline, is used as the raw material of the chemical device, and its instantaneous pressure and flow rate vary frequently; controllable parameters of the fully automated chemical device are the opening degree of valves and the flow rate of heating steam, and the chemical device is attended, but is never operated. The product is propyl aldehyde, online propyl aldehyde purity measurement points are set, and the optimization objective is to dynamically adjust the opening degree of the valves and the flow rate of the heating steam, so as to improve the purity of propyl aldehyde.

This scenario mainly has the following attributes:

Attributes of an intelligent optimization system:

1. Basic working condition data: instantaneous pressure and flow rate of raw materials, and steam temperature;
2. Operation data: the opening degree of the valves of the device, and the flow rate of the heating steam;
3. Optimization objective: to make the purity of propyl aldehyde as high as possible under the condition of safe production.

The process of this scenario:

1. Setting upper limits and lower limits, namely safety ranges, of the opening degree of the valves and the flow rate of the heating steam;
2. Setting a reaction time;
3. Setting a constraint condition, an emergency plan and a heuristic end condition, wherein the constraint condition is that the liquid level of a reaction tank is between set upper and lower limits and the pressure in the reaction tank is between set upper and lower limits; the emergency plan is to give an alarm to be handled by a technician; the heuristic end condition is that the purity of propyl aldehyde is up to expectation;

4. Acquiring, from the intelligent optimization system, the current opening degree of the valves and the current flow rate of the heating steam of the device, namely current basic working condition data;

5. Randomly selecting one operation dimension, randomly generating a new operation dimension between upper and lower limits of the operation dimension, sending the new operation dimension to a DCS, and automatically executing the new operation dimension by the device;

6. Waiting to the end of the reaction according to a waiting time, detecting an emergency trigger condition during the waiting process, and if the emergency trigger condition is met, starting an emergency plan;

7. If the current production condition is stable, learning the basic working condition data, the new operation dimension and evaluation data generated therefrom;

8. Checking whether there is an end signal; if not, returning to Step 4; and

9. Ending the heuristic self-learning state.

Embodiment 6:

The machine heuristic learning method for operation behavior record management in Embodiment 1 is applied to an optimal configuration of products in chemistry laboratories.

Traditionally, researchers have to do experiments continuously for 1-2 years to obtain the optimal configuration of a product. This scenario aims at obtaining the optimal configuration quickly and automatically.

The manual process of this scenario is as follows:

1. The type of raw materials, and the sequence in which the raw materials are added into a container are certain;

2. A raw material ratio is worked out by researchers;

3. The raw materials are automatically weighed according to the raw material ratio, and are then added into the container;

4. The components after reaction are detected automatically;

5. A result is recorded; whether the result is up to expectation is analyzed; if so, Step 6 is performed; otherwise, Step 2 is performed;

6. The experimental process is ended.

This scenario mainly has the following attributes.

Attributes of an intelligent optimization system:

1. Basic working condition data: raw material list, cost or raw materials, adding sequence of the raw materials, and qualified component standard of a product obtained after reaction;

2. Operation data: weight of the raw materials;

3. Optimization objective: to make the total cost of the raw materials as low as possible under the precondition that the product obtained after reaction is up to the qualified component standard.

The process of this scenario:

1. Setting upper and lower limits of the weight of the raw materials;

2. Setting a reaction time;

3. Setting a constraint condition, an emergency plan and a heuristic end condition, wherein constraint condition is that the pressure of the container is higher than 2.5KP; the emergency plan is to open a pressure release valve and give an alarm; the heuristic end condition is that the total cost is up to expectation;

4. Acquiring a previous raw material ratio (if this if the first time, acquiring an initial raw material ratio) from the intelligent optimization system;

5. Randomly selecting one raw material, randomly generating a new data value between the upper and lower limits of this raw material, replacing an original data value of this raw material in the previous raw material ratio with the new data value to form a new raw material ratio, and sending the new material ratio to a DCS;

6. Waiting to the end of the reaction according to a waiting time; detecting the constraint condition during the waiting process; if the constraint condition is met, starting the emergency plan; if the experimental reaction is stable, learning the basic working condition data, new operation data and evaluation data generated therefrom;

7. Checking whether there is an end signal; if not, returning to Step 4; and

8. Ending the heuristic self-learning state.

Embodiment 7: Control of coal gasifier

The machine heuristic learning method for operation behavior record management in Embodiment 1 is applied to a coal gasification process. The process of this scenario is as follows:

Coal gasification, as a thermochemical processing process of coal, is a process for transforming combustible components in coal or coke into a combustible gas at high temperature and high pressure through chemical reaction, with the coal or coke as a raw material and oxygen (air, enriched oxygen or industrial pure oxygen) and steam as a gasifying agent, and the generated combustible gas mainly includes carbon monoxide, hydrogen and methane; the combustible gas obtained by gasification is called coal gas, and the coal gas used as chemical materials is generally called synthesis gas, the device used for gasification is called gas generator or gasifier; and controllable parameters of the coal gasifier include oxygen addition, fuel bed depth, air supply, air pressure, internal temperature, outlet pressure, and dosage of the gasifying agent, and the optimization objective is to make the gasification efficiency as high as possible.

This scenario mainly has the following attributes:

Basic working condition: type of coal, water content of coal, clinkering property of coal, reactivity of coal, granularity of coal, ash fusion point of coal, volatiles of coal, ash content of coal, and ambient temperature;

Operation data: oxygen addition, fuel bed depth, air supply, air pressure, internal temperature, outlet pressure, and dosage of gasifying agent;

Optimization objective: to make the gasification efficiency as high as possible;

Optimization constraint condition: the quality of synthesis gas should meet a configured value.

The process of this scenario:

1. Setting upper and lower limits, namely safety ranges, of the oxygen addition, the fuel bed depth, the air supply, the air pressure, the internal temperature, the outlet pressure and the dosage of gasifying agent;
2. Setting a reaction time;
3. Setting an isolation condition: the quality of synthesis gas being between set upper and lower limits;
4. Setting an emergency trigger condition: no safety problem, not needed;
5. Setting an emergency plan: giving an alarm, and handling according to an actual situation;
6. Setting a heuristic end condition: successive five heuristic results being higher than results obtained based on current optimal operation knowledge, under the same basic working condition;
7. Acquiring current values of the oxygen addition, the fuel bed depth, the air supply, the air pressure, the internal temperature, the outlet pressure and the dosage of gasifying agent, that is, acquiring current operation data;
8. Randomly selecting one operation item from the operation data, randomly generating a new operation item within the safety range of the operation item, writing the new operation item into a control system, and automatically executing the new operation item by the device;
9. Waiting to the end of the reaction according to a waiting time; detecting the isolation condition during the waiting process; if the isolation condition is met, returning heuristic data to a previous value by means of a revertive control mechanism; and
10. Checking whether the end condition is met; if not, returning to Step 7.

Embodiment 8: Control of methanol synthesis tower

The machine heuristic learning method for operation behavior record management in Embodiment 1 is applied to a synthesis gas-to- methanol process. The process of this scenario is as follows:

Synthesis gas is prepared from coal water slurry, is subjected to water-gas shift under the action of a shift catalyst, and then enters a methanol synthesis tower to synthetize methanol under the action of a methanol synthesis catalyst; high-CO-content raw gas is prepared in a coal gasifier from coal and oxygen in air, CO is converted into H2 through high-temperature shift to obtain a hydrogen-carbon ratio required for methanol synthesis, and redundant CO2 and sulfides are removed through purification to obtain methanol synthesis gas; because methanol prepared from coal has a large carbon content and a small hydrogen content, hydrogen has to be recovered from gas discharged from a synthesis pool to reduce coal consumption and energy consumption; methanol is synthesized from the recovered hydrogen and the purified synthesis gas; controllable parameters of the methanol synthesis tower include synthesis pressure, hydrogen-carbon ratio of raw gas, air velocity, catalyst dosage and reaction temperature, and the optimization objective is to make the methanol output as high as possible.

This scenario mainly has the following attributes:

Basic working condition: property of catalyst, composition of raw gas, inlet temperature, toxicant content of raw gas catalyst, and hot-spot temperature;

Operation data: synthesis pressure, hydrogen-carbon ratio of raw as, air velocity, catalyst dosage and reaction temperature;

Optimization objective: to make the methanol output as high as possible;

Optimization constraint condition: the composition of methanol meets a configured value.

The process of this scenario:

1. Setting upper and lower limits, namely safety ranges, of the synthesis pressure, the hydrogen-carbon ratio of raw as, the air velocity and the catalyst dosage;

2. Setting a reaction time;

3. Setting an isolation condition: the composition of methanol being between set upper and lower limits;

4. Setting an emergency trigger condition: all operating parameters of the synthesis tower being between set upper and lower limits;

5. Setting an emergency plan: giving an alarm, and handling according to an actual situation;

6. Setting a heuristic end condition: successive ten heuristic results being higher than results obtained based on current optimal operation knowledge, under the same basic working condition;

7. Acquiring current values of the synthesis pressure, the hydrogen-carbon ratio of raw as, the air velocity and the catalyst dosage, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; detecting the emergency trigger condition and the isolation condition during the waiting process; if the emergency trigger condition is met, starting the emergency plan; if the isolation condition is met, returning heuristic data to a previous value by means of a revertive control mechanism; and

10. Checking whether the end condition is met; if not, returning to Step 7.

Embodiment 9: Control of ammonia synthesis tower

The machine heuristic learning method for operation behavior record management in Embodiment 1 is applied to an ammonia synthesis process. The process of this scenario is as follows:

Ammonia synthesis reaction is a synthesis reaction carried out on H2 and N2 produced in previous coal gasification in a synthesis tower; under certain thermodynamic and dynamic conditions, raw gas is mixed in proportion and is subjected to a synthesis reaction under high temperature and high pressure to produce ammonia gas; the production process of synthetic ammonia basically comprises three steps: preparation of the raw gas; purification of the raw gas; ammonia synthesis: decomposing steam by combusting a solid fuel (coke or coal), and preparing a gas mixture of nitrogen, hydrogen, carbon monoxide and carbon dioxide by means of the reaction of oxygen in air and the coke or coal; and after the purified hydrogen-ammonia gas mixture is compressed, synthesizing ammonia with an iron catalyst at high temperature; and controllable parameters of the ammonia synthesis tower include synthesis temperature, synthesis pressure and air flow rate, and the optimization objective is to make the ammonia output as high as possible.

This scenario mainly has the following attributes:

Basic working condition: hydrogen-nitrogen ratio of raw gas, property of catalyst, methane content of raw gas, inlet temperature, and life of catalyst;

Operation data: synthesis temperature, synthesis pressure and air flow rate;

Optimization objective: to make the ammonia output as high as possible;

Optimization constraint condition: the quality of produced ammonia meets a configured value.

The process of this scenario:

1. Setting upper and lower limits, namely safety ranges, of the synthesis temperature, the synthesis pressure and the air flow rate;

2. Setting a reaction time;

3. Setting an isolation condition: the quality of produced ammonia being between set upper and lower limits;

4. Setting an emergency trigger condition: all operating parameters of the synthesis tower being between set upper and lower limits;

5. Setting an emergency plan: giving an alarm, and handling according to an actual situation;

6. Setting a heuristic end condition: successive five heuristic results being higher than results obtained based on current optimal operation knowledge, under the same basic working condition;

7. Acquiring current values of the synthesis temperature, the synthesis pressure and the air flow rate, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; detecting the emergency trigger condition and the isolation condition during the waiting process; if the emergency trigger condition is met, starting the emergency plan; if the isolation condition is met, returning heuristic data to a previous value by means of a revertive control mechanism; and

10. Checking whether the end condition is met; if not, returning to Step 7.

Embodiment 10: Control of methanol-to-olefin reactor

The machine heuristic learning method for operation behavior record management in Embodiment 1 is applied to a methanol-to-olefin process. The process of this scenario is as follows:

Raw coal is crushed to be pre-processed and then enters a coal gasifier to be subjected to an incomplete oxidation reaction with oxygen to obtain semi-water gas, the semi-water gas is desulfurized with a zinc oxide desulfurizer through a wet process, carbon monoxide reacts with water to adjust the carbon-hydrogen ratio, and the shifted gas with a certain carbon-hydrogen ratio is delivered into a methanol synthesis loop; and after being pressurized to certain pressure by a gas compressor, the replacement gas enters a synthesis tower and reacts under the action of temperature and a copper-based catalyst, and a product is rectified by two towers to obtain methanol.

Ethylene or propylene is prepared from methanol through an MTO or MTP process, and is then delivered to a polyesterification stage to obtain a high polymer material such as polyethylene. Controllable parameters of the methanol-to-olefin reactor include reaction temperature, reaction pressure, reaction residence time, air velocity and catalyst dosage, and the optimization objective is to make the conversion rate of methanol as high as possible.

This scenario mainly has the following attributes:

Basic working condition: carbon-hydrogen ratio of raw material, and property of catalyst;

Operation data: reaction temperature, reaction pressure, reaction residence time, air velocity and catalyst dosage;

Optimization objective: to make the conversion rate of methanol as high as possible;

Optimization constraint condition: the quality parameter of produced olefin meets a configured value.

The process of this scenario:

1. Setting upper and lower limits, namely safety ranges, of the reaction temperature, the reaction pressure, the reaction residence time, the air velocity and the catalyst dosage;

2. Setting a reaction time;

3. Setting an isolation condition: the quality parameter of produced olefin being between set upper and lower limits;

4. Setting an emergency trigger condition: all operating parameters of the reactor being between set upper and lower limits;

5. Setting an emergency plan: giving an alarm, and handling according to an actual situation;

6. Setting a heuristic end condition: successive five heuristic results being higher than results obtained based on current optimal operation knowledge, under the same basic working condition;

7. Acquiring current values of the reaction temperature, the reaction pressure, the reaction residence time, the air velocity and the catalyst dosage, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; detecting the emergency trigger condition and the isolation condition during the waiting process; if the emergency trigger condition is met, starting the emergency plan; if the isolation condition is met, returning heuristic data to a previous value by means of a revertive control mechanism; and

10. Checking whether the end condition is met; if not, returning to Step 7.

Embodiment 11: Control of acetic acid reactor

The machine heuristic learning method for operation behavior record management in Embodiment 1 is applied to an acetic acid reaction process. The process of this scenario is as follows:

Coal reacts with O2 in air in a gasifier to prepare crude gas with a high CO content and a high H2 content, and the crude gas discharged out of the gasifier is divided into three paths: part of CO in one path of the crude gas is converted into H2 with steam to obtain a hydrogen-carbon ratio required for methanol synthesis; then this path of crude gas is mixed with another path of the crude gas (mixed gas), the gas mixture is subjected to heat recovery and is then purified to remove redundant CO2 and sulfides to obtain raw gas for methanol synthesis, and synthesized crude methanol is refined to obtain a methanol product; the third path of crude gas is subjected to heat recovery and purification, CO separated from this path of crude gas is used as raw gas for synthesizing acetic acid, acetic acid is synthesized from the refined methanol and CO under the action of a catalyst, and the synthesized acetic acid is refined to obtain an acetic acid product. Controllable parameters of the acetic acid reactor include reaction temperature, reaction pressure, reaction time, air velocity and catalyst dosage, and the optimization objective is to make the conversion rate of methanol as high as possible.

This scenario mainly has the following attributes:

Basic working condition: feed temperature of raw material, property of catalyst, composition of raw gas, and oxygen-methanol ratio;

Operation data: reaction temperature, reaction pressure, reaction time, air velocity and catalyst dosage;

Optimization objective: to make the conversion rate of methanol as high as possible;

Optimization constraint condition: the quality parameter of acetic acid meets a configured value.

The process of this scenario:

1. Setting upper and lower limits, namely safety ranges, of the reaction temperature, the reaction pressure, the reaction time, the air velocity and the catalyst dosage;

2. Setting a reaction time;

3. Setting an isolation condition: setting the quality parameter of acetic acid between set upper and lower limits;

4. Setting an emergency trigger condition: all operating parameters of the reactor being between set upper and lower limits;

5. Setting an emergency plan: giving an alarm, and handling according to an actual situation;

6. Setting a heuristic end condition: successive five heuristic results being higher than results obtained based on current optimal operation knowledge, under the same basic working condition;

7. Acquiring current values of the reaction temperature, the reaction pressure, the reaction time, the air velocity and the catalyst dosage, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; detecting the emergency trigger condition and the isolation condition during the waiting process; if the emergency trigger condition is met, starting the emergency plan; if the isolation condition is met, returning heuristic data to a previous value by means of a revertive control mechanism; and

10. Checking whether the end condition is met; if not, returning to Step 7.

Embodiment 12: Control of methanol oxidation to formaldehyde reactor

The machine heuristic learning method for operation behavior record management in Embodiment 1 is applied to a methanol oxidation to formaldehyde reaction process. The process of this scenario is as follows:

A raw gas prepared from methanol, air and steam enters the reactor (oxidation reactor) in certain proportion and is subjected to an oxidation reaction and a dehydrogenation reaction under the action of a catalyst (silver/iron-molybdenum catalyst) to convert methanol into formaldehyde under a certain condition. Controllable parameters of the formaldehyde reactor include reaction temperature, reaction pressure, reaction time, air velocity and catalyst dosage, and the optimization objective is to make the conversion rate of methanol as high as possible.

This scenario mainly has the following attributes:

Basic working condition: composition of raw gas, property of catalyst, feed temperature of raw material, and oxygen-methanol ratio;

Operation data: reaction temperature, reaction pressure, reaction time, air velocity and catalyst dosage;

Optimization objective: to make the conversion rate of methanol as high as possible;

Optimization constraint condition: the quality parameter of formaldehyde meets a configured value.

The process of this scenario:

1. Setting upper and lower limits, namely safety ranges, of the reaction temperature, the reaction pressure, the reaction time, the air velocity and the catalyst dosage;

2. Setting a reaction time;

3. Setting an isolation condition: the quality parameter of formaldehyde being between set upper and lower limits;

4. Setting an emergency trigger condition: all operating parameters of the reactor being between set upper and lower limits;

5. Setting an emergency plan: giving an alarm, and handling according to an actual situation;

6. Setting a heuristic end condition: successive five heuristic results being higher than results obtained based on current optimal operation knowledge, under the same basic working condition;

7. Acquiring current values of the reaction temperature, the reaction pressure, the reaction time, the air velocity and the catalyst dosage, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; detecting the emergency trigger condition and the isolation condition during the waiting process; if the emergency trigger condition is met, starting the emergency plan; if the isolation condition is met, returning heuristic data to a previous value by means of a revertive control mechanism; and

10. Checking whether the end condition is met; if not, returning to Step 7.

Embodiment 13: Control of coal blending for coking

The machine heuristic learning method for operation behavior record management in Embodiment 1 is applied to a process of coal blending for coking. The process of this scenario is as follows:

Coking, also referred to as high-temperature carbonization of coal, is a process for producing coke through high-temperature carbonization, obtaining coal gas and coal tar and recovering other chemical products under an air isolated condition, with coal as the raw material. Controllable parameters in the process of coal blending for coking include coal blending ratio and coal blending temperature, and the optimization objective is to make the unit cost of a coal blending scheme as low as possible.

This scenario mainly has the following attributes:

Basic working condition: type of coal, properties of coal (reactivity, volatiles, ash content and other parameters of coal), granularity of coal, ambient temperature and humidity of a workshop, and tamping density;

Operation data: coal blending ratio and coal blending temperature;

Optimization objective: the unit cost of the coal blending scheme as low as possible;

Optimization constraint condition: the quality parameter of coke meets a configured value.

The process of this scenario:

1. Setting upper and lower limits, namely safety ranges, of the coal blending ratio and the temperature of the coke furnace;

2. Setting a reaction time;

3. Setting an isolation condition: the quality parameter of coke being between set upper and lower limits;

4. Setting an emergency trigger condition: all operating parameters of the coke furnace being between set upper and lower limits;

5. Setting an emergency plan: giving an alarm, and handling according to an actual situation;

6. Setting a heuristic end condition: successive five heuristic results being lower than results obtained based on current optimal operation knowledge, under the same basic working condition;

7. Acquiring current values of the coal blending ratio and the coal blending temperature, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; detecting the emergency trigger condition and the isolation condition during the waiting process; if the emergency trigger condition is met, starting the emergency plan; if the isolation condition is met, returning heuristic data to a previous value by means of a revertive control mechanism; and

10. Checking whether the end condition is met; if not, returning to Step 7.

Embodiment 14: Control of wastewater treatment

The machine heuristic learning method for operation behavior record management in Embodiment 1 is applied to a wastewater treatment process in the coal chemical industry. The process of this scenario is as follows:

Wastewater produced in the coal chemical industry mainly includes coking wastewater, gasifying wastewater and liquefying wastewater. The coal chemical wastewater is treated according to a process of physicochemical pretreatment - biochemical treatment - deep treatment.

Physicochemical pretreatment: deoiling - dephenolization (effective recovery of phenols) - deamination (recovery of ammonia) - flocculation and precipitation (to remove suspended matter) - multi-element micro-electrolysis packing (toxic degradation, decoloration, enhancing flocculation and improving the biodegradability of waste water);

Biochemical treatment: t organic pollutants are converted into non-toxic substance such as carbon dioxide and water by means of the metabolism of microorganism);

Deep treatment: to remove residual suspended matter in water; decoloration and deodorization to clarify water, further reduce BOD, COD and the like, and further stabilize the water quality; further nitrogen and phosphorus removal to eliminate factors that may lead to eutrophication of water; and sterilization and disinfection to remove toxic substances in water. Controllable parameters in the wastewater treatment process include dosage of various treatment agents, treatment time, and parameter settings of wastewater treatment devices (flow rate of water valve, rotational speed of fan, rotational speed of compressor, and the like), and the optimization objective is to make the unit power consumption of wastewater treatment as low as possible.

This scenario mainly has the following attributes:

Basic working condition: water quantity, composition of wastewater (COD, content of ammonia and nitrogen, content of inorganic pollutants, content of oily and waxy substances, and the like), PH of wastewater, and ambient temperature;

Operation data: dosage of treatment agents, treatment time, and parameter settings of wastewater treatment devices (flow rate of water valve, rotational speed of fan, rotational speed of compressor, and the like);

Optimization objective: to make the unit power consumption of wastewater treatment as low as possible;

Optimization constraint condition: the indicator of treated wastewater meets a configured value.

The process of this scenario:

1. Setting upper and lower limits, namely safety ranges, of the dosage of treatment agents, the treatment time, and the parameter settings of wastewater treatment devices (flow rate of water valve, rotational speed of fan, rotational speed of compressor, and the like);
2. Setting a reaction time;
3. Setting an isolation condition: the indicators, COD (chemical oxygen demand), content of ammonia and nitrogen, color and turbidity, of wastewater being between set upper and lower limits;
4. Setting an emergency trigger condition: all operating parameters of the wastewater treatment devices being between set upper and lower limits;
5. Setting an emergency plan: giving an alarm, and handling according to an actual situation;
6. Setting a heuristic end condition: successive five heuristic results being lower than results obtained based on current optimal operation knowledge, under the same basic working condition;
7. Acquiring current values of the dosage of treatment agents, the treatment time, and the parameter settings of wastewater treatment devices (flow rate of water valve, rotational speed of fan, rotational speed of compressor, and the like), that is, acquiring current operation data;
8. Randomly selecting one operation item from the operation data, randomly generating a new operation item within the safety range of the operation item, writing the new operation item into a control system, and automatically executing the new operation item by the device;
9. Waiting to the end of the reaction according to a waiting time; detecting the emergency trigger condition and the isolation condition during the waiting process; if the emergency trigger condition is met, starting the emergency plan; if the isolation condition is met, returning heuristic data to a previous value by means of a revertive control mechanism; and
10. Checking whether the end condition is met; if not, returning to Step 7.

Embodiment 15: Control of flue gas desulfurization

The machine heuristic learning method for operation behavior record management in Embodiment 1 is applied to a flue gas desulfurization process. The process of this scenario is as follows:

Flue gas desulfurization in the coal chemical industry captures sulfur dioxide in flue gas by means of various alkaline absorbents or adsorbents and then converts the sulfur dioxide into stable sulfur components or elemental sulfur that can be mechanically separated, so as to fulfill the purpose of desulfurization. Controllable parameters in the flue gas desulfurization include the state of the circulating pump and the PH of gypsum slurry, and the optimization objective is to make the unit power consumption of the circulating pump as low as possible.

This scenario mainly has the following attributes:

Basic working condition: boiler load, flow rate of original flue gas, sulfur content of original flue gas, PH of flue gas, and ambient temperature;

Operation data: the state of the circulating pump and the PH of gypsum slurry;

Optimization objective: to make the unit power consumption of the circulating pump as low as possible;

Optimization constraint condition: the SO2 parameter of treated flue gas meets a configured value.

The process of this scenario:

1. Setting upper and lower limits, namely safety ranges, of the state of the circulating pump and the PH of gypsum slurry;
2. Setting a reaction time;
3. Setting an isolation condition: the SO2 parameter of treated flue gas being between set upper and lower limits;
4. Setting an emergency trigger condition: all operating parameters of the waste gas treatment device being between set upper and lower limits;
5. Setting an emergency plan: giving an alarm, and handling according to an actual situation;
6. Setting a heuristic end condition: successive ten heuristic results being lower than results obtained based on current optimal operation knowledge, under the same basic working condition;
7. Acquiring current values of the state of the circulating pump and the PH of gypsum slurry, that is, acquiring current operation data;
8. Randomly selecting one operation item from the operation data, randomly generating a new operation item within the safety range of the operation item, writing the new operation item into a control system, and automatically executing the new operation item by the device;
9. Waiting to the end of the reaction according to a waiting time; detecting the emergency trigger condition and the isolation condition during the waiting process; if the emergency trigger condition is met, starting the emergency plan; if the isolation condition is met, returning heuristic data to a previous value by means of a revertive control mechanism; and
10. Checking whether the end condition is met; if not, returning to Step 7.

Embodiment 16: Control of flue gas dust removal

The machine heuristic learning method for operation behavior record management in Embodiment 1 is applied to flue gas dust removal in the coal chemical industry. The process of this scenario is as follows:

Electrostatic precipitation is mainly used for flue gas purification; when flue gas flows through a flue in front of the main structure of an electrostatic precipitator, dust in flue gas is loaded with positive charges, and then the dust enters an electrostatic precipitator channel provided with multiple layers of negative plates. Due to the mutual attraction of the dust with positive charges and the negative plates, particulate dust in the flue gas is adsorbed on the negative plates, and by knocking the negative plates regularly, the dust of certain thickness is made to fall into an ash bucket below the electrostatic precipitator under the dual action of self-weight and vibration, so that the purpose of removing dust from flue gas is fulfilled. Controllable parameters in the flue gas dust removal process include voltage limit (set value), current limit (set value), power supply mode, pulse power supply time and pulse power supply interval, and the optimization objective is to make the unit power consumption of the electrostatic precipitation device as low as possible.

This scenario mainly has the following attributes:

Basic working condition: type of coal, flow rate of original flue gas, and dust concentration of original flue gas;

Operation data: voltage limit (set value), current limit (set value), power supply mode, pulse power supply time and pulse power supply interval;

Optimization objective: to make the unit power consumption of the electrostatic precipitation device as low as possible;

Optimization constraint condition: the dust emission concentration meets a configured value.

The process of this scenario:

1. Setting upper and lower limits, namely safety ranges, of the voltage limit (set value), the current limit (set value), the power supply mode, the pulse power supply time and the pulse power supply interval;
2. Setting a reaction time;
3. Setting an isolation condition: the dust emission concentration being between set upper and lower limits;
4. Setting an emergency trigger condition: all operating parameters of the waste gas treatment device being between set upper and lower limits;
5. Setting an emergency plan: giving an alarm, and handling according to an actual situation;
6. Setting a heuristic end condition: successive twenty heuristic results being lower than results obtained based on current optimal operation knowledge, under the same basic working condition;
7. Acquiring current values of the voltage limit (set value), the current limit (set value), the power supply mode, the pulse power supply time and the pulse power supply interval, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; detecting the emergency trigger condition and the isolation condition during the waiting process; if the emergency trigger condition is met, starting the emergency plan; if the isolation condition is met, returning heuristic data to a previous value by means of a revertive control mechanism; and

10. Checking whether the end condition is met; if not, returning to Step 7.

Embodiment 17: Control of crude oil desalting and dehydration

The machine heuristic learning method for operation behavior record management in Embodiment 1 is applied to a crude oil desalting and dehydration system. The process of this scenario is as follows:

After being conveyed into a factory, crude oil will be desalted and dehydrated first specifically by adding a small amount of water (about 5%) into the crude oil to be fully mixed until all salt is dissolved in the water and then adding a demulsifier to make water drops become larger under the effect of an electric field, under a certain condition (heated and pressurized), so as precipitate to be separated. Desalting and dehydration are carried out at the same time. Controllable parameters of a crude oil desalting device include desalting temperature, operation pressure and demulsifier dosage, the product is desalted and dehydrated crude oil, and the optimization objective is to make the unit power consumption of the desalting device as low as possible.

This scenario mainly has the following attributes:

Basic working condition: water content of crude oil, salt content of crude oil, water quality of injected water, and type of the demulsifier;

Operation data: desalting temperature, operation pressure and demulsifier dosage;

Optimization objective: to make the unit power consumption of the desalting device as low as possible;

Optimization constraint condition: the salt content and water content of desalted and dehydrated crude oil meet configured values.

The process of this scenario:

1. Setting upper and lower limits, namely safety ranges, of the desalting temperature, the operation pressure and the demulsifier dosage;

2. Setting a reaction time;

3. Setting an isolation condition: the salt content and water content of desalted and dehydrated crude oil being between set upper and lower limits;

4. Setting an emergency trigger condition: no safety problem, not needed;

5. Setting an emergency plan: giving an alarm, and handling according to an actual situation;

6. Setting a heuristic end condition: successive five heuristic results being lower than results obtained based on current optimal operation knowledge, under the same basic working condition;

7. Acquiring current values of the desalting temperature, the operation pressure and the demulsifier dosage, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; detecting the isolation condition during the waiting process; if the isolation condition is met, returning heuristic data to a previous value by means of a revertive control mechanism; and

10. Checking whether the end condition is met; if not, returning to Step 7.

Embodiment 18: Control of petroleum atmospheric distillation tower

The machine heuristic learning method for operation behavior record management in Embodiment 1 is applied to a petroleum atmospheric distillation system. The process of this scenario is as follows:

Crude oil is heated to 360°C-370°C in a heating furnace, and then enters the atmospheric distillation tower (the number of plates is 36-48), steam is blown into the tower at certain temperature, the linear velocity of the steam in the tower is adjusted, the operation pressure at the top of the tower is about 0.05Mpa (gauge pressure), and naphtha cut is obtained at the top of the tower. Controllable parameters of the atmospheric distillation tower include distillation temperature, reflux ratio, linear velocity of steam in the tower, and the quantity of steam blown into the tower, and the optimization objective is to make the fractionating accuracy as high as possible.

This scenario mainly has the following attributes:

Basic working condition: water content of crude oil, salt content of crude oil, feed quantity of crude oil, feed temperature of crude oil, pressure in the tower, and liquid level at the bottom of the tower;

Operation data: distillation temperature, reflux ratio, linear velocity of steam in the tower, and the quantity of steam blown into the tower;

Optimization objective: to make the fractionating accuracy as high as possible;

Optimization constraint condition: the distillate yield meets a configured value.

The process of this scenario:

1. Setting upper and lower limits, namely safety ranges, of the distillation temperature, the reflux ratio, the linear velocity of steam in the tower, and the quantity of steam blown into the tower;

2. Setting a reaction time;

3. Setting an isolation condition: the distillate yield being between set upper and lower limits;

4. Setting an emergency trigger condition: the pressure in the tower and the liquid level at the bottom of the tower being within safety ranges;

5. Setting an emergency plan: giving an alarm, and handling according to an actual situation;

6. Setting a heuristic end condition: successive ten heuristic results being higher than results obtained based on current optimal operation knowledge, under the same basic working condition;

7. Acquiring current values of the distillation temperature, the reflux ratio, the linear velocity of steam in the tower, and the quantity of steam blown into the tower, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; detecting the emergency trigger condition and the isolation condition during the waiting process; if the emergency trigger condition is met, starting the emergency plan; if the isolation condition is met, returning heuristic data to a previous value by means of a revertive control mechanism; and

10. Checking whether the end condition is met; if not, returning to Step 7.

Embodiment 19: Control of heating furnace for petroleum catalytic cracking

The machine heuristic learning method for operation behavior record management in Embodiment 1 is applied to a petroleum catalytic cracking system. The process of this scenario is as follows:

Raw oil subjected to heat exchange through a heat exchanger and recycle oil from a fractionating tower enter the heating furnace at a certain flow rate, heated to certain temperature under certain pressure and then delivered into a reactor of a catalytic cracking device. Controllable parameters of the heating furnace include flow velocity of raw oil, flow velocity of recycle oil, flow rate of combustion air, heating pressure, and flow rate of fuel, and the optimization objective is to make the unit fuel consumption of the heating furnace for catalytic cracking as low as possible.

This scenario mainly has the following attributes:

Basic working condition: temperature of combustion air, inlet temperature of fuel, fuel gas temperature of air, flue gas temperature of coal gas, inlet temperature of raw oil, inlet temperature of recycle oil, and outlet target temperature;

Operation data: flow velocity of raw oil, flow velocity of recycle oil, flow rate of combustion air, heating pressure, and flow rate of fuel;

Optimization objective: to make the unit fuel consumption of the heating furnace for catalytic cracking as low as possible;

Optimization constraint condition: the temperature of raw oil meets a configured value, and the homogeneousness of the raw oil meets a configured value.

The process of this scenario:

1. Setting upper and lower limits, namely safety ranges, of the flow velocity of raw oil, the flow velocity of recycle oil, the flow rate of combustion air, the heating pressure, and the flow rate of fuel;

2. Setting a reaction time;

3. Setting an isolation condition: the temperature and homogeneousness of raw oil being between set upper and lower limits;

4. Setting an emergency trigger condition: no safety problem, not needed;

5. Setting an emergency plan: giving an alarm, and handling according to an actual situation;

6. Setting a heuristic end condition: successive five heuristic results being lower than results obtained based on current optimal operation knowledge, under the same basic working condition;

7. Acquiring current values of the flow velocity of raw oil, the flow velocity of recycle oil, the flow rate of combustion air, the heating pressure, and the flow rate of fuel, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; detecting the isolation condition during the waiting process; if the isolation condition is met, returning heuristic data to a previous value by means of a revertive control mechanism; and

10. Checking whether the end condition is met; if not, returning to Step 7.

Embodiment 20: Control of petroleum catalytic cracking stabilizer

The machine heuristic learning method for operation behavior record management in Embodiment 1 is applied to a petroleum catalytic cracking system. The process of this scenario is as follows:

Hydrogenated gasoline from a reactor exchanges heat, in a feed heat exchanger, with gasoline at the bottom of the stabilizer and then enters the gasoline stabilizer, light components dissolved in the gasoline such as liquid hydrocarbon, C1, C2, sulfuretted hydrogen and hydrogen are separated from the top of the stabilizer, and a liquid phase obtained after condensation partially flows back to the top of the stabilizer and partially conveyed out of the stabilizer as a liquefied gas product. Controllable parameters of the stabilizer include stabilizer top temperature, stabilizer top pressure, reflux ratio, and the feed quantity of heating steam, and the optimization objective is to control the absolute value of a difference between stable gasoline steam pressure and a configured value as small as possible.

This scenario mainly has the following attributes:

Basic working condition: feed temperature, feed location, and quantity of circulating water;

Operation data: stabilizer top temperature, stabilizer top pressure, reflux ratio, and the feed quantity of heating steam;

Optimization objective: to control the absolute value of a difference between stable gasoline steam pressure and a configured value as small as possible;

Optimization constraint condition: the content of C5 in liquefied gas meets a configured value.

The process of this scenario:

1. Setting upper and lower limits, namely safety ranges, of the stabilizer top temperature, the stabilizer top pressure, the reflux ratio, and the feed quantity of heating steam;

2. Setting a reaction time;

3. Setting an isolation condition: the content of C5 in liquefied gas being between set upper and lower limits;

4. Setting an emergency trigger condition: no safety problem, not needed;

5. Setting an emergency plan: giving an alarm, and handling according to an actual situation;

6. Setting a heuristic end condition: successive five heuristic results being lower than results obtained based on current optimal operation knowledge, under the same basic working condition;

7. Acquiring current values of stabilizer top temperature, the stabilizer top pressure, the reflux ratio, and the feed quantity of heating steam, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; detecting the isolation condition during the waiting process; if the isolation condition is met, returning heuristic data to a previous value by means of a revertive control mechanism; and

10. Checking whether the end condition is met; if not, returning to Step 7.

Embodiment 21: Control of aromatic hydrocarbon extraction tower

The machine heuristic learning method for operation behavior record management in Embodiment 1 is applied to an aromatic hydrocarbon complex device/aromatic hydrocarbon extraction device. The process of this scenario is as follows:

A lean solvent enters the extraction tower from the top and reversely contacts hydrocarbon fed in the middle of the tower, and aromatic hydrocarbon in the fed material is extracted stage by stage at certain temperature, so that the aromatic hydrocarbon extraction process is implemented. Controllable parameters of the extraction tower include flow rate of solvents, back-washing ratio and extraction temperature, and the optimization objective is to make the yield of aromatic hydrocarbon as high as possible.

This scenario mainly has the following attributes:

Basic working condition: feed location of raw material, feed temperature of solvents, feed rate of raw material, and non-aromatic hydrocarbon content of raw material;

Operation data: flow rate of solvents, back-washing ratio and extraction temperature;

Optimization objective: to make the yield of aromatic hydrocarbon as high as possible;

Optimization constraint condition: the purity of aromatic hydrocarbon meets a configured value.

The process of this scenario:

1. Setting upper and lower limits, namely safety ranges, of the flow rate of solvents, the back-washing ratio and the extraction temperature;

2. Setting a reaction time;

3. Setting an isolation condition: the purity of aromatic hydrocarbon being between set upper and lower limits;

4. Setting an emergency trigger condition: no safety problem, not needed;

5. Setting an emergency plan: giving an alarm, and handling according to an actual situation;

6. Setting a heuristic end condition: successive ten heuristic results being higher than results obtained based on current optimal operation knowledge, under the same basic working condition;

7. Acquiring current values of the flow rate of solvents, the back-washing ratio and the extraction temperature, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; detecting the isolation condition during the waiting process; if the isolation condition is met, returning heuristic data to a previous value by means of a revertive control mechanism; and

10. Checking whether the end condition is met; if not, returning to Step 7.

Embodiment 22: Control of aromatic hydrocarbon extraction stripper

The machine heuristic learning method for operation behavior record management in Embodiment 1 is applied to an aromatic hydrocarbon complex device/aromatic hydrocarbon extraction device. The process of this scenario is as follows:

A raw material enters the stripper from the top of the stripper and leaves the stripper from the bottom of the stripper, and a solvent enters the stripper from the bottom of the stripper, reversely contacts the liquid raw material in the stripper, and leaves the stripper, together with extracted components, from the top of the stripper. Controllable parameters of the stripper include flow velocity of fed material, flow rate of steam, quantity of extracted rich solvent, stripper top pressure, and flow rate of defoamer, and the optimization objective is to make the purity of aromatic hydrocarbon as high as possible.

This scenario mainly has the following attributes:

Basic working condition: concentration of defoamer, pressure drop of the whole stripper, feed temperature, and liquid level at the bottom of the stripper;

Operation data: flow velocity of fed material, flow rate of steam, quantity of extracted rich solvent, stripper top pressure, and flow rate of defoamer;

Optimization objective: to make the purity of aromatic hydrocarbon as high as possible

Optimization constraint condition: the yield of aromatic hydrocarbon is greater than a configured value.

The process of this scenario:

1. Setting upper and lower limits, namely safety ranges, of the flow velocity of fed material, the flow rate of steam, the quantity of extracted rich solvent, the stripper top pressure, and the flow rate of defoamer;

2. Setting a reaction time;

3. Setting an isolation condition: the yield of aromatic hydrocarbon being between set upper and lower limits;

4. Setting an emergency trigger condition: the pressure drop of the whole stripepr and the liquid level at the bottom of the stripper being within safety ranges;

5. Setting an emergency plan: giving an alarm, and handling according to an actual situation;

6. Setting a heuristic end condition: successive ten heuristic results being higher than results obtained based on current optimal operation knowledge, under the same basic working condition;

7. Acquiring current values of the flow velocity of fed material, the flow rate of steam, the quantity of extracted rich solvent, the tower top pressure, and the flow rate of defoamer, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; detecting the emergency trigger condition and the isolation condition during the waiting process; if the emergency trigger condition is met, starting the emergency plan; if the isolation condition is met, returning heuristic data to a previous value by means of a revertive control mechanism; and

10. Checking whether there is an end signal; if not, returning to Step 7.

Embodiment 23: Control of ethylene cracking furnace

The machine heuristic learning method for operation behavior record management in Embodiment 1 is applied to an ethylene production device. The process of this scenario is as follows:

A raw material to be cracked is preheated, then mixed with superheated steam in certain proportion (the proportion varies according to different materials), heated to 500°C-600°C in a convection section of a tube furnace, then enters a radiation chamber, and heated to 780°C-900°C in a radiation furnace tube to be cracked. Controllable parameters of the ethylene cracking furnace include feed quantity of steam, cracking temperature and residence time, and the optimization objective is to make the unit fuel gas consumption of the ethylene cracking furnace as low as possible.

This scenario mainly has the following attributes:

Basic working condition: feed temperature, property of raw material to be cracked, and steam-hydrocarbon ratio;

Operation data: feed quantity of steam, cracking temperature and residence time;

Optimization objective: to make the unit fuel gas consumption of the ethylene cracking furnace as low as possible;

Optimization constraint condition: the yield of ethylene is greater than a configured value.

The process of this scenario:

1. Setting upper and lower limits, namely safety ranges, of the feed quantity of steam, the cracking temperature and the residence time;

2. Setting a reaction time;

3. Setting an isolation condition: the yield of ethylene being between set upper and lower limits;

4. Setting an emergency trigger condition: no safety problem, not needed;

5. Setting an emergency plan: giving an alarm, and handling according to an actual situation;

6. Setting a heuristic end condition: successive ten heuristic results being lower than results obtained based on current optimal operation knowledge, under the same basic working condition;

7. Acquiring current values of the feed quantity of steam, the cracking temperature and the residence time, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; detecting the isolation condition during the waiting process; if the isolation condition is met, returning heuristic data to a previous value by means of a revertive control mechanism; and

10. Checking whether the end condition is met; if not, returning to Step 7.

Embodiment 24: Control of ethylene oxidation reactor

The machine heuristic learning method for operation behavior record management in Embodiment 1 is applied to a production system for preparing acetaldehyde through ethylene oxidization. The process of this scenario is as follows:

Circulating gas and ethylene are introduced into a vertical reactor filled with a catalyst solution, pure oxygen is introduced to the bottom of the reactor at the same time, and reaction is carried out at micropressure. Controllable parameters of the oxidation reactor include reaction temperature and reaction pressure, and the optimization objective is to make the selectivity per pass of acetaldehyde as high as possible.

This scenario mainly has the following attributes:

Basic working condition: composition of raw gas, composition of catalyst, quantity of circulating gas, and concentration of catalyst solution;

Operation data: reaction temperature and reaction pressure;

Optimization objective: to make the selectivity per pass of acetaldehyde as high as possible;

Optimization constraint condition: the conversion rate of ethylene is greater than a configured value.

The process of this scenario:

1. Setting upper and lower limits, namely safety ranges, of the reaction temperature and the reaction pressure;

2. Setting a reaction time;

3. Setting an isolation condition: the conversion rate of ethylene being between set upper and lower limits;

4. Setting an emergency trigger condition: no safety problem, not needed;

5. Setting an emergency plan: giving an alarm, and handling according to an actual situation;

6. Setting a heuristic end condition: successive ten heuristic results being higher than results obtained based on current optimal operation knowledge, under the same basic working condition;

7. Acquiring current values of reaction temperature and the reaction pressure, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; detecting the isolation condition during the waiting process; if the isolation condition is met, returning heuristic data to a previous value by means of a revertive control mechanism; and

10. Checking whether the end condition is met; if not, returning to Step 7.

Embodiment 25: Control of COD treatment of wastewater

The machine heuristic learning method for operation behavior record management in Embodiment 1 is applied to a wastewater treatment system. The process of this scenario is as follows:

An anaerobic-aerobiotic method may be used for COD (chemical oxygen demand) control. First, wastewater flows through an anaerobic section to degrade organic pollutants by facultative anaerobes and obligate anaerobes; then, the wastewater flows through an aerobiotic section to decrease the COD value by aerobes in this section and further remove nitrogen and phosphorus, and many electrical devices are involved in the treatment process. Controllable parameters in the COD treatment process include purifier input, treatment temperature, residence time, and current control of the devices, and the optimization objective is to make the unit power consumption of the wastewater treatment devices as low as possible.

This scenario mainly has the following attributes:

Basic working condition: quantity of wastewater, inlet temperature of wastewater, COD (chemical oxygen demand) value, PH of wastewater, quantity of anaerobes per cubic centimeter, quantity of aerobes per cubic centimeter, and nitrogen-phosphorus content of wastewater;

Operation data: purifier input, treatment temperature, residence time, and current control of the devices

Optimization objective: to make the unit power consumption of the wastewater treatment devices as low as possible

Optimization constraint condition: the COD (chemical oxygen demand) of treated wastewater meets a configured value.

The process of this scenario:

1. Setting upper and lower limits, namely safety ranges, of the purifier input, the treatment temperature, the residence time, and the current control of the devices;

2. Setting a reaction time;

3. Setting an isolation condition: the COD (chemical oxygen demand) of treated wastewater being between set upper and lower limits;

4. Setting an emergency trigger condition: no safety problem, not needed;

5. Setting an emergency plan: giving an alarm, and handling according to an actual situation;

6. Setting a heuristic end condition: successive five heuristic results being lower than results obtained based on current optimal operation knowledge, under the same basic working condition;

7. Acquiring current values of the quantity of wastewater, the COD (chemical oxygen demand) value and the PH of wastewater, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; detecting the isolation condition during the waiting process; if the isolation condition is met, returning heuristic data to a previous value by means of a revertive control mechanism; and

10. Checking whether the end condition is met; if not, returning to Step 7.

Embodiment 26: Control of penicillin fermentation condition

The machine heuristic learning method for operation behavior record management in Embodiment 1 is applied to a penicillin fermentation process. The process of this scenario is as follows:

Penicillin is fermented by three stages: first, seed fermentation; second, mass propagation in a propagation tank; third, preparing a suitable culture medium in the propagation tank, placing a seed solution for early fermentation in the propagation tank, and controlling fermentation conditions in the fermentation process, such as temperature, PH, dissolved oxygen, defoaming, stirring rate and tank pressure, to be optimal to improve the unit chemical valence of penicillin.

This scenario mainly has the following attributes:

Basic working condition: form and concentration of mycelia, valence of seed solution, dissolved oxygen, and impurities;

Operation data: variable temperature control, PH control, dissolved oxygen control, defoaming control, stirring rate and tank pressure in the fermentation process;

Optimization objective: to make the unit chemical valence of penicillin as high as possible;

Optimization constraint condition: the product quality meets a configured value.

The process of this scenario:

1. Setting upper and lower limits, namely safety ranges, of the variable temperature control, PH control, dissolved oxygen control, defoaming control, stirring speed and tank pressure in the fermentation process;

2. Setting a reaction time;

3. Setting an isolation condition: no safety problem, not needed;

4. Setting an emergency trigger condition: no safety problem, not needed;

5. Setting an emergency plan: giving an alarm, and handling according to an actual situation;

6. Setting a heuristic end condition: successive N heuristic results being lower than results obtained based on current optimal operation knowledge, under the same basic working condition;

7. Acquiring current values of the variable temperature control, PH control, dissolved oxygen control, defoaming control, stirring speed and tank pressure in the fermentation process, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; and

10. Checking whether the end condition is met; if not, returning to Step 7.

Embodiment 27: Control of material supplement of penicillin fermentation

The machine heuristic learning method for operation behavior record management in Embodiment 1 is applied to a penicillin fermentation process. The process of this scenario is as follows:

In an actual fermentation process, the intermediate material supplement process is critical. During penicillin fermentation, materials are supplemented in batches: the main nutrition of the initial culture medium can only maintain the growth of penicilliums in the first 40 hours; and 40 hours later, a carbon source, a nitrogen source and a precursor should be slowly fed in batches and kept at the most suitable concentration to remain the penicilliums in a semi-starvation condition so as to prolong the synthesis phase of penicillin, which is of critical importance for improving the unit chemical valence of penicillin.

This scenario mainly has the following attributes:

Basic working condition: penicillin unit, PH, form and concentration of mycelia, dry weight of mycelia, ammonia-nitrogen content, and fermentation time;

Operation data: supplement quantity of carbon source/nitrogen source/ precursor, supplement time of carbon source/nitrogen source/ precursor, and batch-feed rate of carbon source/nitrogen source/ precursor;

Optimization objective: to make the unit chemical valence of penicillin as high as possible;

Optimization constraint condition: the product quality meets a configured value.

The process of this scenario:

1. Setting upper and lower limits, namely safety ranges, of the supplement quantity of carbon source/nitrogen source/ precursor, the supplement time of carbon source/nitrogen source/ precursor, and the batch-feed rate of carbon source/nitrogen source/ precursor;

2. Setting a reaction time;

3. Setting an isolation condition: no safety problem, not needed;

4. Setting an emergency trigger condition: no safety problem, not needed;

5. Setting an emergency plan: giving an alarm, and handling according to an actual situation;

6. Setting a heuristic end condition: successive N heuristic results being lower than results obtained based on current optimal operation knowledge, under the same basic working condition;

7. Acquiring current values of the supplement quantity of carbon source/nitrogen source/ precursor, the supplement time of carbon source/nitrogen source/ precursor, and the batch-feed rate of carbon source/nitrogen source/ precursor, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; and

10. Checking whether the end condition is met; if not, returning to Step 7.

Embodiment 28: Control of water supplement of penicillin fermentation

The machine heuristic learning method for operation behavior record management in Embodiment 1 is applied to a penicillin fermentation process. The process of this scenario is as follows:

In the early stage of penicillin fermentation, a high-concentration nutrient medium needs to be added to maintain rich nutrients to facilitate rapid increase of the concentration of penicilliums; in the middle and later stage of penicillin fermentation, the concentration of the medium needs to be controlled to be low to rapidly transit to an antibiotic production stage, and vigorous cells with high product synthetase activity of mycelia in the antibiotic production stage are dominant, so the antibiotic production time is prolonged; water supplement is of great importance for increasing the growth rate of the mycelia in the early stage of fermentation and maintaining the long-term antibiotic production activity of cells in the middle and later stage; by supplementing different quantities of water into a penicillin fermentation tank in different water supplement cycles and flexibly adjusting the concentration of the nutrient medium in the fermentation tank, barriers and inhibiting factors that are not beneficial to penicillin gene accumulation are alleviated and controlled, further improving the unit chemical valence of penicillin.

This scenario mainly has the following attributes:

Basic working condition: form and concentration of mycelia, concentration of medium, fermentation stage, and dissolved oxygen concentration;

Operation data: water supplement quantity, water supplement cycle, and water batch-feed rate;

Optimization objective: to make the unit chemical valence of penicillin as high as possible;

Optimization constraint condition: the product quality meets a configured value.

The process of this scenario:

1. Setting upper and lower limits, namely safety ranges, of the water supplement quantity, the water supplement cycle, and the water batch-feed rate;

2. Setting a reaction time;

3. Setting an isolation condition: no safety problem, not needed;

4. Setting an emergency trigger condition: no safety problem, not needed;

5. Setting an emergency plan: giving an alarm, and handling according to an actual situation;

6. Setting a heuristic end condition: successive N heuristic results being lower than results obtained based on current optimal operation knowledge, under the same basic working condition;

7. Acquiring current values of the water supplement quantity, the water supplement cycle, and the water batch-feed rate, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; and

10. Checking whether the end condition is met; if not, returning to Step 7.

Embodiment 29: Control of veterinary antibiotic fermentation

The machine heuristic learning method for operation behavior record management in Embodiment 1 is applied to a veterinary antibiotic fermentation process. The process of this scenario is as follows:

The purpose of fermentation is to make microorganism to secrete a large quantity of antibiotics. Veterinary antibiotic fermentation is implemented by adding strains, sugar, oxygen, water and nutrition in a fermentation tank, and the fermentation condition is controlled for production. Different from physical formation, veterinary antibiotic fermentation is also influenced by the factors such as air humidity and temperature, and biological activity, many of which are uncontrollable, and different temperature settings, PH settings, ammonia injection rates, air flows and variable-frequency outputs will impact the chemical valence of veterinary antibiotic.

This scenario mainly has the following attributes:

Basic working condition: composition of raw material, quantity of raw material, fermentation strain, fermentation cycle, initial liquid level, and current fermentation hours;

Operation data: temperature of fermentation environment, PH of fermentation environment, ammonia injection rate, air flow, and variable-frequency output;

Optimization objective: to make the unit chemical valence of veterinary antibiotic as high as possible;

Optimization constraint condition: the product quality meets a configured value.

The process of this scenario:

1. Setting upper and lower limits, namely safety ranges, of the temperature of fermentation environment, the PH of fermentation environment, the ammonia injection rate, the air flow, and the variable-frequency output;
2. Setting a reaction time;
3. Setting an isolation condition: no safety problem, not needed;
4. Setting an emergency trigger condition: no safety problem, not needed;
5. Setting an emergency plan: giving an alarm, and handling according to an actual situation;
6. Setting a heuristic end condition: successive N heuristic results being lower than results obtained based on current optimal operation knowledge, under the same basic working condition;
7. Acquiring current values of the temperature of fermentation environment, the PH of fermentation environment, the ammonia injection rate, the air flow, and the variable-frequency output, that is, acquiring current operation data;
8. Randomly selecting one operation item from the operation data, randomly generating a new operation item within the safety range of the operation item, writing the new operation item into a control system, and automatically executing the new operation item by the device;
9. Waiting to the end of the reaction according to a waiting time; and
10. Checking whether the end condition is met; if not, returning to Step 7.

Embodiment 30: Control of chlortetracycline hydrochloride refining and crystallization

The machine heuristic learning method for operation behavior record management in Embodiment 1 is applied to a chlortetracycline hydrochloride refining and crystallization process. The process of this scenario is as follows:

The whole refining process of chlortetracycline hydrochloride products comprises: acidification filtering - filtering for transformation to complex slat - coarse-crystallization filtering - crystallization filtering - washing - drying, and among them, crystallization is a key link affecting the chemical valence of the products. In the crystallization process, different hydrochloric acid dropwise adding initial temperatures, hydrochloric acid proportioning instructions, hydrochloric acid dropwise adding rates, holding temperatures, holding times, and stirring speeds/transformations will affect the chemical valence of the products.

This scenario mainly has the following attributes:

Basic working condition: volume of leaching liquor (filtrate obtained after coarse-crystallization dissolution and filtration), valence of leaching liquor, temperature of crystallization environment, and initial liquid level of hydrochloric acid measuring tank;

Operation data: hydrochloric acid dropwise adding initial temperature, hydrochloric acid proportioning instruction, hydrochloric acid dropwise adding rate, holding temperature, holding time, and stirring speed/transformation;

Optimization objective: to make the unit chemical valence of veterinary antibiotic as high as possible;

Optimization constraint condition: the product quality meets a configured value.

The process of this scenario:

1. Setting upper and lower limits, namely safety ranges, of the hydrochloric acid dropwise adding initial temperature, the hydrochloric acid proportioning instruction, the hydrochloric acid dropwise adding rate, the holding temperature, the holding time, and the stirring speed/transformation;
2. Setting a reaction time;
3. Setting an isolation condition: no safety problem, not needed;
4. Setting an emergency trigger condition: no safety problem, not needed;
5. Setting an emergency plan: giving an alarm, and handling according to an actual situation;
6. Setting a heuristic end condition: successive N heuristic results being lower than results obtained based on current optimal operation knowledge, under the same basic working condition;
7. Acquiring current values of the hydrochloric acid dropwise adding initial temperature, the hydrochloric acid proportioning instruction, the hydrochloric acid dropwise adding rate, the holding temperature, the holding time, and the stirring speed/transformation, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; and

10. Checking whether the end condition is met; if not, returning to Step 7.

Embodiment 31: Control of penicillin refining-solvent extraction

The machine heuristic learning method for operation behavior record management in Embodiment 1 is applied to a penicillin refining-solvent extraction process. The process of this scenario is as follows:

The whole penicillin refining process comprises: fermentation liquor filtering → primary extraction → re-extraction → decoloration → crystallization → filtering → drying → finished product, wherein extraction is the key link in the whole refining process; in the penicillin solvent extraction process, an organic solvent is mixed with pre-filtered penicillin fermentation liquor, and the PH is regulated to dissolve penicillin into the solvent from a water phase, so the purpose of refining and concentration is fulfilled. In this process, control of the addition of extracting solvent, the addition of water, the PH of filtrate, the temperature of filtrate, the flow rate of extracting agent, the extraction time, the extraction pressure, the centrifugation time, and the centrifugation speed will directly affect the penicillin extraction effect (the unit extraction rate of penicillin).

This scenario mainly has the following attributes:

Basic working condition: volume and valence of filtrate, and material property;

Operation data: addition of extracting solvent, addition of water, PH of filtrate, temperature of filtrate, flow rate of extracting agent, extraction time, extraction pressure, centrifugation time, and centrifugation speed;

Optimization objective: to make the unit extraction rate of penicillin as high as possible;

Optimization constraint condition: the product quality meets a configured value.

The process of this scenario:

1. Setting upper and lower limits, namely safety ranges, of the addition of extracting solvent, the addition of water, the PH of filtrate, the temperature of filtrate, the flow rate of extracting agent, the extraction time, the extraction pressure, the centrifugation time, and the centrifugation speed;

2. Setting a reaction time;

3. Setting an isolation condition: no safety problem, not needed;

4. Setting an emergency trigger condition: no safety problem, not needed;

5. Setting an emergency plan: giving an alarm, and handling according to an actual situation;

6. Setting a heuristic end condition: successive N heuristic results being lower than results obtained based on current optimal operation knowledge, under the same basic working condition;

7. Acquiring current values of the addition of extracting solvent, the addition of water, the PH of filtrate, temperature of filtrate, the flow rate of extracting agent, the extraction time, the extraction pressure, the centrifugation time, and the centrifugation speed, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; and

10. Checking whether the end condition is met; if not, returning to Step 7.

Embodiment 32: Control of penicillin pharmaceutical wastewater treatment

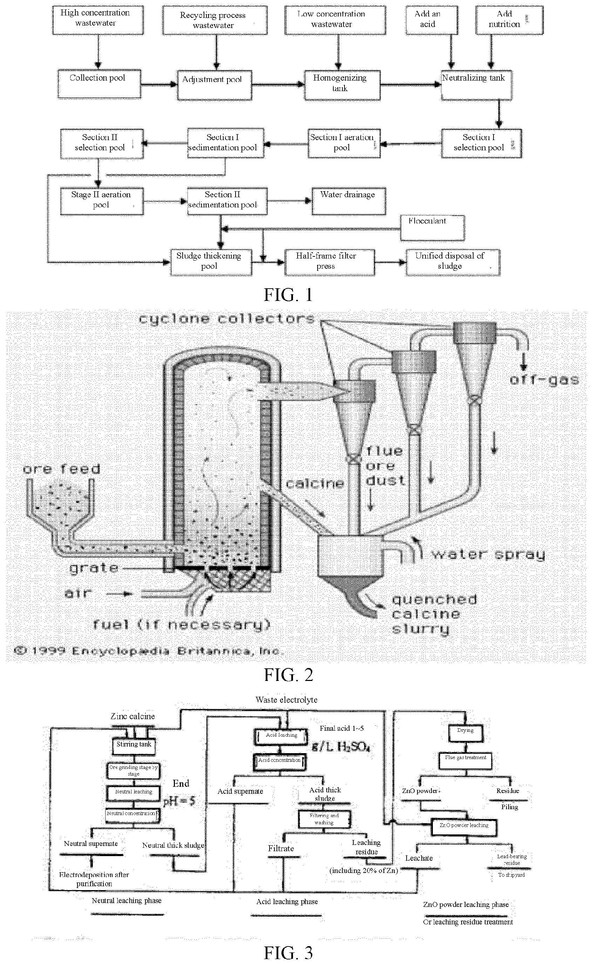

The machine heuristic learning method for operation behavior record management in Embodiment 1 is applied to a penicillin pharmaceutical wastewater treatment process. Referring to FIG. 1, the process of this scenario is as follows:

High-concentration organic wastewater will be produced during the penicillin production process, the wastewater has a high COD (chemical oxygen demand) and contains high-concentration sulfates, and the concentration of pollutants in the wastewater is high. When an aerobiotic two-stage activated sludge treatment process is adopted, the dosage of treating agents, the add time of treating agents, and parameter settings of wastewater treatment devices (flow rate of valve, rotational speed of fan, rotational speed of compressor, and the like) have a direct influence on the unit wastewater treatment cost.

This scenario mainly has the following attributes:

Basic working condition: water quantity, composition of wastewater (COD, ammonia-nitrogen content, inorganic pollutant content, sulfate content, and the like), PH of wastewater, and ambient temperature;

Operation data: dosage of treating agents, add time of treating agents, and parameter settings of wastewater treatment devices (flow rate of valve, rotational speed of fan, rotational speed of compressor, and the like);

Optimization objective: to make the unit wastewater treatment cost as low as possible;

Optimization constraint condition: wastewater discharge is up to standard.

The process of this scenario:

1. Setting upper and lower limits, namely safety ranges, of the dosage of treating agents, the add time of treating agents, and the parameter settings of wastewater treatment devices (flow rate of valve, rotational speed of fan, rotational speed of compressor, and the like);

2. Setting a reaction time;

3. Setting an isolation condition: no safety problem, not needed;

4. Setting an emergency trigger condition: no safety problem, not needed;

5. Setting an emergency plan: giving an alarm, and handling according to an actual situation;

6. Setting a heuristic end condition: successive N heuristic results being lower than results obtained based on current optimal operation knowledge, under the same basic working condition;

7. Acquiring current values of the dosage of treating agents, the add time of treating agents, and the parameter settings of wastewater treatment devices (flow rate of valve, rotational speed of fan, rotational speed of compressor, and the like);, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; and

10. Checking whether the end condition is met; if not, returning to Step 7.

Embodiment 33: Control of pulp preprocessing

The machine heuristic learning method for operation behavior record management in Embodiment 1 is applied to a pulp pre-processing process. The process of this scenario is as follows:

A fiber pulp preparation method comprises the following steps: (1) soaking chopped fiber in water, and controlling the water content; (2) soaking the chopped fiber obtained in Step (1) in liquid nitrogen; and (3) performing mechanical grinding and fibrillation on the chopped fiber obtained in Step (2) through a vertical eddy mill, and then separating the chopped fiber from air through a cyclone separator to obtain fiber pulp.

This scenario mainly has the following attributes:

Basic working condition: type of fiber, filament number of fiber, and elasticity modulus;

Operation data: preprocessing pressure, preprocessing time, preprocessing temperature, and rotational speed of vertical eddy mill;

Optimization objective: to improve the polymerization degree of pulp;

Optimization constraint condition: the quality (specific surface area, average length and the like) of fiber pulp is up to standard.

The process of this scenario:

1. Setting upper and lower limits, namely safety ranges, of the preprocessing pressure, the preprocessing time, the preprocessing temperature, and the rotational speed of vertical eddy mill;

2. Setting a reaction time;

3. Setting an isolation condition: the quality (specific surface area, average length and the like) of fiber pulp being between set upper and lower limits;

4. Setting an emergency trigger condition: the operating parameters of a high-temperature and high-pressure kettle being within safety ranges;

5. Setting an emergency plan: giving an alarm, and handling according to an actual situation;

6. Setting a heuristic end condition: successive N heuristic results being lower than results obtained based on current optimal operation knowledge, under the same basic working condition;

7. Acquiring current values of preprocessing pressure, the preprocessing time, the preprocessing temperature, and the rotational speed of the vertical eddy mill, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; detecting the emergency trigger condition and the isolation condition during the waiting process; if the emergency trigger condition is met, starting the emergency plan; if the isolation condition is met, returning heuristic data to a previous value by means of a revertive control mechanism; and

10. Checking whether there is an end signal; if not, returning to Step 7.

Embodiment 34: Control of fiber dissolution

The machine heuristic learning method for operation behavior record management in Embodiment 1 is applied to a fiber dissolution process. The process of this scenario is as follows:

Cellulose pulp is dissolved in an organic solvent N-methylmorpholine N-oxide (NMMO) to prepare a spinning solution, and the spinning solution is filtered to remove impurities.

This scenario mainly has the following attributes:

Basic working condition: specific surface area of pulp, concentration of NMMO, average length of pulp, quantity of pulp, temperature of pulp, and the like;

Operation data: swelling temperature, addition of NMMO, dissolution time, and vacuum degree;

Optimization objective: to reduce the content of gel particles in the spinning solution;

Optimization constraint condition: the concentration of the spinning solution meets requirements.

The process of this scenario:

1. Setting upper and lower limits, namely safety ranges, of the swelling temperature, the addition of NMMO, the dissolution time, and the vacuum degree;
2. Setting a reaction time;
3. Setting an isolation condition: the concentration of the spinning solution being between set upper and lower limits;
4. Setting a safety condition: no safety problem, not needed;
6. Setting an emergency plan: no safety problem, not needed;
6. Setting a heuristic end condition: successive N heuristic results being lower than results obtained based on current optimal operation knowledge, under the same basic working condition;
7. Acquiring current values of the swelling temperature, the addition of NMMO, the dissolution time, and the vacuum degree, that is, acquiring current operation data;
8. Randomly selecting one operation item from the operation data, randomly generating a new operation item within the safety range of the operation item, writing the new operation item into a control system, and automatically executing the new operation item by the device;
9. Waiting to the end of the reaction according to a waiting time; detecting the isolation condition during the waiting process; if the isolation condition is met, returning heuristic data to a previous value by means of a revertive control mechanism; and
10. Checking whether there is an end signal; if not, returning to Step 7.

Embodiment 35: Control of fiber spinning

The machine heuristic learning method for operation behavior record management in Embodiment 1 is applied to a fiber spinning process. The process of this scenario is as follows:

A spinning machine composed of spinning nozzles, a coagulating bath and blowers is used for spinning. A spinning solution output by a spinning metering pump flows through a buffer to enter a spinneret plate, and then is sprayed out, and then, the spinning solution enters coagulating liquid to be coagulated into filaments through a wet or dry-wet spinning process.

This scenario mainly has the following attributes:

Basic working condition: product specification, aperture of spinning nozzles, length-diameter ratio, number of holes of spinning nozzles, and number of spinning nozzles of each spinning spindle;

Operation data: spinning temperature, extrusion speed of spinning heads, drawing speed, gap length, central air temperature, air volume, coagulating bath temperature, and coagulating bath concentration;

Optimization objective: to reduce steam consumption in the spinning process;

Optimization constraint condition: the solvent precipitation rate meets requirements.

The process of this scenario:

1. Setting upper and lower limits, namely safety ranges, of the spinning temperature, the extrusion speed of spinning heads, the drawing speed, the gap length, the central air temperature, the air volume, the coagulating bath temperature, and the coagulating bath concentration;
2. Setting a reaction time;

3. Setting an isolation condition: the solvent precipitation rate being between set upper and lower ranges;

4. Setting a safety condition: no safety problem, not needed;

5. Setting an emergency plan: no safety problem, not needed;

6. Setting a heuristic end condition: successive N heuristic results being lower than results obtained based on current optimal operation knowledge, under the same basic working condition;

7. Acquiring current values of the spinning temperature, the extrusion speed of spinning heads, the drawing speed, the gap length, the central air temperature, the air volume, the coagulating bath temperature, and the coagulating bath concentration, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; if the isolation condition is met, returning heuristic data to a previous value by means of a revertive control mechanism; and

10. Checking whether there is an end signal; if not, returning to Step 7.

Embodiment 35: Control of energy consumption of fiber washing

The machine heuristic learning method for operation behavior record management in Embodiment 1 is applied to a fiber washing process. The process of this scenario is as follows:

Coagulated filaments are washed with thrashing washing water through embossing rollers, and the flow direction of the washing water is reverse.

This scenario mainly has the following attributes:

Basic working condition: filament specification and filament speed

Operation data: drawing ratio, primary washing temperature, flow rate and solvent content, and secondary washing temperature, flow rate and solvent content;

Optimization objective: to reduce water consumption in the washing process;

Optimization constraint condition: to ensure the quality (fiber number, fiber length, dry strength, breaking elongation, wet strength, and moisture regain) of finished filaments.

The process of this scenario:

1. Setting upper and lower limits, namely safety ranges, of the drawing ratio, the primary washing temperature, flow rate and solvent content, and the secondary washing temperature, flow rate and solvent content;

2. Setting a reaction time;

3. Setting an isolation condition: the quality (fiber number, fiber length, dry strength, breaking elongation, wet strength, and moisture regain) of finished filaments being between set upper and lower limits;

4. Setting a safety condition: no safety problem, not needed;

5. Setting an emergency plan: no safety problem, not needed;

6. Setting a heuristic end condition: successive N heuristic results being lower than results obtained based on current optimal operation knowledge, under the same basic working condition;

7. Acquiring current values of the drawing ratio, the primary washing temperature, flow rate and solvent content, and the secondary washing temperature, flow rate and solvent content, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; if the isolation condition is met, returning heuristic data to a previous value by means of a revertive control mechanism; and

10. Checking whether there is an end signal; if not, returning to Step 7.

Embodiment 37: Control of fiber washing solvent recovery

The machine heuristic learning method for operation behavior record management in Embodiment 1 is applied to a fiber washing process. The process of this scenario is as follows:

Coagulated filaments are washed by thrashing washing water with embossing rollers, and the flow direction of the washing water is reverse.

This scenario mainly has the following attributes:

Basic working condition: filament specification and filament speed;

Operation data: drawing ratio, primary washing temperature, flow rate and solvent content, and secondary washing temperature, flow rate and solvent content;

Optimization objective: to maximize the solvent recovery rate in the washing process

Optimization constraint condition: to ensure the quality (fiber number, fiber length, dry strength, breaking elongation, wet strength, and moisture regain) of finished filaments.

The process of this scenario:

1. Setting upper and lower limits, namely safety ranges, of the drawing ratio, the primary washing temperature, flow rate and solvent content, and the secondary washing temperature, flow rate and solvent content;

2. Setting a reaction time;

3. Setting an isolation condition: the quality (fiber number, fiber length, dry strength, breaking elongation, wet strength, and moisture regain) of finished filaments being between set upper and lower limits;

4. Setting a safety condition: no safety problem, not needed;

5. Setting an emergency plan: no safety problem, not needed;

6. Setting a heuristic end condition: successive N heuristic results being lower than results obtained based on current optimal operation knowledge, under the same basic working condition;

7. Acquiring current values of the drawing ratio, the primary washing temperature, flow rate and solvent content, and the secondary washing temperature, flow rate and solvent content, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; if the isolation condition is met, returning heuristic data to a previous value by means of a revertive control mechanism; and

10. Checking whether there is an end signal; if not, returning to Step 7.

Embodiment 38: Control of fiber drying

The machine heuristic learning method for operation behavior record management in Embodiment 1 is applied to a fiber drying process. The process of this scenario is as follows:

After coagulated filaments are washed and drawn, modified silicone oil or non-silicon oil is applied to the coagulated filaments, and then the coagulated filaments are dried and densified through heating rollers.

This scenario mainly has the following attributes:

Basic working condition: fiber specification, and initial moisture content of filaments;

Operation data: drying temperature, rotational speed of spindle, and drying time;

Optimization objective: to shorten the drying time;

Optimization constraint condition: the moisture content and fiber strength of filaments are up to standard.

The process of this scenario:

1. Setting upper and lower limits, namely safety ranges, of the drying temperature, the rotational speed of spindle, and the drying time;

2. Setting a reaction time;

3. Setting an isolation condition: the moisture content and fiber strength of filaments being between set upper and lower limits;

4. Setting a safety condition: no safety problem, not needed;

5. Setting an emergency plan: no safety problem, not needed;

6. Setting a heuristic end condition: successive N heuristic results being lower than results obtained based on current optimal operation knowledge, under the same basic working condition;

7. Acquiring current values of the drying temperature, the rotational speed of spindle, and the drying time, namely, acquiring the current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; if the isolation condition is met, returning heuristic data to a previous value by means of a revertive control mechanism; and

10. Checking whether there is an end signal; if not, returning to Step 7.

Embodiment 39: Control of wastewater treatment of green fiber production

The machine heuristic learning method for operation behavior record management in Embodiment 1 is applied to a process of wastewater treatment of green fiber production. The process of this scenario is as follows:

Organic matter in wastewater generated during green fiber production can be effectively removed through a hydrolysis acidification pool + A2/O + high-density sedimentation tank + catalytic ozonation pool + D type filter tank process.

This scenario mainly has the following attributes:

Basic working condition: quantity of wastewater, composition of wastewater (COD, ammonia-nitrogen content, content of inorganic matter, content of oily and waxy substances, and the like), PH of wastewater, and ambient temperature;

Operation data: dosage of treating agents, add time of treating agents, and parameter settings of wastewater treatment devices (flow rate of water valve, rotational speed of fan, rotational speed of compressor, and the like);

Optimization objective: to reduce wastewater treatment cost;

Optimization constraint condition: wastewater discharge is up to standard.

The process of this scenario:

1. Setting upper and lower limits of the dosage of treating agents, the add time of treating agents, and the parameter settings of wastewater treatment devices (flow rate of valve, rotational speed of fan, rotational speed of compressor, and the like);

2. Setting a reaction time;

3. Setting an isolation condition: the indicators, namely COD, ammonia-nitrogen content, color and turbidity, of wastewater being between set upper and lower limits

4. Setting an emergency trigger condition: all operating parameters of the wastewater treatment devices being between set upper and lower limits;

5. Setting an emergency plan: giving an alarm, and handling according to an actual situation;

6. Setting a heuristic end condition: dynamically adjusting the dosage of treating agents, the add time of treating agents, and the parameter settings of wastewater treatment devices (flow rate of water valve, rotational speed of fan, rotational speed of compressor, and the like) to effectively reduce the wastewater treatment cost;

7. Acquiring current values of the dosage of treating agents, the add time of treating agents, and the parameter settings of wastewater treatment devices (flow rate of water valve, rotational speed of fan, rotational speed of compressor, and the like), that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; detecting the emergency trigger condition and the isolation condition during the waiting process; if the emergency trigger condition is met, starting the emergency plan; if the isolation condition is met, returning heuristic data to a previous value by means of a revertive control mechanism; and

10. Checking whether there is an end signal; if not, returning to Step 7.

Embodiment 40: Control of ore-blending for sintering

The machine heuristic learning method for operation behavior record management in Embodiment 1 is applied to an ore-blending process for sintering. The process of this scenario is as follows:

Raw materials, solvents, fuels, substitutes and return ore are blended in certain proportion according to quality requirements for sintered ore of a blast furnace and chemical properties of the raw materials.

CD Blending: a mass blending method blends raw materials by mass, is more accurate than a volume method and can realize automatic operation; sintered ore with stable chemical components and physical properties is obtained by batching, and sintering requirements of the blast furnace are met;

② Mixing: water is added for wetting, uniform blending and pelletizing; single mixing or dual mixing is adopted according to different properties of raw materials to make the components of sintered material uniform and the water content proper and to facilitate pelletizing, so as to obtain a sintered mixture with good grain composition, thus guaranteeing the quality of sintered ore and improving the sintering yield.

This scenario mainly has the following attributes:

Basic working condition: theoretical iron content of iron powder, density of iron powder, hydrophily of iron powder, assimilability of iron powder, liquidity of iron powder, porosity of iron powder, granularity of iron powder, and composition and content of iron powder; type of solvents, oxide content of solvents, impurity (S, P) content of solvents, granularity of solvents, ash content of fuel, volatile content of fuel, granularity of fuel, and equipment condition (adhesion and batch-turning), and quality indicator requirements of sintered ore (total iron content of sintered ore, iron oxide content of sintered ore, sulfur content of sintered ore, PH of sintered ore, drum index of sintered ore, and screening index of sintered ore);

Operation data: addition of iron powder, type of solvents, addition of solvents, addition of fuel, drum speed, operating direction, and water addition for uniform mixing;

Optimization objective: to make the sintering yield of sintered ore as high as possible;

Optimization constraint condition: the component mixing uniformity, permeability and moisture content of sintered ore meet configured values.

The process of this scenario:

1. Setting upper and lower limits, namely safety ranges, of the addition of iron powder, the type of solvents, the addition of solvents, the addition of fuel, the drum speed, the operating direction, and the water addition for uniform mixing;

2. Setting a reaction time;

3. Setting an isolation condition: no safety problem, not needed;

4. Setting an emergency trigger condition: no safety problem, not needed;

5. Setting an emergency plan: giving an alarm, and handling according to an actual situation;

6. Setting a heuristic end condition: successive N heuristic results being lower than results obtained based on current optimal operation knowledge, under the same basic working condition;

7. Acquiring current values of the addition of iron powder, the type of solvents, the addition of solvents, the addition of fuel, the drum speed, the operating direction, and the water addition for uniform mixing, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; and

10. Checking whether there is an end signal; if not, returning to Step 7.

Embodiment 40: Control of sintering operation

The machine heuristic learning method for operation behavior record management in Embodiment 1 is applied to a sintering scenario. The process of this scenario is as follows:

Materials, used for making iron, provided by raw material manufacturers are crushed and screened, then proportioned, mixed for a first time, and then mixed for a second time; iron powder, pulverized coal (anthracitic coal) and lime are uniformly mixed in certain proportion, then water is added, and then the mixture is conveyed into a trolley of a sintering machine and is ignited to be combusted into sintered ore; then, the sintered ore is pelletized into sintered pellets which are then conveyed into a blast furnace.

① Blanking: a hearth layer and the mixture are laid on a trolley of the sintering machine; a layer of small sintered ore with a granularity of 10-25mm and a thickness of 20-25mm is laid before blanking and mixing to be used as the hearth layer, and after the hearth layer is laid, blanking is carried out through a roller spreader;

② Ignition: the surface of the material layer on the trolley is ignited and combusted; sufficient ignition temperature and proper high-temperature holding time are necessary for ignition, and the material layer is uniformly ignited in the width direction of the trolley;

(3) Sintering: the air volume for sintering, vacuum degree, thickness of the material layer, the speed of the sintering machine, and end point of sintering are accurately controlled; sintered ore obtained by sintering has sufficient strength and granularity, and is used as clinker for the next iron-making process.

This scenario mainly has the following attributes:

Basic working condition: iron powder content of sintered material, solvent type of sintered material, solvent content of sintered material, fuel content of sintered material, moisture content of sintered material, packing components, and packing granularity;

Operation data: sintering material thickness, packing thickness, pressure and flow rate of gas, pressure and flow rate of combustion air, speed of sintering machine, sintering negative pressure, and ignition temperature;

Optimization objective: to reduce the unit gas consumption of sintered ore;

Optimization constraint condition: the quality of sintered ore (total iron content of sintered ore, iron oxide content of sintered ore, sulfur content of sintered ore, PH of sintered ore, drum index of sintered ore, and screening index of sintered ore) meets configured values;

The process of this scenario:

1. Setting upper and lower limits, namely safety ranges, of the sintering material thickness, the packing thickness, the pressure and flow rate of gas, the pressure and flow rate of combustion air, the speed of sintering machine, the sintering negative pressure, and the ignition temperature;

2. Setting a reaction time;

3. Setting an isolation condition: no safety problem, not needed;

4. Setting an emergency trigger condition: no safety problem, not needed;

5. Setting an emergency plan: giving an alarm, and handling according to an actual situation;

6. Setting a heuristic end condition: successive N heuristic results being lower than results obtained based on current optimal operation knowledge, under the same basic working condition;

7. Acquiring current values of the sintering material thickness, the packing thickness, the pressure and flow rate of gas, the pressure and flow rate of combustion air, the speed of sintering machine, the sintering negative pressure, and the ignition temperature, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; and

10. Checking whether there is an end signal; if not, returning to Step 7.


Embodiment 42: Control of blast furnace charging

The machine heuristic learning method for operation behavior record management in Embodiment 1 is applied to a blast furnace charging process. The process of this scenario is as follows:

After being processed, qualified coke, sintered ore, pelletized ore and auxiliary materials are conveyed into a blast furnace bin to be stored and used. After being screened and weighed below a tank, the materials in the furnace are conveyed into a blast furnace trolley through a belt conveyor according to a charging process, and then conveyed by the trolley to the top of the blast furnace through an oblique bridge to be added into the blast furnace.

This scenario mainly has the following attributes:

Basic working condition: physical and chemical properties of sintered ore (full iron content of sintered ore, iron oxide content of sintered ore, sulfur content of sintered ore, PH of sintered ore, drum index of sintered ore, screening index of sintered ore, permeability of sintered ore, and the like), physical and chemical properties of coke (fixed carbon content, ash content, volatile content, impurity content, and granularity), and physical and chemical properties of auxiliary materials (oxide content and impurity content); composition requirement of molten iron, temperature requirement of molten iron, and composition requirement of slag;

Operation data: addition of materials (crushed sintered ore, pelletized ore, auxiliary materials, and the like);

Optimization objective: to make the total auxiliary material consumption per ton of molten iron of the blast furnace as low as possible;

Optimization constraint condition: the quality parameter of molten iron meets a configured value.

The process of this scenario:

1. Setting upper and lower limits, namely safety ranges, of the materials (crushed sintered ore, pelletized ore, auxiliary materials, and the like);

2. Setting a reaction time;

3. Setting an isolation condition: no safety problem, not needed;

4. Setting an emergency trigger condition: no safety problem, not needed;

5. Setting an emergency plan: giving an alarm, and handling according to an actual situation;

6. Setting a heuristic end condition: successive N heuristic results being lower than results obtained based on current optimal operation knowledge, under the same basic working condition;

7. Acquiring current values of the materials (crushed sintered ore, pelletized ore, auxiliary materials, and the like), that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; and

10. Checking whether the end condition is met; if not, returning to Step 7.


Embodiment 43: Control of blast furnace combustion

The machine heuristic learning method for operation behavior record management in Embodiment 1 is applied to a blast furnace combustion control system. The process of this scenario is as follows:

Cold air blown out of a fan room is heated into hot air by a hot blast heater, is blown into a blast furnace via an air inlet in the lower portion of the blast furnace and subjected to a combustion reaction with coke and pulverized coal sprayed into the blast furnace to generate high-temperature reducing gas CO and H2; when rising, the gas exchanges heat with falling furnace charge, so that the furnace charge is heated, and a reduction reaction is started; and sponge iron obtained by reduction is further melted and carburized to form molten iron finally.

This scenario mainly has the following attributes:

Basic working condition: raw material ratio (sintered ore content, pellet content, coke content, and ingredient content), temperature requirement of molten iron, composition requirement of molten iron, hearth temperature, and stack temperature;

Operation data: bed thickness of iron-containing materials, bed thickness of fuel and ingredients, blowing rate of pulverized coal, and temperature and speed of hot air;

Optimization objective: to make the yield of molten iron within a fixed cycle as high as possible;

Optimization constraint condition: the quality parameter of formaldehyde meets a configured value;

The process of this scenario:

1. Setting upper and lower limits, namely safety ranges, of the bed thickness of iron-containing materials, the bed thickness of fuel and ingredients, the blowing rate of pulverized coal, and the temperature and speed of hot air;
2. Setting a reaction time;
3. Setting an isolation condition: no safety problem, not needed;
4. Setting an emergency trigger condition: no safety problem, not needed;
5. Setting an emergency plan: giving an alarm, and handling according to an actual situation;
6. Setting a heuristic end condition: successive N heuristic results being lower than results obtained based on current optimal operation knowledge, under the same basic working condition;
7. Acquiring current values of the bed thickness of iron-containing materials, the bed thickness of fuel and ingredients, the blowing rate of pulverized coal, and the temperature and speed of hot air, that is, acquiring current operation data;
8. Randomly selecting one operation item from the operation data, randomly generating a new operation item within the safety range of the operation item, writing the new operation item into a control system, and automatically executing the new operation item by the device;
9. Waiting to the end of the reaction according to a waiting time; and
10. Checking whether the end condition is met; if not, returning to Step 7.

Embodiment 44: Control of preliminary desulfurization of molten iron (injection method)

The machine heuristic learning method for operation behavior record management in Embodiment 1 is applied to a process of preliminary desulfurization of molten iron. The process of this scenario is as follows:

Molten iron desulfurization is a process for reducing the sulfur content of molten iron before the molten iron is fed into a steel furnace.

A molten iron desulfurization system is mainly composed of a lime powder storage bin, a magnesium powder storage bin, a lime powder injection tank, a magnesium powder injection tank, powder guns, and a temperature measurement/sampling gun. Raw material powders, lime powder and magnesium powder, are automatically and simultaneously injected into a molten iron tank, with nitrogen as a carrier gas; after chemical reaction, desulfuration residues float to the surface of molten iron; when the molten iron is detected as qualified by sampling, slag is removed from the molten iron, and then the molten iron is conveyed to the next process; iron loss will be caused if slag contains iron and by slag removal.

This scenario mainly has the following attributes:

Basic working condition: molten iron temperature before desulfurization, molten iron weight before desulfurization, molten iron components before desulfurization, desulfurization station, age of injection guns, purity of passivated magnesium, purity of passivated lime, and target value of the S content of desulfurized molten iron;

Operation data: injection pressure of passivated magnesium, injection rate of passivated magnesium, injection time of passivated magnesium, injection quantity of passivated magnesium, injection pressure of passivated lime, injection rate of passivated lime, injection time of passivated lime, injection quantity of passivated lime, ratio of lime powder and magnesium powder, and nitrogen-assisted injection rate;

Optimization objective: to make desulfurizer consumption and iron loss as low as possible;

Optimization constraint condition: the S content of molten iron after desulfurization meets a configured value.

The process of this scenario:

1. Setting upper and lower limits, namely safety ranges, of the injection pressure of passivated magnesium, the injection rate of passivated magnesium, the injection time of passivated magnesium, the injection quantity of passivated magnesium, the injection pressure of passivated lime, the injection rate of passivated lime, the injection time of passivated lime, the injection quantity of passivated lime, the ratio of lime powder and magnesium powder, and the nitrogen-assisted injection rate;

2. Setting a reaction time;

3. Setting an isolation condition: no safety problem, not needed;

4. Setting an emergency trigger condition: no safety problem, not needed;

5. Setting an emergency plan: giving an alarm, and handling according to an actual situation;

6. Setting a heuristic end condition: successive N heuristic results being lower than results obtained based on current optimal operation knowledge, under the same basic working condition;

7. Acquiring current values of the injection pressure of passivated magnesium, the injection rate of passivated magnesium, the injection time of passivated magnesium, the injection quantity of passivated magnesium, the injection pressure of passivated lime, the injection rate of passivated lime, the injection time of passivated lime, the injection quantity of passivated lime, the ratio of lime powder and magnesium powder, and the nitrogen-assisted injection rate, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; and

10. Checking whether the end condition is met; if not, returning to Step 7.

Embodiment 45: Control of preliminary desulfurization of molten iron (KR mechanical stirring method)

The machine heuristic learning method for operation behavior record management in Embodiment 1 is applied to a preliminary desulfurization process of molten iron. The process of this scenario is as follows:

According to the KR (Kambara Reactor) mechanical stirring method, after being deslagged and sampled, molten iron in a blast furnace reaches a desulfurization station, a stirring head cast with refractory materials and roasted is immersed in ladle pool by a certain depth, a weighed desulfurizer is added to the surface of molten iron through a feeder by means of an eddy generated by rotation of the ladle pool and is drawn into the molten iron by means of the eddy, and then the desulfurizer sufficiently reacts with the molten iron to generate slag, so that the purpose of desulfurization is fulfilled. After the molten iron sampled and detected as qualified, the slag is removed, and the molten iron is conveyed to the next process, and iron loss will be caused if slag contains iron and by slag removal.

This scenario mainly has the following attributes:

Basic working condition: weight of molten iron before desulfurization, temperature of molten iron before desulfurization, S content of molten iron before desulfurization, purity of the desulfurizer, liquid level of molten iron, and target value of the S content of desulfurized molten iron;

Operation data: height of stirring head, rotational speed of stirring head, stirring time, total addition of desulfurizer, initial add time of desulfurizer, initial add weight of desulfurizer, second add time of desulfurizer, and second add weight of desulfurizer;

Optimization objective: to make desulfurizer consumption and iron loss as low as possible;

Optimization constraint condition: the S content of molten iron after desulfurization meets a configured value.

The process of this scenario:

1. Setting upper and lower limits, namely safety ranges, of the height of the stirring head, the rotational speed of the stirring head, the stirring time, the total addition of the desulfurizer, the initial add time of the desulfurizer, initial add weight of the desulfurizer, the second add time of the desulfurizer, and the second add weight of the desulfurizer;

2. Setting a reaction time;

3. Setting an isolation condition: no safety problem, not needed;

4. Setting an emergency trigger condition: no safety problem, not needed;

5. Setting an emergency plan: giving an alarm, and handling according to an actual situation;

6. Setting a heuristic end condition: successive N heuristic results being lower than results obtained based on current optimal operation knowledge, under the same basic working condition;

7. Acquiring current values of the height of the height of the stirring head, the rotational speed of the stirring head, the stirring time, the total addition of the desulfurizer, the initial add time of the desulfurizer, initial add weight of the desulfurizer, the second add time of the desulfurizer, and the second add weight of the desulfurizer, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; detecting the emergency trigger condition and the isolation condition during the waiting process; and
10. Checking whether the end condition is met; if not, returning to Step 7.

Embodiment 46: Operation optimization of steel converter

The machine heuristic learning method for operation behavior record management in Embodiment 1 is applied to a converter blowing operation system. The process of this scenario is as follows:

With molten iron, steel scrap, slag charge (lime, ore, calcined dolomite, coke, slag remover, and the like), iron alloy materials, oxygen and nitrogen are used as main materials, extra energy is not needed, physical heat of molten iron and heat generated by chemical reaction between C/Si components in the molten iron are used, decarburization and impurity removal are completed by means of the exothermic oxidization reaction between air or oxygen blow into the melt pool and various elements in cast molten iron, the molten iron is heated to a tapping temperature (1600°C or higher temperature), and the steel-making process is completed in a converter by the operations such as oxygen supply, slagging, temperature rise, deoxidizer addition and alloying.

This scenario mainly has the following attributes:

Basic working condition: type of steel, number of gun, age of gun, gun measurement site, temperature of molten iron, weight of molten iron, composition of molten iron (Mn, S, P, Si, Ti), type of steel scrap, charge weight of steel scrap, lining thickness, deslagging condition of steel in furnace, and angle of residue;

Operation data: location of oxygen lance, oxygen flow rate, oxygen consumption, times of oxygen supply, oxygen supply time, nitrogen flow rate, nitrogen consumption, nitrogen supply time, quantity of slag charge (lime, ore, calcined dolomite, coke, slag remover, and the like) input in the smelting process, input time of slag charge, flow rate of bottom-blown argon, argon blowing time, and initial gun start time;

Optimization objective: to control the optimal consumption-output ratio of steel consumption and ingredient consumption and make steel consumption and ingredient consumption as low as possible;

Optimization constraint condition: the temperature of molten steel and the composition of molten steel (C, Mn, S, P, Si) meet configured values.

The process of this scenario:

1. Setting upper and lower limits, namely safety ranges, of the location of oxygen lance, the oxygen flow rate, the oxygen consumption, the times of oxygen supply, the oxygen supply time, the nitrogen flow rate, the nitrogen consumption, the nitrogen supply time, the quantity of slag charge (lime, ore, calcined dolomite, coke, slag remover, and the like) input in the smelting process, the input time of slag charge, the flow rate of bottom-blown argon, the argon blowing time, and the initial gun start time;
2. Setting a reaction time;
3. Setting an isolation condition: no safety problem, not needed;
4. Setting an emergency trigger condition: operating parameters of the converter being within safety ranges;
5. Setting an emergency plan: giving an alarm, and handling according to an actual situation;
6. Setting a heuristic end condition: successive N heuristic results being lower than results obtained based on current optimal operation knowledge, under the same basic working condition;
7. Acquiring current values of the the location of oxygen lance, the oxygen flow rate, the oxygen consumption, the times of oxygen supply, the oxygen supply time, the nitrogen flow rate, the nitrogen consumption, the nitrogen supply time, the quantity of slag charge (lime, ore, calcined dolomite, coke, slag remover, and the like) input in the smelting process, the input time of slag charge, the flow rate of bottom-blown argon, the argon blowing time, and the initial gun start time, that is, acquiring current operation data;
8. Randomly selecting one operation item from the operation data, randomly generating a new operation item within the safety range of the operation item, writing the new operation item into a control system, and automatically executing the new operation item by the device;
9. Waiting to the end of the reaction according to a waiting time; detecting the emergency trigger condition during the waiting process; if the emergency trigger condition is met, starting the emergency plan; and
10. Checking whether the end condition is met; if not, returning to Step 7.

Embodiment 47: Control of oxidation burning loss of rolling heating furnace

The machine heuristic learning method for operation behavior record management in Embodiment 1 is applied to a combustion control process of a heating furnace. The process of this scenario is as follows:

Heating of the heating furnace is an important process of steel rolling. A heating furnace combustion system delivers coal gas and combustion air to a nozzle through a pipeline, the coal gas is combusted to heat billet steel in the heating furnace; the billet steel moves in the heating furnace to pass through a preheating section, a heating section and a soaking section of the heating furnace to complete the whole heating process, so that the temperature and homogeneity of the billet steel meet requirements. When the billet steel is heated in the heating furnace, the surface of the billet steel is oxidized to generate oxide scale, and improper control of the heating process will increase the oxidation burning loss.

This scenario mainly has the following attributes:

Basic working condition: type of steel, furnace number/row number, billet length, billet width, billet weight, roll thickness, roll width, total time in furnace, billet temperature before charging, and billet discharge target temperature;

Operation data: residence time in the preheating section, residence time in the heating section, residence time in the soaking section, air flow in the preheating section, coal gas flow in the preheating section, air flow in the heating section, coal gas flow in the heating section, air flow in the soaking section, and coal gas flow in the soaking section;

Optimization objective: to make the oxidation burning loss in steel rolling heating as low as possible;

Optimization constraint condition: the taping temperature and temperature uniformity (temperature of the head, the middle and the tail) of billet steel meet configured values.

The process of this scenario:

1. Setting upper and lower limits, namely safety ranges, of the residence time in the preheating section, the residence time in the heating section, the residence time in the soaking section, the air flow in the preheating section, the gas flow in the preheating section, the air flow in the heating section, the gas flow in the heating section, the air flow in the soaking section, and the gas flow in the soaking section;

2. Setting a reaction time;

3. Setting an isolation condition: no safety problem, not needed;

4. Setting an emergency trigger condition: operating parameters of the heating furnace being within safety ranges;

5. Setting an emergency plan: giving an alarm, and handling according to an actual situation;

6. Setting a heuristic end condition: successive N heuristic results being lower than results obtained based on current optimal operation knowledge, under the same basic working condition;

7. Acquiring current values of the residence time in the preheating section, the residence time in the heating section, the residence time in the soaking section, the air flow in the preheating section, the gas flow in the preheating section, the air flow in the heating section, the gas flow in the heating section, the air flow in the soaking section, and the gas flow in the soaking section, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; detecting the emergency trigger condition during the waiting process; if the emergency trigger condition is met, starting the emergency plan; and

10. Checking whether the end condition is met; if not, returning to Step 7.

Embodiment 48: Optimization of gas consumption of steel rolling heating furnace

The machine heuristic learning method for operation behavior record management in Embodiment 1 is applied to a heating furnace operating process. The process of this scenario is as follows:

Heating of the heating furnace is an important process of steel rolling. A heating furnace combustion system delivers coal gas and combustion air to a nozzle through a pipeline, the coal gas is combusted to heat billet steel in the heating furnace; the billet steel moves in the heating furnace to pass through a preheating section, a heating section and a soaking section of the heating furnace to complete the whole heating process, so that the temperature and homogeneity of the billet steel meet requirements. When the billet steel is heated in the heating furnace, high energy consumption and severe pollution will be caused, and if the heating process cannot be properly controlled, the gas consumption will be increased.

This scenario mainly has the following attributes:

Basic working condition: type of steel, furnace number/row number, billet length, billet width, billet weight, roll thickness, roll width, total time in furnace, billet temperature before charging, and billet discharge target temperature;

Operation data: residence time in the preheating section, residence time in the heating section, residence time in the soaking section, air flow in the preheating section, gas flow in the preheating section, air flow in the heating section, gas flow in the heating section, air flow in the soaking section, and gas flow in the soaking section;

Optimization objective: to make the gas consumption per ton of steel of the heating furnace as low as possible;

Optimization constraint condition: the taping temperature and temperature uniformity of billet steel meet configured values.

The process of this scenario:

1. Setting upper and lower limits, namely safety ranges, of the residence time in the preheating section, the residence time in the heating section, the residence time in the soaking section, the air flow in the preheating section, the gas flow in the preheating section, the air flow in the heating section, the gas flow in the heating section, the air flow in the soaking section, and the gas flow in the soaking section;

2. Setting a reaction time;

3. Setting an isolation condition: no safety problem, not needed;

4. Setting an emergency trigger condition: operating parameters of the heating furnace being within safety ranges;

5. Setting an emergency plan: giving an alarm, and handling according to an actual situation;

6. Setting a heuristic end condition: successive N heuristic results being lower than results obtained based on current optimal operation knowledge, under the same basic working condition;

7. Acquiring current values of the residence time in the preheating section, the residence time in the heating section, the residence time in the soaking section, the air flow in the preheating section, the gas flow in the preheating section, the air flow in the heating section, the gas flow in the heating section, the air flow in the soaking section, and the gas flow in the soaking section, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; detecting the emergency trigger condition during the waiting process; if the emergency trigger condition is met, starting the emergency plan;

10. Checking whether the end condition is met; if not, returning to Step 7.

Embodiment 49: Control and optimization of air-fuel ratio of steel rolling heating furnace

The machine heuristic learning method for operation behavior record management in Embodiment 1 is applied to a combustion control process of a heating furnace. The process of this scenario is as follows:

Heating of the heating furnace is an important process of steel rolling. A heating furnace combustion system delivers coal gas and combustion air to a nozzle through a pipeline, the coal gas is combusted to heat billet steel in the heating furnace; the billet steel moves in the heating furnace to pass through a preheating section, a heating section and a soaking section of the heating furnace to complete the whole heating process, so that the temperature and homogeneity of the billet steel meet requirements. When billet steel is heated in the heating furnace, the optimal air-fuel ratio can be obtained by finding the fastest temperature rise point, which will change with the fluctuation of gas pipe pressure, gas heating value and air pipe pressure, so the extreme value of the air-fuel ratio is dynamically variable.

This scenario mainly has the following attributes:

Basic working condition: type of steel, furnace number/row number, billet length, billet width, billet weight, roll thickness, roll width, total time in furnace, billet temperature before charging, and billet discharge target temperature;

Operation data: residence time in the preheating section, residence time in the heating section, residence time in the soaking section, air flow in the preheating section, coal gas flow in the preheating section, air flow in the heating section, coal gas flow in the heating section, air flow in the soaking section, and coal gas flow in the soaking section;

Optimization objective: to make the duration of an unqualified air-fuel ratio of the steel rolling heating furnace as short as possible;

Optimization constraint condition: the taping temperature and temperature uniformity (temperature of the head, the middle and the tail) of billet steel meet configured values.

The process of this scenario:

1. Setting upper and lower limits, namely safety ranges, of the residence time in the preheating section, the residence time in the heating section, the residence time in the soaking section, the air flow in the preheating section, the gas flow in the preheating section, the air flow in the heating section, the gas flow in the heating section, the air flow in the soaking section, and the gas flow in the soaking section;

2. Setting a reaction time;

3. Setting an isolation condition: no safety problem, not needed;

4. Setting an emergency trigger condition: operating parameters of the heating furnace being within safety ranges;

5. Setting an emergency plan: giving an alarm, and handling according to an actual situation;

6. Setting a heuristic end condition: successive N heuristic results being lower than results obtained based on current optimal operation knowledge, under the same basic working condition;

7. Acquiring current values of the residence time in the preheating section, the residence time in the heating section, the residence time in the soaking section, the air flow in the preheating section, the gas flow in the preheating section, the air flow in the heating section, the gas flow in the heating section, the air flow in the soaking section, and the gas flow in the soaking section, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; detecting the emergency trigger condition during the waiting process; if the emergency trigger condition is met, starting the emergency plan; and

10. Checking whether the end condition is met; if not, returning to Step 7.

Embodiment 50: Control and optimization of RT2 temperature precision of steel rolling heating furnace

The machine heuristic learning method for operation behavior record management in Embodiment 1 is applied to a combustion control process of a heating furnace. The process of this scenario is as follows:

Heating of the heating furnace is an important process of steel rolling. A heating furnace combustion system delivers coal gas and combustion air to a nozzle through a pipeline, the coal gas is combusted to heat billet steel in the heating furnace; the billet steel moves in the heating furnace to pass through a preheating section, a heating section and a soaking section of the heating furnace to complete the whole heating process, so that the temperature and homogeneity of the billet steel meet requirements. When the billet steel is heated in the heating furnace, the RT2 temperature (final polishing temperature of rough rolling) will deviate from the target temperature if the heating process cannot be properly controlled.

This scenario mainly has the following attributes:

Basic working condition: type of steel, furnace number/row number, billet length, billet width, billet weight, roll thickness, roll width, total time in furnace, billet temperature before charging, and billet discharge target temperature;

Operation data: residence time in the preheating section, residence time in the heating section, residence time in the soaking section, air flow in the preheating section, coal gas flow in the preheating section, air flow in the heating section, coal gas flow in the heating section, air flow in the soaking section, and coal gas flow in the soaking section;

Optimization objective: to increase the qualification rate of RT2 temperature of the steel rolling heating furnace and to make the RT2 temperature as closer as the target temperature;

Optimization constraint condition: temperature uniformity (temperature of the head, the middle and the tail) of billet steel meets a configured value.

The process of this scenario:

1. Setting upper and lower limits, namely safety ranges, of the residence time in the preheating section, the residence time in the heating section, the residence time in the soaking section, the air flow in the preheating section, the gas flow in the preheating section, the air flow in the heating section, the gas flow in the heating section, the air flow in the soaking section, and the gas flow in the soaking section;

2. Setting a reaction time;

3. Setting an isolation condition: no safety problem, not needed;

4. Setting an emergency trigger condition: operating parameters of the heating furnace being within safety ranges;

5. Setting an emergency plan: giving an alarm, and handling according to an actual situation;

6. Setting a heuristic end condition: successive N heuristic results being lower than results obtained based on current optimal operation knowledge, under the same basic working condition;

7. Acquiring current values of the residence time in the preheating section, the residence time in the heating section, the residence time in the soaking section, the air flow in the preheating section, the gas flow in the preheating section, the air flow in the heating section, the gas flow in the heating section, the ir flow in the soaking section, and the gas flow in the soaking section, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; detecting the emergency trigger condition during the waiting process; if the emergency trigger condition is met, starting the emergency plan; and

10. Checking whether the end condition is met; if not, returning to Step 7.

Embodiment 51: Control and optimization of temperature uniformity of steel rolling heating furnace

The machine heuristic learning method for operation behavior record management in Embodiment 1 is applied to a combustion control process of a heating furnace. The process of this scenario is as follows:

Heating of the heating furnace is an important process of steel rolling. A heating furnace combustion system delivers coal gas and combustion air to a nozzle through a pipeline, the coal gas is combusted to heat billet steel in the heating furnace; the billet steel moves in the heating furnace to pass through a preheating section, a heating section and a soaking section of the heating furnace to complete the whole heating process, so that the temperature and homogeneity of the billet steel meet requirements. When the billet steel is heated in the heating furnace, the temperature uniformity will not be up to standard if the heating process is improperly controlled.

This scenario mainly has the following attributes:

Basic working condition: type of steel, furnace number/row number, billet length, billet width, billet weight, roll thickness, roll width, total time in furnace, billet temperature before charging, and billet discharge target temperature;

Operation data: residence time in the preheating section, residence time in the heating section, residence time in the soaking section, air flow in the preheating section, coal gas flow in the preheating section, air flow in the heating section, coal gas flow in the heating section, air flow in the soaking section, and coal gas flow in the soaking section;

Optimization objective: to make the qualification rate of temperature difference (temperature uniformity) of the steel rolling heating furnace as high as possible;

Optimization constraint condition: the taping temperature of billet steel meets a configured value.

The process of this scenario:

1. Setting upper and lower limits, namely safety ranges, of the residence time in the preheating section, the residence time in the heating section, the residence time in the soaking section, the air flow in the preheating section, the gas flow in the preheating section, the air flow in the heating section, the gas flow in the heating section, the air flow in the soaking section, and the gas flow in the soaking section;

2. Setting a reaction time;

3. Setting an isolation condition: no safety problem, not needed;

4. Setting an isolation condition: operating parameters of the heating furnace being within safety ranges;

5. Setting an emergency plan: giving an alarm, and handling according to an actual situation;

6. Setting a heuristic end condition: successive N heuristic results being lower than results obtained based on current optimal operation knowledge, under the same basic working condition;

7. Acquiring current values of the residence time in the preheating section, the residence time in the heating section, the residence time in the soaking section, the air flow in the preheating section, the gas flow in the preheating section, the air flow in the heating section, the gas flow in the heating section, the air flow in the soaking section, and the gas flow in the soaking section, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; detecting the emergency trigger condition during the waiting process; if the emergency trigger condition is met, starting the emergency plan; and

10. Checking whether the end condition is met; if not, returning to Step 7.

Embodiment 52: Control of wire coiling

The machine heuristic learning method for operation behavior record management in Embodiment 1 is applied to a wire rolling process. The process of this scenario is as follows:

A piece rolled by a roller enters a wire coiler through pinch rolls and advances by means of feed force of the pinch rolls and the rotational centrifugal force of a coiling plate. A linear steel wire that moves at a high speed are extruded by a wire rolling machine to be machined into wire coils that have a fixed diameter and ring diameter and a stable ring shape and are uniformly spaced apart from each other. A motor drives a bevel gear to enable the wire rolling machine to turn, and then big and small gears slow down to drive a spiral tube and the coiling plate to rotate. The wire enters the spiral tube through a hollow shaft, forms a wire coil through the rolling machine, and is pushed forward circle by cycle and falls.

This scenario mainly has the following attributes:

Basic working condition: type of steel, wire diameter, and inlet temperature of wire rolling machine

Operation data: horizontal acceleration of the wire coiler, vertical acceleration of the wire coiler, and feed speed of the pinch rolls

Optimization objective: to make the diameters of wire coils as uniform as possible;

Optimization constraint condition: the quality and size of wires meet configured values.

The process of this scenario:

1. Setting upper and lower limits, namely safety ranges, of the horizontal acceleration of the wire coiler, the vertical acceleration of the wire coiler, and the feed speed of the pinch rolls;

2. Setting a reaction time;

3. Setting an isolation condition: no safety problem, not needed;

4. Setting an emergency trigger condition: no safety problem, not needed;

5. Setting an emergency plan: giving an alarm, and handling according to an actual situation;

6. Setting a heuristic end condition: successive N heuristic results being lower than results obtained based on current optimal operation knowledge, under the same basic working condition;

7. Acquiring current values of the horizontal acceleration of the wire coiler, the vertical acceleration of the wire coiler, and the feed speed of the pinch rolls, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; detecting the emergency trigger condition and the isolation condition during the waiting process; and

10. Checking whether the end condition is met; if not, returning to Step 7.

Embodiment 53: Operation optimization of casting/smelting EAF

The machine heuristic learning method for operation behavior record management in Embodiment 1 is applied to a casting/smelting control process. The process of this scenario is as follows:

EAF, namely electric arc furnace, is used for making steel by smelting solid scrap steel added into the furnace, with an electric arc generated between the end of a graphite electrode for inputting electric energy into the EAF and furnace change. After the scrap steel is molten, oxygen is blown into the furnace and carbon balls and slag charge are added into the furnace for decarburization, dephosphorization, desulfurization and deoxidization; and the temperature of molten steel is increased to complete the smelting process. The productivity can be effectively increased by shortening the smelting cycle.

This scenario mainly has the following attributes:

Basic working condition: alloy composition, furnace number, steel type, scheduled molten steel quantity, scheduled ingredient list of scrap steel (type, composition and weight of scrap steel), alloy ingredient list, scheduled tapping temperature, start time of smelting, start time of oxygen blowing, and time of power supply;

Operation data: feed quantity of scrap steel, feed quantity of carbon balls, duration of oxygen blowing (quantity of blown oxygen), quantity of blown carbon powder, duration of carbon powder blowing, and feed quantity of lime;

Optimization objective: to make the smelting cycle of EAF as short as possible;

Optimization constraint condition: the tapping temperature and chemical composition (C, Mn, Si, P and S) content of molten steel meet configured values.

The process of this scenario:

1. Setting upper and lower limits, namely safety ranges, of the feed quantity of scrap steel, the feed quantity of carbon balls, the duration of oxygen blowing (quantity of blown oxygen), the quantity of blown carbon powder, the duration of carbon powder blowing, and the feed quantity of lime;

2. Setting a reaction time;

3. Setting an isolation condition: no safety problem, not needed;

4. Setting an emergency trigger condition: operating parameters of EAF being within safety ranges;

5. Setting an emergency plan: giving an alarm, and handling according to an actual situation;

6. Setting a heuristic end condition: successive N heuristic results being lower than results obtained based on current optimal operation knowledge, under the same basic working condition;

7. Acquiring current values of the feed quantity of scrap steel, the feed quantity of carbon balls, the duration of oxygen blowing (quantity of blown oxygen), the quantity of blown carbon powder, the duration of carbon powder blowing, and the feed quantity of lime, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; detecting the emergency trigger condition during the waiting process; if the emergency trigger condition is met, starting the emergency plan; and

10. Checking whether the end condition is met; if not, returning to Step 7.

Embodiment 54: Operation optimization of casting/smelting LF

The machine heuristic learning method for operation behavior record management in Embodiment 1 is applied to a casting/smelting control process. The process of this scenario is as follows:

An LF (LADLE FURNACE) realizes refining by heating molten steel from a smelting furnace by means of a graphite electrode. Alloy is added when the molten steel is added into the LF, argon is blown into the furnace to be stirred, and a slagging agent is added to generate white slag. In the refining process, a proper amount of lime or fluorite is added for slag conditioning according to the slag condition, so as to complete the refining process of the molten steel in a low-oxygen atmosphere. The productivity can be effectively increased by shortening the refining cycle.

This scenario mainly has the following attributes:

Basic working condition: furnace number, steel type, quantity of molten steel, temperature of molten steel, composition table (C, Mn, Si, P, S, Ni, Cr, Co, Ca, As, Ce, Mo, Cu, V, Ti, Al, Nb, Mg, W, B, Sn, Sb, N) of molten steel to be sampled and detected by LF, start time of smelting, and time of power supply;

Operation data: alloy consumption (Al cake consumption, Fe-Mn alloy consumption, Fe-Cr alloy consumption, Fe-Mo alloy consumption), feed quantity of materials for refining (lime, fluorite and carbon powder), chemical composition, sampling time, sampling temperature, feed temperature, holding time of white slag, and Ar flow rate;

Optimization objective: to shorten the smelting cycle of LF

Optimization constraint condition: tapping temperature and chemical composition (C, Mn, Si, P, S) of molten steel meet configured values.

The process of this scenario:

1. Setting upper and lower limits, namely safety ranges, of the alloy consumption (Al cake consumption, Fe-Mn alloy consumption, Fe-Cr alloy consumption, Fe-Mo alloy consumption), the feed quantity of materials for refining (lime, fluorite and carbon powder), the chemical composition, sampling time, the sampling temperature, the feed temperature, the holding time of white slag, and the Ar flow rate;

2. Setting a reaction time;

3. Setting an isolation condition: no safety problem, not needed;

4. Setting an emergency trigger condition: the operating parameters of LF being within safety ranges;

5. Setting an emergency plan: giving an alarm, and handling according to an actual situation;

6. Setting a heuristic end condition: successive N heuristic results being lower than results obtained based on current optimal operation knowledge, under the same basic working condition;

7. Acquiring current values of the alloy consumption (Al cake consumption, Fe-Mn alloy consumption, Fe-Cr alloy consumption, Fe-Mo alloy consumption), the feed quantity of materials for refining (lime, fluorite and carbon powder), the chemical composition, the sampling time, the sampling temperature, the feed temperature, the holding time of white slag, and the Ar flow rate, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; detecting the emergency trigger condition during the waiting process; if the emergency trigger condition is met, starting the emergency plan; and

10. Checking whether the end condition is met; if not, returning to Step 7.

Embodiment 55: Operation optimization of casting/smelting VD

The machine heuristic learning method for operation behavior record management in Embodiment 1 is applied to a casting/smelting control process. The process of this scenario is as follows:

The VD (vacuum decarburization) furnace adopts a vacuum pump to decreases the vacuum degree of a vacuum chamber below 67 Pa so as to reduce the hydrogen content and nitrogen content of molten steel under the action of negative pressure, and removes impurities and purity the molten steel by means of carbon-oxygen reaction, so as to complete a refining process. The productivity can be effectively improved by shortening the refining cycle.

This scenario mainly has the following attributes:

Basic working condition: furnace number, steel type, total quantity of scrap steel in EAF, temperature of molten steel, composition list (Fe2, C, Mn, Si, P, S, Ni, Cr, Co, Ca, As, Ce, Mo, Cu, V, Ti, Al, Nb, Mg, W, B, Sn, Sb, N) of to-be sampled and detected molten steel discharged out of LF, and start time of smelting;

Operation data: start sequence and time of vacuum pumps, vacuumizing time, vacuum holding time, and vacuum breaking time;

Optimization objective: to shorten the smelting cycle of the VD furnace;

Optimization constraint condition: the oxygen content and nitrogen content of molten steel are below designated standards, and the temperature of molten steel is within a designated range.

The process of this scenario:

1. Setting upper and lower limits, namely safety ranges, of the start sequence and time of vacuum pumps, vacuumizing time, the vacuum holding time, and the vacuum breaking time;

2. Setting a reaction time;

3. Setting an isolation condition: no safety problem, not needed;

4. Setting an emergency trigger condition: operating parameters of the VD furnace being within safety ranges;

5. Setting an emergency plan: giving an alarm, and handling according to an actual situation;

6. Setting a heuristic end condition: successive N heuristic results being lower than results obtained based on current optimal operation knowledge, under the same basic working condition;

7. Acquiring current values of the start sequence and time of vacuum pumps, the vacuumizing time, the vacuum holding time, and the vacuum breaking time, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; detecting the emergency trigger condition during the waiting process; if the emergency trigger condition is met, starting the emergency plan; and

10. Checking whether the end condition is met; if not, returning to Step 7.

Embodiment 56: Control of pump room of power plant

The machine heuristic learning method for operation behavior record management in Embodiment 1 is applied to a control system of a pump room of a power plant. The process of this scenario is as follows:

The pump room management staff remotely monitors the water level of a reservoir and inflow pressure of a pump station, the working state of a pressure pump unit, outflow rate, outflow pressure, and the like; the pressure pump set is dynamically controlled to start or stop to reduce the unit power consumption of the pump room under the precondition of meeting all production water demands. The objective of this scenario is to reduce the unit power consumption of the pump room under the precondition of meeting all production water demands.

This scenario mainly has the following attributes:

Basic working condition: temperature and liquid level of reservoir, ambient temperature, opening degree of valves of cooling tower and cooler, return water temperature, flow rate, and pressure;

Operation data: start and stop of water pumps, frequency of variable-frequency pumps, opening degree of valves, opening and closing of cooling tower, fan frequency of cooling tower, and start and stop of evaporative cooler;

Optimization objective: to reduce unit power consumption of the pump room;

Optimization constraint condition: the water supply temperature, pressure and flow rate of blast furnace meet configured values.

The process of this scenario:

1. Setting upper and lower limits, namely safety ranges, of the temperature and liquid level of reservoir, the ambient temperature, the opening degree of valves of cooling tower and cooler, the return water temperature, the flow rate, and the pressure;

2. Setting a reaction time;

3. Setting an isolation condition: no safety problem, not needed;

4. Setting an emergency trigger condition: operating parameters of water pumps being within safety ranges;

5. Setting an emergency plan: giving an alarm, and handling according to an actual situation;

6. Setting a heuristic end condition: successive N heuristic results being lower than results obtained based on current optimal operation knowledge, under the same basic working condition;

7. Acquiring current values of the temperature and liquid level of reservoir, the ambient temperature, the opening degree of valves of cooling tower and cooler, the return water temperature, the flow rate, and the pressure, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; detecting the emergency trigger condition during the waiting process; if the emergency trigger condition is met, starting the emergency plan; and

10. Checking whether the end condition is met; if not, returning to Step 7.

Embodiment 57: Control of calcining operation

The machine heuristic learning method for operation behavior record management in Embodiment 1 is applied to a calcining process for wet smelting of zinc. Referring to FIG. 2, the process of this scenario is as follows:

Calcination is a process for effectively converting zinc sulfide into zinc oxide and zinc sulfate and removing impurities such as lead and cadmium in zinc oxide and zinc sulfate by separating solid particles from each other and continuously stirring them by means of air or rich oxygen blown through a solid furnace charge layer from bottom to top;

This scenario mainly has the following attributes:

Basic working condition: concentrate composition, particle granularity, loosening coefficient, particle temperature, and water content;

Operation data: blast volume, oxygen volume, and material input;

Optimization objective: to make the content of soluble zinc in calcined products as high as possible;

Optimization constraint condition: the output in unit time is guaranteed.

The process of this scenario:

1. Setting upper and lower limits, namely safety ranges, of the blast volume, the oxygen volume, and the material input;
2. Setting a reaction time;
3. Setting an isolation condition: the output in unit time being between set upper and lower limits;
4. Setting an emergency trigger condition: no safety problem, not needed;
5. Setting an emergency plan: giving an alarm, and handling according to an actual situation;
16. Setting a heuristic end condition: successive N heuristic results being lower than results obtained based on current optimal operation knowledge, under the same basic working condition;
7. Acquiring current values of the blast volume, the oxygen volume, and the material input, that is, acquiring a current basic working condition;
8. Randomly selecting one operation item from the operation data, randomly generating a new operation item within the safety range of the operation item, writing the new operation item into a control system, and automatically executing the new operation item by the device;
9. Waiting to the end of the reaction according to a waiting time; detecting the emergency trigger condition and the isolation condition during the waiting process; if the isolation condition is met, returning heuristic data to a previous value by means of a revertive control mechanism; and
10. Checking whether the end condition is met; if not, returning to Step 7.

Embodiment 58: Control of leaching operation for wet smelting of zinc

The machine heuristic learning method for operation behavior record management in Embodiment 1 is applied to a leaching process for wet smelting of zinc. Referring to FIG. 3, the process of this scenario is as follows:

A dilute sulfuric acid solution is generally used as a solvent of leaching for wet smelting of zinc. Zinc-containing materials (zinc leaching residues, zinc sulfide, zinc calcine, zinc-containing dust, zinc oxide concentrate) are poured into the solution, and insoluble solids form slag. Leached mixed pulp is concentrated and filtered to separate from the slag;

This scenario mainly has the following attributes:

Basic working condition: zinc calcine composition, zinc calcine input, and sulfuric acid concentration;

Operation data: stirring rate of stirring tank, sulfuric acid input, solution temperature, and leaching time;

Optimization objective: to make the concentration of zinc ions in leachate as high as possible;

Optimization constraint condition: none

The process of this scenario:

1. Setting upper and lower limits, namely safety ranges, of the stirring rate of stirring tank, the sulfuric acid input, the solution temperature, and the leaching time;
2. Setting a reaction time;
3. Setting an isolation condition: no safety problem, not needed;
4. Setting an emergency trigger condition: no safety problem, not needed;
5. Setting an emergency plan: giving an alarm, and handling according to an actual situation;
6. Setting a heuristic end condition: successive N heuristic results being lower than results obtained based on current optimal operation knowledge, under the same basic working condition;
7. Acquiring current values of the stirring rate of stirring tank, the sulfuric acid input, the solution temperature, and the leaching time, that is, acquiring a current basic working condition;
8. Randomly selecting one operation item from the operation data, randomly generating a new operation item within the safety range of the operation item, writing the new operation item into a control system, and automatically executing the new operation item by the device;
9. Waiting to the end of the reaction according to a waiting time; and
10. Checking whether the end condition is met; if not, returning to Step 7.

Embodiment 59: Control of purifying operation for wet smelting of zinc

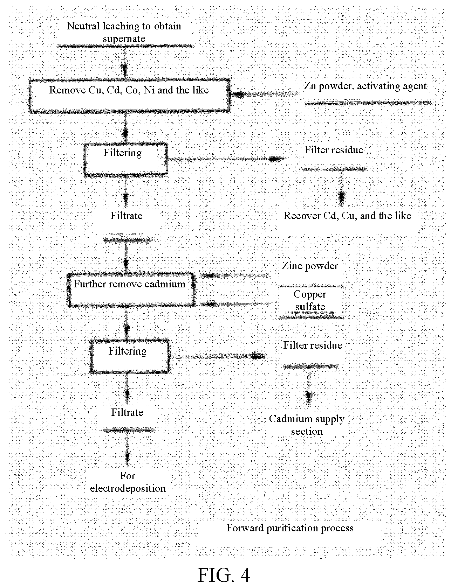

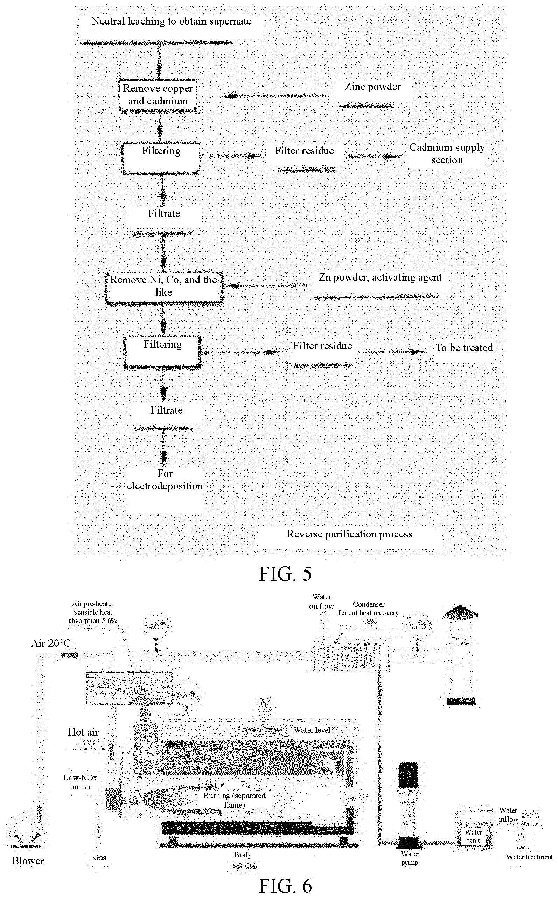

The machine heuristic learning method for operation behavior record management in Embodiment 1 is applied to a purifying process for wet smelting of zinc. Referring to FIG. 4 and FIG. 5, the process of this scenario is as follows:

Purification for wet smelting of zinc is a process for reducing impurities, such as copper, iron, cobalt, arsenic and antimony, in neural supernate obtained after leaching and filtering below process-stipulated limits to improve the purity of an electrolyte, so as to meet the requirement for liquid zinc during electrolytic deposition.

At present, zinc powder is used for deep purification of a zinc sulfate solution at home and abroad, and there are processes. According to one process, thermal purification (high-temperature) is performed first, and then cold purification (low-temperature) is performed; and this process is also called forward purification. According to the other process, cold purification is performed first, and then thermal purification is performed; and this process is also called reverse purification. Generally, the factories adopt a two-stage purification process;

This scenario mainly has the following attributes:

Basic working condition: composition of liquid zinc, flow rate of liquid zinc, and temperature of liquid zinc;

Operation data: replacement temperature, replacement time, and consumption of zinc powder;

Optimization objective: to make the consumption of the zinc powder as low as possible;

Optimization constraint condition: the quality of liquid zinc (the content of impurities such as copper iron, cobalt, arsenic and antimony) is qualified.

The process of this scenario:

1. Setting upper and lower limits, namely safety ranges, of the replacement temperature, replacement time, and consumption of zinc powder;

2. Setting a reaction time;

3. Setting an isolation condition: the quality of liquid zinc (the content of impurities such as copper iron, cobalt, arsenic and antimony) being qualified;

4. Setting an emergency trigger condition: no safety problem, not needed;

5. Setting an emergency plan: giving an alarm, and handling according to an actual situation;

6. Setting a heuristic end condition: successive N heuristic results being lower than results obtained based on current optimal operation knowledge, under the same basic working condition;

7. Acquiring current values of the composition of liquid zinc, the flow rate of liquid zinc, and the temperature of liquid zinc, that is, acquiring a current basic working condition;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; detecting the emergency trigger condition and the isolation condition during the waiting process; if the isolation condition is met, returning heuristic data to a previous value by means of a revertive control mechanism; and

10. Checking whether the end condition is met; if not, returning to Step 7.

Embodiment 60: Control of electrodeposition operation of wet smelting of zinc

The machine heuristic learning method for operation behavior record management in Embodiment 1 is applied to an electrodeposition process for wet smelting of zinc;

The process of this scenario is as follows:

With a zinc sulfate aqueous solution containing sulfuric acid as an electrolyte, an alloy lead plate containing 0.5%-1% of silver as an anode, and a rolled aluminum plate as cathode, electrodeposition is performed to separate out zinc from the cathode and to release oxygen from the anode;

This scenario mainly has the following attributes:

Basic working condition: concentration of zinc sulfate, temperature of zinc sulfate, and number of electrolytic plates;

Operation data: temperature, PH and pressure of electrolyte, addition rate of zinc material, stirring rate, current density, and bath voltage;

Optimization objective: to make the power consumption in the electrodeposition process as low as possible;

Optimization constraint condition: the purity of finished zinc is qualified.

The process of this scenario:

1. Setting upper and lower limits, namely safety ranges, of the temperature, the PH and pressure of electrolyte, the addition rate of zinc material, the stirring rate, the current density, and the bath voltage;

2. Setting a reaction time;

3. Setting an isolation condition: the purity of finished zinc being qualified;

4. Setting an emergency trigger condition: no safety problem, not needed;

5. Setting an emergency plan: giving an alarm, and handling according to an actual situation;

6. Setting a heuristic end condition: successive N heuristic results being lower than results obtained based on current optimal operation knowledge, under the same basic working condition;

7. Acquiring current values of the concentration of zinc sulfate, the temperature of zinc sulfate, and the number of electrolytic plates, that is, acquiring a current basic working condition;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; detecting the emergency trigger condition and the isolation condition during the waiting process; if the isolation condition is met, returning heuristic data to a previous value by means of a revertive control mechanism; and

10. Checking whether the end condition is met; if not, returning to Step 7.


Embodiment 61: Control of refining operation of anode furnace

The machine heuristic learning method for operation behavior record management in Embodiment 1 is applied to an operation process of an anode furnace for copper smelting. The process of this scenario is as follows:

The pyro-refining process of an anode furnace comprises: feeding → oxidation-reduction → copper generation → thermal insulation. In the whole process, a fuel (heavy oil) at a certain flow rate is used for heating. Different temperatures are required in difference processes, and the temperature depends on the combustion condition of the fuel and oxygen.

This scenario mainly has the following attributes:

Basic working condition: temperature after first-pass feeding, composition of crude copper, first-pass copper quantity, first-pass feeding duration, pre-oxidization duration, temperature after second-pass feeding, second-pass copper quantity, temperature before oxidization, initial sample after oxidization, oxidization duration (including slagging), oxidization end temperature, slagging quantity, desulfurization suspend time, and copper sample before reduction;

Operation data: flow rate of heavy oil in the feeding stage, flow rate of heavy oil in the oxidization stage, flow rate of heavy oil in the reduction stage, flow rate of heavy oil in the copper discharge stage, and flow rate of heavy oil in the thermal insulation stage;

Optimization objective: to make unit consumption of heavy oil as low as possible;

Optimization constraint condition: the copper content of slag, the temperature in the feeding stage, the temperature in the oxidization stage, the temperature in the reduction stage, the temperature in the copper generation stage, and the temperature in the holding stage are within set ranges.

The process of this scenario:


1. Setting upper and lower limits, namely safety ranges, of the flow rate of heavy oil in the feeding stage, flow rate of heavy oil in the oxidization stage, flow rate of heavy oil in the reduction stage, flow rate of heavy oil in the copper discharge stage, and flow rate of heavy oil in the thermal insulation stage;

2. Setting a reaction time;

3. Setting an isolation condition: the copper content of slag, the temperature in the feeding stage, the temperature in the oxidization stage, the temperature in the reduction stage, the temperature in the copper generation stage, and the temperature in the holding stage being within set ranges;

4. Setting an emergency trigger condition: no safety problem, not needed;

5. Setting an emergency plan: giving an alarm, and handling according to an actual situation;

6. Setting a heuristic end condition: successive N heuristic results being lower than results obtained based on current optimal operation knowledge, under the same basic working condition;

7. Acquiring current values of temperature after first-pass feeding, composition of crude copper, first-pass copper quantity, first-pass feeding duration, pre-oxidization duration, temperature after second-pass feeding, second-pass copper quantity, temperature before oxidization, initial sample after oxidization, oxidization duration (including slagging), oxidization end temperature, slagging quantity, desulfurization suspend time, and copper sample before reduction, that is, acquiring a current basic working condition;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; detecting the emergency trigger condition and the isolation condition during the waiting process; if the isolation condition is met, returning heuristic data to a previous value by means of a revertive control mechanism; and

10. Checking whether the end condition is met; if not, returning to Step 7.

Embodiment 62: Operation optimization of converter for copper smelting

The machine heuristic learning method for operation behavior record management in Embodiment 1 is applied to an operation process of a converter for copper smelting. The process of this scenario is as follows:

Copper concentrate is dried with steam, flash-smelted, blow-melted through P-S converters, and refined through a rotary anode furnace. The flash smelting technique is used to process copper concentrate to product high-grade matte, the matte in a flash furnace is discharged into a matte ladle through a runner, then the matte ladle is conveyed to the converters through two 85-ton crane, three 260-ton P-S converters are used for blow-smelting to produce crude copper with a copper content over 98%. The crude copper is then refined in the anode furnace and is finally cast into an anode plate through an M18 double-plate casting machine. Slag in the flash furnace and slag in the converters are conveyed into a slag flotation workshop slag ladles to be processed, and slag concentrate is returned to the flash furnace to be smelted again. When copper is processed in the converters, matte is used as the raw material and is oxidized into crude copper through oxygen injection and material feeding, the temperature in the blow-smelting process may fluctuate due to different operations (oxygen injection and material feeding), and the blow-smelting process in the converters is very sensitive to the stability of temperature, so the stability of temperature is of great significance for the smelting time.

This scenario mainly has the following attributes:

Basic working condition: matte quantity, matte composition, and matte temperature;

Operation data: feed quantity of auxiliary materials such as quartz, solid beryllium and scrap copper, air volume, oxygen consumption, and blowing time;

Optimization objective: to reduce the overall smelting time of converters;

Optimization constraint condition: the composition of crude copper is up to standard;

The process of this scenario:

1. Setting upper and lower limits, namely safety ranges, of the feed quantity of auxiliary materials such as quartz, the solid beryllium and scrap copper, the air volume, the oxygen consumption, and the blowing time;
2. Setting a reaction time;
3. Setting an isolation condition: the composition of crude copper being up to the quality standard;
4. Setting an emergency trigger condition: no safety problem, not needed;
5. Setting an emergency plan: giving an alarm, and handling according to an actual situation;
6. Setting a heuristic end condition: successive N heuristic results being lower than results obtained based on current optimal operation knowledge, under the same basic working condition;
7. Acquiring current values of the matte quantity, the matte composition, and the matte temperature, that is, acquiring a current basic working condition;
8. Randomly selecting one operation item from the operation data, randomly generating a new operation item within the safety range of the operation item, writing the new operation item into a control system, and automatically executing the new operation item by the device;
9. Waiting to the end of the reaction according to a waiting time; detecting the emergency trigger condition and the isolation condition during the waiting process; if the isolation condition is met, returning heuristic data to a previous value by means of a revertive control mechanism; and
10. Checking whether the end condition is met; if not, returning to Step 7.

Embodiment 63: Control of electrolysis operation of copper smelting

The machine heuristic learning method for operation behavior record management in Embodiment 1 is applied to an electrolysis process of copper smelting. The process of this scenario is as follows:

Copper electrolysis is an operation process for supplying DC current by placing an anode plate and a cathode plate in an electrolyte. To ensure good growth of copper on the cathode plate, corresponding additives, such as thiourea and osseocolla, are added into the electrolyte, and different additive ratios will achieve different copper adhesion effect on the cathode plate. During electrorefining, an electrolysis operation experience library is formed by collecting electrolysis-related historical data (anode composition, chemical composition of electrolytes, temperature of electrolytes, circulating speed of electrolytes, current density, the ratio of additives such as osseocolla/thiourea/hydrochloric acid, and addition of additives). Operations (control of the ratio and addition of additives) with the highest level-A proportion of the cathode plate under the same historical condition are searched for, to the quality of electrolytic copper under the precondition of reasonable power consumption.

This scenario mainly has the following attributes:

Basic working condition: anode composition, chemical composition of electrolytes, temperature of electrolytes, circulating speed of electrolytes, and current density;

Operation data: ratio of additives such as osseocolla/thiourea/hydrochloric acid, and addition of additives;

Optimization objective: to improve the quality of electrolytic copper (highest level-A proportion of the cathode plate);

Optimization constraint condition: the power consumption is less than a configured value.

The process of this scenario:

1. Setting upper and lower limits, namely safety ranges, of the ratio of additives such as osseocolla/thiourea/hydrochloric acid, and the addition of additives;

2. Setting a reaction time;

3. Setting an isolation condition: the power consumption being less than a configured value;

4. Setting an emergency trigger condition: no safety problem, not needed;

5. Setting an emergency plan: giving an alarm, and handling according to an actual situation;

6. Setting a heuristic end condition: successive N heuristic results being lower than results obtained based on current optimal operation knowledge, under the same basic working condition;

7. Acquiring current values of the chemical composition of electrolytes, temperature of electrolytes, circulating speed of electrolytes, and current density, that is, acquiring a current basic working condition;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; detecting the emergency trigger condition and the isolation condition during the waiting process; if the isolation condition is met, returning heuristic data to a previous value by means of a revertive control mechanism; and

10. Checking whether the end condition is met; if not, returning to Step 7.

Embodiment 64: Control of acid-making conversion

The machine heuristic learning method for operation behavior record management in Embodiment 1 is applied to an acid-making conversion. The process of this scenario is as follows:

In an acid plant, sulfur dioxide flue gas is purified (including cooling, dedusting and demisting), then dried, and converted and absorbed to form sulfuric acid, desulfurization of off-gas is controlled through the variable frequency of a hydrogen peroxide metering pump, and the variable frequency and the outlet SO2 concentration are linked to automatically control hydrogen peroxide added into a tower, so as to control the concentration within 0.05%-0.1%.

This scenario mainly has the following attributes:

Basic working condition: inlet air pressure, inlet flue gas flow rate, inlet O2 concentration, inlet SO2 concentration, inlet temperature, opening degree of valve 2602, inlet temperature t2 of first layer of catalyst, outlet temperature t2 of first layer of catalyst, inlet temperature t2 of second layer of catalyst, outlet temperature t2 of second layer of catalyst, inlet temperature t2 of third layer of catalyst, outlet temperature t2 of third layer of catalyst, inlet temperature t2 of fourth layer of catalyst, outlet temperature t2 of fourth layer of catalyst, pre-transform inlet temperature, pre-transform outlet temperature, outlet/inlet temperature t2 of first layer of converter, outlet/inlet temperature t2 of second layer of converter, inlet temperature t2 of third layer of converter, inlet temperature t2 of fourth layer of converter, inlet temperature t2 of first absorption tower, and outlet temperature t2 of first absorption tower;

Operation data: opening degree of valve 2604, opening degree of valve 2607, opening degree of valve 2610, opening degree of valve 2617, and opening degree of valve 2602;

Optimization objective: to increase the conversion rate of sulfur dioxide;

Optimization constraint condition: the inlet temperature t2 of first layer of catalyst, the outlet temperature t2 of first layer of catalyst, the inlet temperature t2 of second layer of catalyst, the outlet temperature t2 of second layer of catalyst, the inlet temperature t2 of third layer of catalyst, the outlet temperature t2 of third layer of catalyst, the inlet temperature t2 of fourth layer of catalyst, the outlet temperature t2 of fourth layer of catalyst, the outlet/inlet temperature t2 of first layer of converter, and the outlet/inlet temperature t2 of second layer of converter will not out of set ranges within 60s after operation.

The process of this scenario:

1. Setting upper and lower limits, namely safety ranges, of the opening degree of valve 2604, the opening degree of valve 2607, the opening degree of valve 2610, the opening degree of valve 2617, and the opening degree of valve 2602;

2. Setting a reaction time;

3. Setting an isolation condition: the inlet temperature t2 of first layer of catalyst, the outlet temperature t2 of first layer of catalyst, the inlet temperature t2 of second layer of catalyst, the outlet temperature t2 of second layer of catalyst, the inlet temperature t2 of third layer of catalyst, the outlet temperature t2 of third layer of catalyst, the inlet temperature t2 of fourth layer of catalyst, the outlet temperature t2 of fourth layer of catalyst, the outlet/inlet temperature t2 of first layer of converter, and the outlet/inlet temperature t2 of second layer of converter will not out of set ranges within 60s after operation not exceeding configured ranges;

4. Setting an emergency trigger condition: no safety problem, not needed;

5. Setting an emergency plan: giving an alarm, and handling according to an actual situation;

6. Setting a heuristic end condition: successive N heuristic results being lower than results obtained based on current optimal operation knowledge, under the same basic working condition;

7. Acquiring current values of the inlet air pressure, inlet flue gas flow rate, inlet O2 concentration, inlet SO2 concentration, inlet temperature, opening degree of valve 2602, inlet temperature t2 of first layer of catalyst, outlet temperature t2 of first layer of catalyst, inlet temperature t2 of second layer of catalyst, outlet temperature t2 of second layer of catalyst, inlet temperature t2 of third layer of catalyst, outlet temperature t2 of third layer of catalyst, inlet temperature t2 of fourth layer of catalyst, outlet temperature t2 of fourth layer of catalyst, pre-transform inlet temperature, pre-transform outlet temperature, outlet/inlet temperature t2 of first layer of converter, outlet/inlet temperature t2 of second layer of converter, inlet temperature t2 of third layer of converter, inlet temperature t2 of fourth layer of converter, inlet temperature t2 of first absorption tower, and outlet temperature t2 of first absorption tower that is, acquiring a current basic working condition;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; detecting the emergency trigger condition and the isolation condition during the waiting process; if the isolation condition is met, returning heuristic data to a previous value by means of a revertive control mechanism; and

10. Checking whether the end condition is met; if not, returning to Step 7.

Embodiment 65: Control of moisture content of loosening outlet

The machine heuristic learning method for operation behavior record management in Embodiment 1 is applied to a control process of the moisture content of a loosening outlet. The process of this scenario is as follows:

After tobacco is cut into tobacco slices, loosening and conditioning are performed to increase the moisture content and temperature of the tobacco slices, improve the processibility of the tobacco slices and loosen the tobacco slices. Generally, the moisture content of a loosening outlet is made to reach a target value by adjusting the additive proportion of water.

This scenario mainly has the following attributes:

Basic working condition: material mark, return air temperature, material flow rate (loosening), additive proportion (loosening), loosening environmental humidity, loosening environmental temperature, and atmospheric temperature and humidity (during loosening);

Operation data: additive proportion of water;

Optimization objective: to accurately control the moisture content of the loosening outlet (closer to a target center value);

Optimization constraint condition: the moisture content of the loosening outlet meets a configured value.

The process of this scenario:

1. Setting upper and lower limits, namely safety ranges, of the additive proportion of water;

2. Setting a reaction time;

3. Setting an isolation condition: the moisture content of the loosening outlet being between set upper and lower limits;

4. Setting an emergency trigger condition: no safety problem, not needed;

5. Setting an emergency plan: giving an alarm, and handling according to an actual situation;

6. Setting a heuristic end condition: successive N heuristic results being lower than results obtained based on current optimal operation knowledge, under the same basic working condition;

7. Acquiring current values of the additive proportion of water, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; detecting the emergency trigger condition and the isolation condition during the waiting process; if the emergency trigger condition is met, starting the emergency plan;

if the isolation condition is met, returning heuristic data to a previous value by means of a revertive control mechanism; and

10. Checking whether there is an end signal; if not, returning to Step 7.

Embodiment 66: Control of moisture content of conditioning inlet

The machine heuristic learning method for operation behavior record management in Embodiment 1 is applied to a control process of the moisture content of a conditioning inlet. The process of this scenario is as follows:

In order to remove unpleasant odor in tobacco slices, the slices are uniformly mixed and alcoholize (pre-mixing cabinet) after being loosened and conditioned; in the pre-mixing cabinet, the moisture content of the conditioning inlet is accurately controlled by adjusting the temperature and humidity of the air-conditioner; and in case of excessive dehumidification, the humidity can be compensated in the pre-mixing cabinet by supplementing steam.

This scenario mainly has the following attributes:

Basic working condition: moisture content of the conditioning outlet, and duration in the pre-mixing cabinet;

Operation data: temperature of the air-conditioner (pre-mixing cabinet), humidity of the air-conditioner (pre-mixing cabinet), and steam proportion (pre-mixing cabinet);

Optimization objective: to accurately control the moisture content of the conditioning inlet (closer to a target center value);

Optimization constraint condition: the moisture content of the conditioning inlet meets a configured value.

The process of this scenario:

1. Setting upper and lower limits, namely safety ranges, of the temperature of the air-conditioner (pre-mixing cabinet), humidity of the air-conditioner (pre-mixing cabinet), and steam proportion (pre-mixing cabinet) in the loosening stage;
2. Setting a reaction time;
3. Setting an isolation condition: the moisture content of the conditioning inlet being between set upper and lower limits;
4. Setting an emergency trigger condition: no safety problem, not needed;
5. Setting an emergency plan: giving an alarm, and handling according to an actual situation;
6. Setting a heuristic end condition: successive N heuristic results being lower than results obtained based on current optimal operation knowledge, under the same basic working condition;
7. Acquiring current values of the temperature of the air-conditioner (pre-mixing cabinet), humidity of the air-conditioner (pre-mixing cabinet), and steam proportion (pre-mixing cabinet) in the loosening stage, that is, acquiring current operation data;
8. Randomly selecting one operation item from the operation data, randomly generating a new operation item within the safety range of the operation item, writing the new operation item into a control system, and automatically executing the new operation item by the device;
9. Waiting to the end of the reaction according to a waiting time; detecting the emergency trigger condition and the isolation condition during the waiting process; if the emergency trigger condition is met, starting the emergency plan; if the isolation condition is met, returning heuristic data to a previous value by means of a revertive control mechanism; and
10. Checking whether there is an end signal; if not, returning to Step 7.

Embodiment 67: Control of moisture content of conditioning outlet

The machine heuristic learning method for operation behavior record management in Embodiment 1 is applied to a control process of the moisture content of a conditioning outlet. The process of this scenario is as follows:

In this stage, mixed and alcoholize (pre-mixing cabinet) tobacco slices are conditioned and added with materials, and the moisture content of the conditioning outlet can be accurately controlled by adjusting the steam compensation proportion.

This scenario mainly has the following attributes:

Basic working condition: moisture content of conditioning inlet, flow rate of materials, additive proportion of materials, addition environmental temperature, addition environmental humidity, and atmospheric temperature and humidity (during conditioning);

Operation data: steam compensation proportion in the conditioning stage;

Optimization objective: to accurately control the moisture content of the conditioning outlet (closer to a target center value);

Optimization constraint condition: the moisture content of the conditioning outlet meets a configured value;

The process of this scenario:

1. Setting upper and lower limits, namely a safely range, of the steam compensation proportion in the conditioning stage;

2. Setting a reaction time;

3. Setting an isolation condition: the moisture content of the conditioning outlet being between set upper and lower limits;

4. Setting an emergency trigger condition: no safety problem, not needed;

5. Setting an emergency plan: giving an alarm, and handling according to an actual situation;

6. Setting a heuristic end condition: successive N heuristic results being lower than results obtained based on current optimal operation knowledge, under the same basic working condition;

7. Acquiring current values of the steam compensation proportion in the conditioning stage, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; detecting the emergency trigger condition and the isolation condition during the waiting process; if the emergency trigger condition is met, starting the emergency plan; if the isolation condition is met, returning heuristic data to a previous value by means of a revertive control mechanism; and

10. Checking whether there is an end signal; if not, returning to Step 7.

Embodiment 68: Control of moisture content of drying inlet

The machine heuristic learning method for operation behavior record management in Embodiment 1 is applied to a control process of the moisture content of a drying inlet. The process of this scenario is as follows:

After being conditioned, tobacco slices are subjected to strip bulking and alcoholization (storage cabinet) and then enter a dryer. The moisture content of a drying inlet is accurately controlled by adjusting the temperature and humidity of an air-conditioner in the storage cabinet, and in case of excessive dehydration, moisture can be compensated by supplementing steam in the storage cabinet.

This scenario mainly has the following attributes:

Basic working condition: moisture content of a conditioning outlet, and duration in the storage cabinet;

Operation data: temperature of the air-conditioner (storage cabinet), humidity of the air-conditioner (storage cabinet), and steam proportion (storage cabinet);

Optimization objective: to accurately control the moisture content of the drying inlet (closer to a target center value);

Optimization constraint condition: the moisture content of the drying inlet meets a configured value.

The process of this scenario:

1. Setting upper and lower limits, namely safety ranges, of the temperature of the air-conditioner (storage cabinet), the humidity of the air-conditioner (storage cabinet), and the steam proportion (storage cabinet);

2. Setting a reaction time;

3. Setting an isolation condition: the moisture content of the drying inlet being between set upper and lower limits;

4. Setting an emergency trigger condition: no safety problem, not needed;

5. Setting an emergency plan: giving an alarm, and handling according to an actual situation;

6. Setting a heuristic end condition: successive N heuristic results being lower than results obtained based on current optimal operation knowledge, under the same basic working condition;

7. Acquiring current values of the temperature of the air-conditioner (storage cabinet), the humidity of the air-conditioner (storage cabinet), and the steam proportion (storage cabinet), that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; detecting the emergency trigger condition and the isolation condition during the waiting process; if the emergency trigger condition is met, starting the emergency plan; if the isolation condition is met, returning heuristic data to a previous value by means of a revertive control mechanism; and

10. Checking whether there is an end signal; if not, returning to Step 7.

Embodiment 69: Control of cut-tobacco mixing

The machine heuristic learning method for operation behavior record management in Embodiment 1 is applied to a control process of cut-tobacco mixing. The process of this scenario is as follows:

Cut tobacco produced on a large line, cut tobacco produced on a small line, and cut tobacco produced on a stem line are accurately and evenly mixed according to design requirements of a product formula; due to the fact that the production of the small line and the production of the stem line are asynchronous to the production of the large line, the cut tobacco produced on the small line and the stem line enter a module cabinet to wait for the cut tobacco produced on the large line and then pre-mixed and blended with the cut tobacco produced on the large line, and moisture in the cut tobacco produced on the small line and the stem line may be lost in the waiting process, so although the water content of the drying outlets of these lines is up to the process standard, the moisture content after blending may be not up to the process standard. In view of this, set values of the moisture contents of the drying outlets of the small line and the stem line can be controlled to make the moisture content after blending meet requirements. Then, aromatic substances are accurately and evenly applied to the cut tobacco according to product design requirements, and all these materials are further mixed evenly. To allow the cut tobacco to absorb the aromatic substances and balance the moisture content and temperature of the cut tobacco, strip bulking needs to be performed after the aromatic substances are added into the cut tobacco.

This scenario mainly has the following attributes:

Basic working condition: material mark, atmospheric temperature and humidity after drying and before aromatizing, temperature and humidity of the module cabinet, flow rate of materials on the small line and residence time in the cabinet, temperature and humidity in the mixing cabinet, moisture after drying of the large line, temperature and humidity of a cut stem cabinet, and flow rate of materials on the stem line and residence time in the cabinet;

Operation data: set moisture value of the dryer outlet of the small line, and set moisture value of the dryer outlet of the stem line;

Optimization objective: to accurately control the moisture content of cut tobacco after aromatizing (closer to a target center value);

Optimization constraint condition: the moisture content of cut tobacco after aromatizing meets a configured value.

The process of this scenario:

1. Setting upper and lower limits, namely safety ranges, of the set moisture value of the dryer outlet of the small line, and set moisture value of the dryer outlet of the stem line;
2. Setting a reaction time;
3. Setting an isolation condition: the moisture content of cut tobacco after aromatizing being between set upper and lower limits;
4. Setting an emergency trigger condition: no safety problem, not needed;
5. Setting an emergency plan: giving an alarm, and handling according to an actual situation;
6. Setting a heuristic end condition: successive N heuristic results being lower than results obtained based on current optimal operation knowledge, under the same basic working condition;
7. Acquiring current values of the material mark, the atmospheric temperature and humidity after drying and before aromatizing, the temperature and humidity of the module cabinet, the flow rate of materials on the small line and the residence time in the cabinet, the temperature and humidity in the mixing cabinet, the moisture after drying of the large line, the temperature and humidity of a cut stem cabinet, and the flow rate of materials on the stem line and the residence time in the cabinet, that is, acquiring current operation data;
8. Randomly selecting one operation item from the operation data, randomly generating a new operation item within the safety range of the operation item, writing the new operation item into a control system, and automatically executing the new operation item by the device;
9. Waiting to the end of the reaction according to a waiting time; detecting the emergency trigger condition and the isolation condition during the waiting process; if the emergency trigger condition is met, starting the emergency plan; if the isolation condition is met, returning heuristic data to a previous value by means of a revertive control mechanism; and
10. Checking whether there is an end signal; if not, returning to Step 7.

Embodiment 70: Control of emery-saving of boiler

The machine heuristic learning method for operation behavior record management in Embodiment 1 is applied to an energy-saving control process of a boiler. Referring to FIG. 6, the process of this scenario is as follows:

The steam boiler is an industrial boiler for heating water to a certain parameter to generate high-temperature steam, water is heated in the boiler to change into steam, and a flame generates heat in a hearth; the basic principle of the steam boiler is similar to water boiling, the boiler is equivalent to a kettle, and the furnace is equivalent to a stove. The heating device (burner) release heat that is absorbed by a water-cooled wall through radiative heat transfer, water on the water-cooled water boils and is vaporized to generate a large amount of steam, that enters a steam pocket for steam-water separation, saturated steam enters a super-heater, and superheated steam further absorbs heat of flue gas at the top of the hearth, in a horizontal flue and a tail flue through radiation and convection to reach a desired working temperature.

This scenario mainly has the following attributes:

Basic working condition: atmospheric temperature, boiler body temperature, feed water temperature, hot air temperature, water level of the boiler, outlet steam flow of the boiler, outlet steam temperature of the boiler, outlet temperature of an air pre-heater;

Operation data: opening degree of fuel valve, opening degree of air valve, opening degree of burner, and opening degree of water valve;

Optimization objective: to make the unit fuel consumption as low as possible;

Optimization constraint condition: safe production and reasonable load condition (maximum steam pressure, recoverable water quantity, and furnace draft).

The process of this scenario:

1. Setting upper and lower limits, namely safety ranges, of the opening degree of fuel valve, the opening degree of air valve, the opening degree of burner, and the opening degree of water valve;
2. Setting a reaction time;
3. Setting an isolation condition: the safe production and reasonable load condition (maximum steam pressure, recoverable water quantity, and furnace draft) being between set upper and lower limits;
4. Setting an emergency trigger condition: no safety problem, not needed;
5. Setting an emergency plan: giving an alarm, and handling according to an actual situation;
6. Setting a heuristic end condition: successive N heuristic results being lower than results obtained based on current optimal operation knowledge, under the same basic working condition;
7. Acquiring current values of the opening degree of fuel valve, the opening degree of air valve, the opening degree of burner, and the opening degree of water valve, that is, acquiring current operation data;
8. Randomly selecting one operation item from the operation data, randomly generating a new operation item within the safety range of the operation item, writing the new operation item into a control system, and automatically executing the new operation item by the device;
9. Waiting to the end of the reaction according to a waiting time; detecting the emergency trigger condition and the isolation condition during the waiting process; if the emergency trigger condition is met, starting the emergency plan; if the isolation condition is met, returning heuristic data to a previous value by means of a revertive control mechanism; and
10. Checking whether there is an end signal; if not, returning to Step 7.

Embodiment 71: Control of energy-saving of air-conditioner

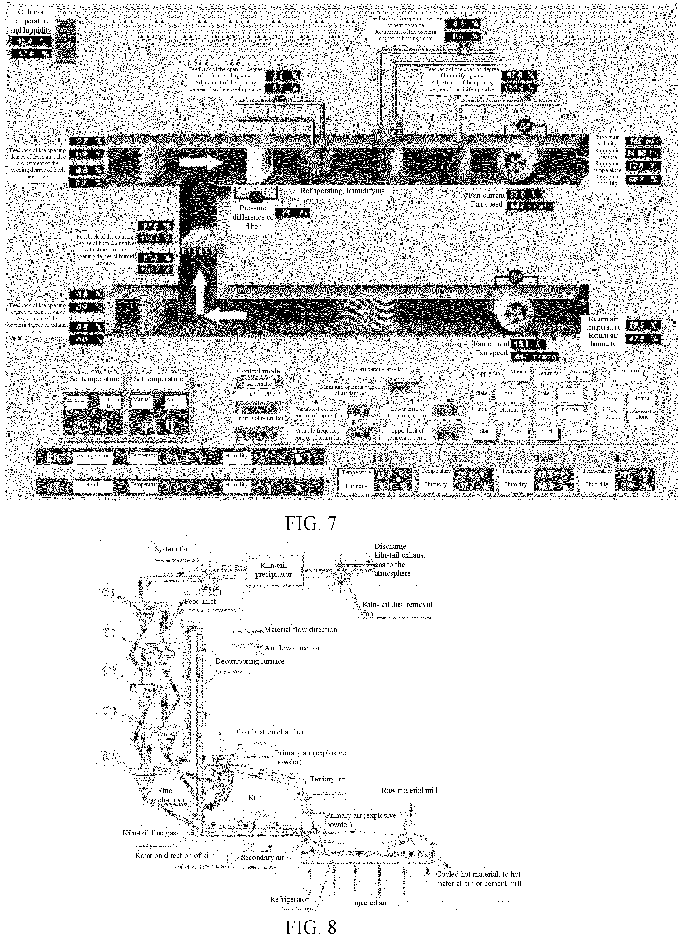

The machine heuristic learning method for operation behavior record management in Embodiment 1 is applied to a control process for energy-saving of an air-conditioner. Referring to FIG. 7, the process of this scenario is as follows:

An a centralized air-conditioning system, one part of return air is mixed with fresh air, so that the freshness of indoor air is guaranteed, the energy of return air is used, and equipment can operate more economically. The system generally comprises an air inlet part, an air return part, an air filtering part, an air humidifying part, an air delivery part, and the like. In a normal working process, fresh air is mixed with return air, and after being filtered by a filter, mixed air exchanges heat with cold/hot water in a coiler. The mixed air is humidified by a humidifier, and is then supplied to different areas by supply fans. The opening degree of an exhaust valve, the opening degree of a fresh air valve, the opening degree of a return air valve can be adjusted to optimize the proportion of fresh air and return air so as to minimize the unit power consumption of the air-conditioning system, and the opening degree of a surface cooling valve, the opening degree of a heating valve and the opening degree of a humidifying valve can be adjusted to cool, heat and humidify the mixed air.

This scenario mainly has the following attributes:

Basic working condition: fresh air temperature, fresh air humidity, return air temperature, return air humidity, state of filter screen, front-back pressure difference of filter, supply air temperature, and supply air humidity;

Operation data: opening degree of the exhaust valve, opening degree of the fresh air valve, opening degree of the return air valve, opening degree of the surface cooling valve, opening degree of the heating valve, and opening degree of the humidifying valve;

Optimization objective: to make the unit power consumption of the air-conditioning system as low as possible;

Optimization constraint condition: the environmental temperature and humidity of all processes are up to process standards, for example, tobacco should be stored under certain temperature and humidity conditions after being cured.

The process of this scenario:

1. Setting upper and lower limits, namely safety ranges, of the opening degree of the exhaust valve, the opening degree of the fresh air valve, the opening degree of the return air valve, the opening degree of the surface cooling valve, the opening degree of the heating valve, and the opening degree of the humidifying valve;

2. Setting a reaction time;

3. Setting an isolation condition: the environmental temperature and humidity of all processes being between set upper and lower limits;

4. Setting an emergency trigger condition: no safety problem, not needed;

5. Setting an emergency plan: giving an alarm, and handling according to an actual situation;

6. Setting a heuristic end condition: successive N heuristic results being lower than results obtained based on current optimal operation knowledge, under the same basic working condition;

7. Acquiring current values of the opening degree of the exhaust valve, the opening degree of the fresh air valve, the opening degree of the return air valve, the opening degree of the surface cooling valve, the opening degree of the heating valve, and the opening degree of the humidifying valve, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; detecting the emergency trigger condition and the isolation condition during the waiting process; if the emergency trigger condition is met, starting the emergency plan; if the isolation condition is met, returning heuristic data to a previous value by means of a revertive control mechanism; and

10. Checking whether there is an end signal; if not, returning to Step 7.

Embodiment 72: Control of adjustment of proportion of cement raw materials

The machine heuristic learning method for operation behavior record management in Embodiment 1 is used for adjusting the proportion of cement raw materials. The process of this scenario is as follows:

In cement plants, limestone, clay, iron powder, and sandstone are generally used as raw materials for producing cement; the four raw materials are mixed in certain proportion, conveyed through a belt weigher into a mill to be milled. The feed quantity of the raw materials is adjusted according to the lime saturation coefficient, silica modulus and aluminum-oxygen modulus of the raw materials sampled for measurement. The feed quantity of the raw material is adjusted to control the mixing effect of the raw materials, so as to increase of the qualification rate of the raw materials on the basis of meeting production process conditions.

This scenario mainly has the following attributes:

Basic working condition: lime saturation coefficient, silica modulus and aluminum-oxygen modulus;

Operation data: feed rate of limestone, feed rate of clay, feed rate of iron powder, and feed rate of sandstone;

Optimization objective: to increase the qualification rate of the raw materials;

Optimization constraint condition: current in material bins.

The process of this scenario:

1. Setting upper and lower limits, namely safety ranges, of the lime saturation coefficient, the silica modulus and the aluminum-oxygen modulus;

2. Setting a reaction time;

3. Setting an isolation condition: current in material bins being between set upper and lower limits.

4. Setting an emergency trigger condition: no safety problem, not needed;

5. Setting an emergency plan: giving an alarm, and handling according to an actual situation;

6. Setting a heuristic end condition: successive N heuristic results being lower than results obtained based on current optimal operation knowledge, under the same basic working condition;

7. Acquiring current values of the feed rate of limestone, feed rate of clay, feed rate of iron powder, and feed rate of sandstone, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; if the isolation condition is met, returning heuristic data to a previous value by means of a revertive control mechanism; and
10. Checking whether the end condition is met; if not, returning to Step 7.

Embodiment 73: Control of vertical milling operation

The machine heuristic learning method for operation behavior record management in Embodiment 1 is used for vertical milling of cement raw materials. The process of this scenario is as follows:
In a raw material milling workshop, raw materials are milled to be finer to guarantee high-quality mixing. Fine raw material powder is screened out by a powder concentrator to be used as the cement raw material and is conveyed into a raw meal homogenizing silo, and coarse powder is conveyed back to the mill to be milled again. Control of the mill, the powder concentrator and the fan has a direct influence on the power consumption of the mill.
This scenario mainly has the following attributes:
Basic working condition: given feed quantity, auxiliary material proportion (limestone, low sulfur, high sulfur, rejects, and calcareous mine waste), rotational speed of the powder concentrator, rotational speed of the exhaust fan at the kiln tail, and outlet humidity of the humidifier tower;
Operation data: milling pressure of the mill, opening degree of inlet hot air valve of the mill, opening degree of inlet cold air valve of the mill, variable-frequency rotational speed of circulating fan, and opening degree of circulating air valve;
Optimization objective: to minimize the unit power consumption of the vertical mill under the condition that the outlet dust granularity is up to standard;
Optimization constraint condition: current of warehousing elevator, vibration of the mill, current of the powder concentrator, inlet negative pressure of the mill, outlet negative pressure of the mill, inlet temperature of the mill, outlet temperature of the mill, feedback value of feed quantity, and return material lifting current.
The process of this scenario:

1. Setting upper and lower limits, namely safety ranges, of the milling pressure of the mill, opening degree of inlet hot air valve of the mill, opening degree of inlet cold air valve of the mill, variable-frequency rotational speed of circulating fan, and opening degree of circulating air valve;
2. Setting a reaction time;
3. Setting an isolation condition: the current of warehousing elevator, vibration of the mill, current of the powder concentrator, inlet negative pressure of the mill, outlet negative pressure of the mill, inlet temperature of the mill, outlet temperature of the mill, feedback value of feed quantity, and return material lifting current being between set upper and lower limits.
4. Setting an emergency trigger condition: no safety problem, not needed;
5. Setting an emergency plan: giving an alarm, and handling according to an actual situation;
6. Setting a heuristic end condition: successive N heuristic results being lower than results obtained based on current optimal operation knowledge, under the same basic working condition;
7. Acquiring current values of the milling pressure of the mill, opening degree of inlet hot air valve of the mill, opening degree of inlet cold air valve of the mill, variable-frequency rotational speed of circulating fan, and opening degree of circulating air valve, that is, acquiring current operation data;
8. Randomly selecting one operation item from the operation data, randomly generating a new operation item within the safety range of the operation item, writing the new operation item into a control system, and automatically executing the new operation item by the device;
9. Waiting to the end of the reaction according to a waiting time; if the isolation condition is met, returning heuristic data to a previous value by means of a revertive control mechanism; and
10. Checking whether the end condition is met; if not, returning to Step 7.

Embodiment 74: Control of homogenization of raw materials

The machine heuristic learning method for operation behavior record management in Embodiment 1 is applied to the homogenization process of cement raw materials. The process of this scenario is as follows:
In order to avoid or alleviate product quality fluctuations caused by fluctuations of raw materials homogenization of raw materials is needed. In the homogenization process, raw materials are stirred by air and generate a funneling effect under gravity, so that raw powder can be cut into multiple material layers to be fully mixed when falling down. By means of different fluidization air, parallel material layers in a homogenization silo are fluidized and expanded to different extends, materials in some areas are discharged, and materials in some areas are fluidized, so that the material layers in the bin tilt to allow materials to be mixed and homogenized in the vertical direction. In order to ensure that raw materials in the kiln are highly uniform in composition, the environment (flow valve, discharge time and air injection time) of the homogenization silo should be strictly controlled, and power consumption of equipment in the control process is high.

This scenario mainly has the following attributes:

Basic working condition: moisture in fed materials, rotational speed of an internal plenum box, and weight of raw materials in the homogenization silo;

Operation data: opening degree of flow valve in a sector area, elevator current, discharge time, and opening degree of flow valve on conveying side of the bottom of the homogenization silo;

Optimization objective: to minimize the unit power consumption of the homogenization silo;

Optimization constraint condition: inflation pressure in the homogenization silo.

The process of this scenario:

1. Setting upper and lower limits, namely safety ranges, of the opening degree of flow valve in a sector area, elevator current, discharge time, and opening degree of flow valve on conveying side of the bottom of the homogenization silo;
2. Setting a reaction time;
3. Setting an isolation condition: the inflation pressure in the homogenization silo and the weight of raw materials in the homogenization silo being between set upper and lower limits;
4. Setting an emergency trigger condition: no safety problem, not needed;
5. Setting an emergency plan: giving an alarm, and handling according to an actual situation;
6. Setting a heuristic end condition: successive N heuristic results being lower than results obtained based on current optimal operation knowledge, under the same basic working condition;
7. Acquiring current values of the opening degree of flow valve in a sector area, elevator current, discharge time, and opening degree of flow valve on conveying side of the bottom of the homogenization silo, that is, acquiring current operation data;
8. Randomly selecting one operation item from the operation data, randomly generating a new operation item within the safety range of the operation item, writing the new operation item into a control system, and automatically executing the new operation item by the device;
9. Waiting to the end of the reaction according to a waiting time; if the isolation condition is met, returning heuristic data to a previous value by means of a revertive control mechanism; and
10. Checking whether the end condition is met; if not, returning to Step 7.

Embodiment 75: Control of preheating and decomposition

The machine heuristic learning method for operation behavior record management in Embodiment 1 is used for cement preheating and decomposition. Referring to FIG. 8, the process of this scenario is as follows:

The pre-heater can fulfill part of the functions of the rotary kiln to preheat and partially decompose raw materials, so as to decrease the length of the rotary kiln. In the pre-heater, materials fully exchange heat with air in a suspended state, so that heat efficiency can be effectively reduced, and energy consumption is reduced.

The cyclone pre-heater is used to preheat and pre-decompose cement raw materials by means of high-temperature flue gas in the tail of the rotary kiln, and cement raw materials can fully exchange heat with air by counter-flow and suspension heat exchange. The direction of the materials is opposite to the direction of the air flow, the air flow is from bottom to top, the material flow is from top to bottom, and the gas phase and the solid phase can exchange heat fully due to the special structure of a cyclone cylinder, to prepare for later cement sintering and decomposition. The air speed and temperature in the pre-heater have a direct influence on the preheating effect of the cement raw materials.

This scenario mainly has the following attributes:

Basic working condition: discharge rate of raw materials, outlet temperature of pre-heater C1/C2/C3/C4/C5, outlet negative pressure of pre-heater C1/C2/C3/C4/C5, inlet flue gas velocity of C5, inlet flue gas temperature of C5, and temperature of flue chamber at kiln tail;

Operation data: opening degree of air lock of pre-heater C1/C2/C3/C4/C5, opening degree of tertiary air valve, and coal feed quantity at kiln tail;

Optimization objective: to make the temperature of the pre-heater as closer as a target value;

Optimization constraint condition: outlet temperature of pre-heater, and negative pressure of conical section of C5.

The process of this scenario:

1. Setting upper and lower limits, namely safety ranges, of the opening degree of air lock of pre-heater C1/C2/C3/C4/C5, the opening degree of tertiary air valve, and the coal feed quantity at kiln tail;
2. Setting a reaction time;
3. Setting an isolation condition: the outlet temperature of pre-heater, and negative pressure of conical section of C5 being between set upper and lower limits;

4. Setting an emergency trigger condition: no safety problem, not needed;

5. Setting an emergency plan: giving an alarm, and handling according to an actual situation;

6. Setting a heuristic end condition: successive N heuristic results being lower than results obtained based on current optimal operation knowledge, under the same basic working condition;

7. Acquiring current values of opening degree of air lock of pre-heater C1/C2/C3/C4/C5, the opening degree of tertiary air valve, and the coal feed quantity at kiln tail, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; if the isolation condition is met, returning heuristic data to a previous value by means of a revertive control mechanism; and

10. Checking whether the end condition is met; if not, returning to Step 7.

Embodiment 76: Control of kiln operation

The machine heuristic learning method for operation behavior record management in Embodiment 1 is used for operation control of a rotary kiln. The process of this scenario is as follows:

When all raw materials are pre-decomposed and pre-heated in a pre-heater, the raw materials will be fired into cement clinker in a rotary kiln. In the rotary kiln, minerals in the cement clinker will turn into a liquid phase with the increase of the temperature of the materials, and a large amount of carbonate reacts with silicate, aluminate and ferrate to generate a large amount of new minerals, namely cement clinker. Extremely high temperature is needed to fire raw materials into cement clinker, so a large amount of coal and heat is consumed. The unit energy consumption of the rotary kiln can be reduced by reasonably control air, coal, material and kiln speed.

This scenario mainly has the following attributes:

Basic working condition: feed quantity of raw materials, outlet temperature of decomposing furnace, temperature of combustion zone, temperature of kiln-tail flue gas, and decomposing rate of raw materials in kiln;

Operation data: rotational speed of kiln, instantaneous coal feed rate of kiln head, rotational speed of exhaust fan, rotational speed of high-temperature fan, opening degree of tertiary air valve, and negative pressure of kiln head cover;

Optimization objective: to reduce the unit coal consumption of the rotary kiln;

Optimization constraint condition: rotational speed of kiln, temperature of rotary kiln, continuous runtime of kiln, and coal feed ratio of kiln head and kiln tail;

The process of this scenario:

Setting upper and lower limits, namely safety ranges, of the rotational speed of kiln, instantaneous coal feed rate of kiln head, rotational speed of exhaust fan, rotational speed of high-temperature fan, opening degree of tertiary air valve, and negative pressure of kiln head cover;

1. Setting a reaction time;

2. Setting an isolation condition: rotational speed of kiln, temperature of rotary kiln, continuous runtime of kiln, and coal feed ratio of kiln head and kiln tail;

3. Setting an emergency trigger condition: no safety problem, not needed;

5. Setting an emergency plan: giving an alarm, and handling according to an actual situation;

5. Setting a heuristic end condition: successive N heuristic results being lower than results obtained based on current optimal operation knowledge, under the same basic working condition;

6. Acquiring current values of the rotational speed of kiln, instantaneous coal feed rate of kiln head, rotational speed of exhaust fan, rotational speed of high-temperature fan, opening degree of tertiary air valve, and negative pressure of kiln head cover, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; if the isolation condition is met, returning heuristic data to a previous value by means of a revertive control mechanism; and

10. Checking whether the end condition is met; if not, returning to Step 7.

Embodiment 77: Control of cement grinding

The machine heuristic learning method for operation behavior record management in Embodiment 1 applied to a cement grinding process. The process of this scenario is as follows:

In this process, cement clinker is fully ground to proper granularity (represented by fineness, specific surface area or the like) to form a certain particle grade, and cement powder obtained after grinding is discharged from the tail of a grinder and is then conveyed to a powder concentrator through an elevator. The number of steel balls can be adjusted to increase the total area of steel balls, so as to improve the grinding effect of the steel balls on materials, and reduce power consumption per unit products. Under the same condition, the specific surface area of particles is almost in direct proportion to energy consumption.

This scenario mainly has the following attributes:

Basic working condition: feed quantity of materials, current of elevator, material level of weighing bin, and particle grade;

Operation data: fill rate of ball mill, air velocity in ball mill, rotational speed of powder concentrator, and air velocity of exhaust fan;

Optimization objective: to minimize the unit power consumption of the mill;

Optimization constraint condition: moisture in ground materials, and temperature in the mill;

The process of this scenario:

1. Setting upper and lower limits, namely safety ranges, of the fill rate of ball mill, air velocity in ball mill, rotational speed of powder concentrator, and air velocity of exhaust fan;
2. Setting a reaction time;
e mill being between set upper and lower limits;
4. Setting an emergency trigger condition: no safety problem, not needed;
5. Setting an emergency plan: giving an alarm, and handling according to an actual situation;
6. Setting a heuristic end condition: successive N heuristic results being lower than results obtained based on current optimal operation knowledge, under the same basic working condition;
7. Acquiring current values of the fill rate of ball mill, air velocity in ball mill, rotational speed of powder concentrator, and air velocity of exhaust fan, that is, acquiring current operation data;
8. Randomly selecting one operation item from the operation data, randomly generating a new operation item within the safety range of the operation item, writing the new operation item into a control system, and automatically executing the new operation item by the device;
9. Waiting to the end of the reaction according to a waiting time; if the isolation condition is met, returning heuristic data to a previous value by means of a revertive control mechanism; and
10. Checking whether the end condition is met; if not, returning to Step 7.

Embodiment 78: Control of dust removal

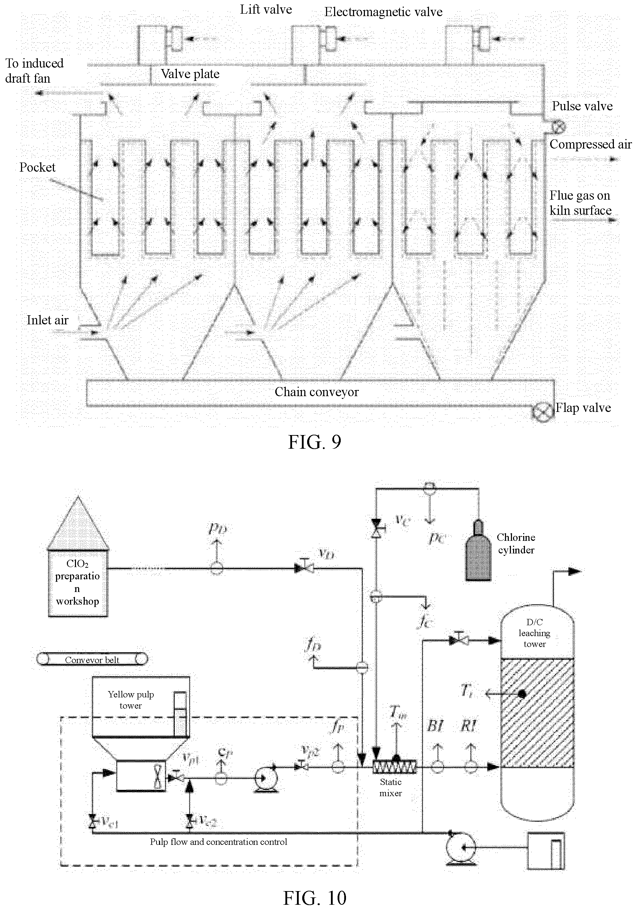

The machine heuristic learning method for operation behavior record management in Embodiment 1 is applied to a dust removal scenario. Referring to FIG. 9, the process of this scenario is as follows:

During cement production, a large amount of dust will be generated and needs to be processed by means of a bag-type dust removal device.

During work, dusty gas enters a dust hopper through an inlet duct, coarse dust particles directly fall to the bottom of the dust hopper, fine dust particles turn upwards along an air flow to enter a middle box and a lower box, the dust adheres to the outer surface of a filter bag, and filtered gas enters an upper box, then passes through a purified gas collection pipe and an outlet duct to finally discharged to the atmosphere through an exhaust fan. In the dust removal process, a purified gas outlet duct of the chamber is closed to stop air flow from flowing through the bag (air stop and dust removal are performed in the corresponding chamber). Then, a pulse valve is opened to remove dust through pulse-jet with compressed air, the cut-off valve is closed until dust stripped from the filter bag deposits into the dust hopper, to prevent dust stripped from the surface of the filter bag from adhering to the surface of an adjacent filter bag along with the air flow, so that dust in the filter bag is completely removed. In the dust removal process, the opening degree and speed of the fan valve and the current of the motor are adjusted to effectively reduce unit power consumption for dust removal.

This scenario mainly has the following attributes:

Basic working condition: dust removal capacity (flue gas rate*concentration), temperature in dust bag, and operating pressure difference of dust bag;

Operation data: opening degree of fan valve, filtering velocity of precipitator, pulse time of pulse valve, and pulse period of pulse valve;

Optimization objective: to reduce unit power consumption for dust removal;

Optimization constraint condition: nationally allowed dust emission.

The process of this scenario:

1. Setting upper and lower limits, namely safety ranges, of the opening degree of fan valve, the filtering velocity of precipitator, the pulse time of pulse valve, and the pulse period of pulse valve;

2. Setting a reaction time;

3. Setting an isolation condition: the nationally allowed dust emission being between set upper and lower limits;

4. Setting an emergency trigger condition: no safety problem, not needed;

5. Setting an emergency plan: giving an alarm, and handling according to an actual situation;

6. Setting a heuristic end condition: successive N heuristic results being lower than results obtained based on current optimal operation knowledge, under the same basic working condition;

7. Acquiring current values of the opening degree of fan valve, the filtering velocity of precipitator, the pulse time of pulse valve, and the pulse period of pulse valve, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; if the isolation condition is met, returning heuristic data to a previous value by means of a revertive control mechanism; and

10. Checking whether the end condition is met; if not, returning to Step 7.

Embodiment 79: Control of coal blending

The machine heuristic learning method for operation behavior record management in Embodiment 1 is applied to a scenario coal blending control. The process of this scenario is as follows:

Enterprises make a coal blending scheme according to basic information of purchased coal, blending combustion data, coal proportioning rules, and the like to make the parameters of mixed coal meet the requirements of production equipment such as a coal conveying system, a coal pulverizing system, a combustion system, and a dust and slag removal system, minimize the power generation cost and maximize the overall benefits. In this process, there are different quality requirements for coal with different basic information, and in most cases, coal blending is carried out based on experience, which consumes too much time and cost and cannot realize optimal coal blending. Optimal operation of coal blending can be realized by adjusting the proportion of different types of coal.

This scenario mainly has the following attributes:

Basic working condition: basic information (coal source, unit price, type, as received basis, volatiles, moisture content, ash content, sulfur content, and heating value) of purchased coal, and basic information of additives (type, unit price, and variety);

Operation data: adjust the quantity of different types of coal and the quantity of additives;

Optimization objective: to make the fuel cost as low as possible;

Optimization constraint condition: the heating value of coal meets boiler combustion demands.

The process of this scenario:

1. Setting upper and lower limits, namely safety ranges, of the quantity of different types of coal and the quantity of additives;

2. Setting a reaction time;

3. Setting an isolation condition: the heating value of coal being between set upper and lower limits.

4. Setting an emergency trigger condition: no safety problem, not needed;

5. Setting an emergency plan: giving an alarm, and handling according to an actual situation;

6. Setting a heuristic end condition: successive N heuristic results being lower than results obtained based on current optimal operation knowledge, under the same basic working condition;

7. Acquiring current values of the quantity of different types of coal and the quantity of additives, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; detecting the emergency trigger condition and the isolation condition during the waiting process; if the isolation condition is met, returning heuristic data to a previous value by means of a revertive control mechanism; and

10. Checking whether the end condition is met; if not, returning to Step 7.

Embodiment 80: Control of coal pulverizing

The machine heuristic learning method for operation behavior record management in Embodiment 1 is applied to a scenario of coal pulverizing control. The process of this scenario is as follows:

Materials fall into the center of a mill plate via an inlet, and hot air enters a mill via an air inlet. With the rotation of the mill, raw coal is squeezed and ground, and is finally pulverized into pulverized coal. Through the rotation of a grinding component, the coal powder is thrown into an air circulating chamber, hot air flowing through the air circulating chamber carries the coal powder to a coal powder separator on the upper portion of the coal mill, coarse coal powder is separated out to be milled again, qualified fine powder is discharged out of the mill along with the air flow, so that finished coal powder is obtained. In this process, the current load of unit and the air velocity of fan change frequency, which makes it impossible to obtain the optimal coal milling efficiency and increases power consumption. The opening degree of valves, the rotational speed of the mill plate and the rotation speed of the separator can be controlled to adjust the pulverizing efficiency of the coal mill and reduce unit power consumption of coal pulverizing.

This scenario mainly has the following attributes:

Basic working condition: coal type, rated value of coal feeder, current coal supply, current reserve of powder bin, coal level of coal mill, primary air temperature, primary air inlet pressure, pressure difference between seal air and primary air, outlet pressure of separator, air-powder mixture temperature of separator, pressure difference between primary air inlet and separator outlet, and rotational speed of mill separator;

Operation data: instantaneous coal supply, opening degree of primary hot air valve, opening degree of primary cold air valve, opening degree of seal air valve, adjustment of rotational speed of mill plate, and frequency of mill separator;

Optimization objective: to make the unit power consumption of coal pulverizing of the coal mill as low as possible;

Optimization constraint condition: the quality of coal powder meets boiler combustion demands.

The process of this scenario:

1. Setting upper and lower limits, namely safety ranges, of the instantaneous coal supply, opening degree of primary hot air valve, opening degree of primary cold air valve, opening degree of seal air valve, adjustment of rotational speed of mill plate, and frequency of mill separator;

2. Setting a reaction time;

3. Setting an isolation condition: pulverized coal particles being between set upper and lower limits.

4. Setting an emergency trigger condition: no safety problem, not needed;

5. Setting an emergency plan: giving an alarm, and handling according to an actual situation;

6. Setting a heuristic end condition: successive N heuristic results being lower than results obtained based on current optimal operation knowledge, under the same basic working condition;

7. Acquiring current values of the instantaneous coal supply, opening degree of primary hot air valve, opening degree of primary cold air valve, opening degree of seal air valve, adjustment of rotational speed of mill plate, and frequency of mill separator, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; detecting the emergency trigger condition and the isolation condition during the waiting process; if the isolation condition is met, returning heuristic data to a previous value by means of a revertive control mechanism; and

10. Checking whether the end condition is met; if not, returning to Step 7.

Embodiment 81: Control of boiler efficiency

The machine heuristic learning method for operation behavior record management in Embodiment 1 is applied to a scenario of boiler efficiency optimization.

The process of this scenario is as follows:

An air-powder mixture enters a hearth through a burner to be combusted, heat generated in the combustion process is transferred to water in a water pipe through heat exchange to generate saturated steam, which is then turned into superheated steam through a super-heater, and the superheated steam is conveyed to a steam turbine. Flue gas generated by combustion in the hearth enters air pre-heaters through an economizer, and is finally processed to be discharged to the atmosphere, and slag is processed with ash water and then discharged.

This scenario mainly has the following attributes:

Basic working condition: coal supply, heating value, granularity of coal powder, flow rate of all layers of primary air powder pipes, temperature of air-coal mixture, secondary hot air pressure of outlets of air pre-heaters, secondary hot air flow rate of outlets of air pre-heaters, secondary hot air temperature of outlets of air pre-heaters, feed water temperature, load condition, boiler water level, and main steam flow of boiler outlet;

Operation data: control of all layers of secondary control dampers, control of secondary control dampers of all layers of coal burners, and control of swing nozzles;

Optimization objective: to make the boiler efficiency as high as possible;

Optimization constraint condition: safe operation of equipment.

The process of this scenario:

1. Setting upper and lower limits, namely safety ranges, of control of all layers of secondary control dampers, control of secondary control dampers of all layers of coal burners, and control of swing nozzles

2. Setting a reaction time;

3. Setting an isolation condition: no extinguishment and coking in the hearth, and operating power of equipment being between set upper and lower limits;

4. Setting an emergency trigger condition: no safety problem, not needed;

5. Setting an emergency plan: giving an alarm, and handling according to an actual situation;

6. Setting a heuristic end condition: successive N heuristic results being lower than results obtained based on current optimal operation knowledge, under the same basic working condition;

7. Acquiring current values of control of all layers of secondary control dampers, control of secondary control dampers of all layers of coal burners, and control of swing nozzles, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; detecting the emergency trigger condition and the isolation condition during the waiting process; if the isolation condition is met, returning heuristic data to a previous value by means of a revertive control mechanism; and

10. Checking whether the end condition is met; if not, returning to Step 7.


Embodiment 82: Control of air volume

The machine heuristic learning method for operation behavior record management in Embodiment 1 is applied to a scenario of air volume control. The process of this scenario is as follows:

To ensure normal transport of fuel in the boiler, air required for fuel combustion needs to be continuously supplied into the hearth of the boiler, and combustion products should be timely discharged at the same time; flue gas generated by the boiler flows through air pre-heaters and electrostatic precipitators and then enters induced draft fans, and the induced draft fans conveys the flue gas to a desulfurization system or directly discharges the flue gas into a stack. The induced draft fans play a role of pumping glue gas out of the boiler to maintain a negative pressure of the boiler.

This scenario mainly has the following attributes:

Basic working condition: air supply, power of blower, negative pressure of hearth, resistance of boiler body, resistance of economizer, resistance of pre-heater, resistance of precipitator, resistance of desulfurization device, resistance of stack, and resistance of flue;

Operation data: power of induced draft fans, air volume of induced draft fans, and air pressure of induced draft fans;

Optimization objective: to make the total energy consumption of induced draft fans as low as possible;

Optimization constraint condition: normal operation of boiler unit.

The process of this scenario:

1. Setting upper and lower limits, namely safety ranges, of the power of induced draft fans, the air volume of induced draft fans, and the air pressure of induced draft fans;

2. Setting a reaction time;

3. Setting an isolation condition: operating power of fans and combustion efficiency of the boiler being between set upper and lower limits;

4. Setting an emergency trigger condition: no safety problem, not needed;

5. Setting an emergency plan: giving an alarm, and handling according to an actual situation;

6. Setting a heuristic end condition: successive N heuristic results being lower than results obtained based on current optimal operation knowledge, under the same basic working condition;

7. Acquiring current values of the power of induced draft fans, the air volume of induced draft fans, and the air pressure of induced draft fans, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; detecting the emergency trigger condition and the isolation condition during the waiting process; if the isolation condition is met, returning heuristic data to a previous value by means of a revertive control mechanism; and

10. Checking whether the end condition is met; if not, returning to Step 7.

Embodiment 83: Control of waste heat boiler

The machine heuristic learning method for operation behavior record management in Embodiment 1 is applied to a scenario of energy-saving optimization of a waste heat boiler. The process of this scenario is as follows:

The waste heat boiler is composed of an inlet flue, a boiler body, a drum, and a stack, and is mainly used for generating steam by means of flue gas heat of boiler waste heat. Water to be heated is pumped into pipes densely distributed in the boiler body by a feed pump, and water in the pipes is heated into steam by means of high-temperature flue gas of the boiler, and then the steam drives a turbine to drive a generator to generate power.

This scenario mainly has the following attributes:

Basic working condition: ambient temperature, inlet flue gas temperature, inlet flue gas pressure, hot-end temperature difference, pinch-point temperature difference, proximity-point temperature difference, inlet water temperature of feed pump, superheated steam pressure, superheated steam temperature, outlet flue gas temperature, drum water level, and drum pressure;

Operation data: opening degree of inlet flue gas valve, and opening degree of high-temperature heater valve;

Optimization objective: to optimize the waste heat utilization rate of the waste heat boiler;

Optimization constraint condition: safe operation of the waste heat boiler.

The process of this scenario:

1. Setting upper and lower limits, namely safety ranges, of the opening degree of inlet flue gas valve, and opening degree of high-temperature heater valve;
2. Setting a reaction time;
3. Setting an isolation condition: operating power of the waste heat boiler being between set upper and lower limits;
4. Setting an emergency trigger condition: no safety problem, not needed;
5. Setting an emergency plan: giving an alarm, and handling according to an actual situation;
6. Setting a heuristic end condition: successive N heuristic results being lower than results obtained based on current optimal operation knowledge, under the same basic working condition;
7. Acquiring current values of opening degree of inlet flue gas valve, and opening degree of high-temperature heater valve, that is, acquiring current operation data;
8. Randomly selecting one operation item from the operation data, randomly generating a new operation item within the safety range of the operation item, writing the new operation item into a control system, and automatically executing the new operation item by the device;
9. Waiting to the end of the reaction according to a waiting time; detecting the emergency trigger condition and the isolation condition during the waiting process; if the isolation condition is met, returning heuristic data to a previous value by means of a revertive control mechanism; and
10. Checking whether the end condition is met; if not, returning to Step 7.

Embodiment 84: Energy-saving control of waste heat turbine

The machine heuristic learning method for operation behavior record management in Embodiment 1 is applied to a scenario of energy-saving optimization of a waste heat turbine. The process of this scenario is as follows:

Water is heated into steam in a waste heat boiler, and is further heated by super-heaters to turn into superheated steam, and then the superheated steam enters a steam turbine through a main steam pipe. With the continuous expansion of steam, the steam flowing at a high rate pushes vanes of the steam turbine to rotate to drive a generator. In this process, the inlet steam temperature, the inlet steam flow, and the rotational speed and amplitude of the steam turbine may change, which makes it impossible to realize optimal steam consumption of the waste heat turbine. The steam consumption of the waste heat turbine can be reduced by adjusting the opening degree of valves.

This scenario mainly has the following attributes:

Basic working condition: inlet steam pressure, inlet steam temperature, inlet steam flow, cooling rate, extraction pressure, extraction temperature, air loss, adjustable steam chamber pressure, rotational speed of steam turbine, and amplitude of steam turbine;

Operation data: opening degree of valve, cooling water temperature control, and extraction pressure valve control.

Optimization objective: to optimize the steam consumption of the steam turbine;

Optimization constraint condition: the generating capacity and steam meet user demands.

The process of this scenario:

1. Setting upper and lower limits, namely safety ranges, of the opening degree of valve, cooling water temperature control, and extraction pressure valve control;

2. Setting a reaction time;

3. Setting an isolation condition: the generating capacity and steam being between set upper and lower limits;

4. Setting an emergency trigger condition: no safety problem, not needed;

5. Setting an emergency plan: giving an alarm, and handling according to an actual situation;

6. Setting a heuristic end condition: successive N heuristic results being lower than results obtained based on current optimal operation knowledge, under the same basic working condition;

7. Acquiring current values of the opening degree of valve, cooling water temperature control, and extraction pressure valve control, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; detecting the emergency trigger condition and the isolation condition during the waiting process; if the isolation condition is met, returning heuristic data to a previous value by means of a revertive control mechanism; and

10. Checking whether the end condition is met; if not, returning to Step 7.

Embodiment 85: Control of reheated steam temperature of steam turbine

The machine heuristic learning method for operation behavior record management in Embodiment 1 is applied to a scenario of reheated steam temperature control of a steam turbine. The process of this scenario is as follows:

Main steam generated by a pulverized coal boiler expands to act in a high-pressure cylinder of the steam turbine, then introduced into a re-heater of the boiler to be reheated to increase the steam temperature, and then returns into a medium-pressure cylinder and a low-pressure cylinder of the steam turbine to act again, and steam exhaust is discharged into a condenser finally.

This scenario mainly has the following attributes:

Basic working condition: outlet temperature of high-pressure cylinder of steam turbine, reheated steam inlet temperature, reheated steam outlet pressure, flue gas rate on re-heater side, flue gas temperature on re-heater side, and exhaust steam moisture of steam turbine;

Operation data: outlet control valves of steam turbine, outlet negative pressure of high-pressure cylinder of steam turbine, outlet pressure increase of high-pressure cylinder of steam turbine, and quantity of desuperheating water of re-heater;

Optimization objective: to make unit heat as high as possible;

Optimization constraint condition: the reheated steam temperature of the steam turbine does not deviate from a rated value.

The process of this scenario:

1. Setting upper and lower limits, namely safety ranges, of outlet control valves of steam turbine, outlet negative pressure of high-pressure cylinder of steam turbine, outlet pressure increase of high-pressure cylinder of steam turbine, and quantity of desuperheating water of re-heater;

2. Setting a reaction time;

3. Setting an isolation condition: the reheated steam temperature of the steam turbine being between set upper and lower limits.

4. Setting an emergency trigger condition: no safety problem, not needed;

5. Setting an emergency plan: giving an alarm, and handling according to an actual situation;

6. Setting a heuristic end condition: successive N heuristic results being lower than results obtained based on current optimal operation knowledge, under the same basic working condition;

7. Acquiring current values of the outlet control valves of steam turbine, outlet negative pressure of high-pressure cylinder of steam turbine, outlet pressure increase of high-pressure cylinder of steam turbine, and quantity of desuperheating water of re-heater, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; detecting the emergency trigger condition and the isolation condition during the waiting process; if the isolation condition is met, returning heuristic data to a previous value by means of a revertive control mechanism; and

10. Checking whether the end condition is met; if not, returning to Step 7.

Embodiment 86: Running control of denitration equipment

The machine heuristic learning method for operation behavior record management in Embodiment 1 is applied to a scenario of running optimization of denitration equipment. The process of this scenario is as follows:

Liquid ammonia is evaporated into ammonia gas by an evaporator, and the ammonia gas is fully mixed with air from a dilution fan, in an ammonia/air mixer. The gas mixture enters an ammonia injection grid in a flue, ammonia gas is injected by the ammonia injection grid to be fully mixed with flue gas in the flue, and then enters an SCR (selective catalytic reduction) reactor, and under the action of a catalyst, ammonia reacts with nitric oxide to generate ammonia and water, which enter an air pre-heater.

Basic working condition: boiler load, NOx concentration of flue gas, flow rate of flue gas, temperature of flue gas, and O2 content of flue gas;

Operation data: ammonia injection capacity of manifold, and ammonia injection capacity of branch pipe;

Optimization objective: to make the ammonia consumption of denitration of per unit of NOx as low as possible;

Optimization constraint condition: NOx concentration of purified flue gas is up to the national emission standard, and ammonia escape is lower than a set value.

The process of this scenario:

1. Setting upper and lower limits, namely safety ranges, of the ammonia injection capacity of manifold, and the ammonia injection capacity of branch pipe;

2. Setting a reaction time;

3. Setting an isolation condition: the NOx concentration of purified flue gas and the ammonia escape being between set upper and lower limits;

4. Setting an emergency trigger condition: no safety problem, not needed;

5. Setting an emergency plan: giving an alarm, and handling according to an actual situation;

6. Setting a heuristic end condition: successive N heuristic results being lower than results obtained based on current optimal operation knowledge, under the same basic working condition;

7. Acquiring current values of the ammonia injection capacity of manifold, and the ammonia injection capacity of branch pipe, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; detecting the emergency trigger condition and the isolation condition during the waiting process; if the isolation condition is met, returning heuristic data to a previous value by means of a revertive control mechanism; and

10. Checking whether the end condition is met; if not, returning to Step 7.

Embodiment 87: Running control of electrostatic precipitator

The machine heuristic learning method for operation behavior record management in Embodiment 1 is applied to an electrostatic precipitator optimization scenario/system. The process of this scenario is as follows:

Flue gas produced in the combustion process of a boiler passes through an electrostatic precipitator, a high-voltage DC power supply is applied to positive and negative poles of the electrostatic precipitator to maintain an electrostatic field for gas separation between the two poles, the gas is ionized by corona discharge of the electrostatic field to generate a large quantity of free electrons and ions, which are then adhered onto dust particles passing through the electrostatic field, so the dust particles in the flue gas are charged and move toward the pole with the opposite polarity under the action of Coulomb attraction of the power plant, so as to be deposited on the pole, and dust is separated from the dusty gas; next, the pole is vibrated periodically to enable the dust particles to fall into a dust hopper of the electrostatic precipitator, and purified air is discharged through an outlet gas box.

This scenario mainly has the following attributes:

Basic working condition: boiler load, dust concentration of flue gas inlet, flow rate of flue gas, and outlet gas temperature of heat recoverer;

Operation data: secondary voltage, secondary current, power supply mode, pulse power supply milliseconds, and pulse power supply interrupt milliseconds of electromagnetic fields of dry electrostatic precipitator, and secondary voltage, secondary current, power supply mode, pulse power supply milliseconds, and pulse power supply interrupt milliseconds of electromagnetic fields of wet electrostatic precipitator;

Optimization objective: to make the total energy consumption of the electromagnetic fields as low as possible;

Optimization constraint condition: the dust concentration of purified flue gas is up to the national emission standard.

The process of this scenario:

1. Setting upper and lower limits, namely safety ranges, of the secondary voltage, secondary current, power supply mode, pulse power supply milliseconds, and pulse power supply interrupt milliseconds of electromagnetic fields of dry electrostatic precipitator, and the secondary voltage, secondary current, power supply mode, pulse power supply milliseconds, and pulse power supply interrupt milliseconds of electromagnetic fields of wet electrostatic precipitator;
2. Setting a reaction time;
3. Setting an isolation condition: the dust concentration of purified flue gas being between set upper and lower limits;
4. Setting an emergency trigger condition: no safety problem, not needed;
5. Setting an emergency plan: giving an alarm, and handling according to an actual situation;
6. Setting a heuristic end condition: successive N heuristic results being lower than results obtained based on current optimal operation knowledge, under the same basic working condition;
7. Acquiring current values of the secondary voltage, secondary current, power supply mode, pulse power supply milliseconds, and pulse power supply interrupt milliseconds of electromagnetic fields of dry electrostatic precipitator, and the secondary voltage, secondary current, power supply mode, pulse power supply milliseconds, and pulse power supply interrupt milliseconds of electromagnetic fields of wet electrostatic precipitator, that is, acquiring current operation data;
8. Randomly selecting one operation item from the operation data, randomly generating a new operation item within the safety range of the operation item, writing the new operation item into a control system, and automatically executing the new operation item by the device;
9. Waiting to the end of the reaction according to a waiting time; detecting the emergency trigger condition and the isolation condition during the waiting process; if the isolation condition is met, returning heuristic data to a previous value by means of a revertive control mechanism; and
10. Checking whether the end condition is met; if not, returning to Step 7.

Embodiment 88: Bleaching control

The machine heuristic learning method for operation behavior record management in Embodiment 1 is applied to an optimal operation scheme of bleaching control. Referring to FIG. 10, the process of this scenario is as follows:
Leaching is a process of decolorizing pulp by removing colored substances in the pulp or changing chemical composition of the pulp, which is achieved by turning lignin and pigments in the pulp into dissolved matter under the action of a leaching agent. The whiteness of the pulp is an important quality indicator in the pulping process, and the leaching process is closely related to the quality of pulp and paper, consumption of materials and energy, and the environment. Based on experience, workers add chlorine dioxide and chlorine for leanching under certain pulp concentration and flow rate. In order the guarantee the whiteness, excessive chlorine dioxide and chlorine may be added, which not only decrease the pulp yield, but also aggravates the wastewater treatment pressure.
This scenario mainly has the following attributes:
Basic working condition: residual chlorine value measured before bleaching tower and after static mixer, whiteness value, and paper size;
Operation data: flow velocity of pulp, flow rate of chlorine dioxide and chlorine, steam flow of bleaching tower, and steam flow of static mixer;
Optimization objective: to make the unit consumption of pulp leaching agent as low as possible;
Optimization constraint condition: the Kappa number of pulp is less than a configured value, and the concentration of pulp, the temperature of leaching tower, and the temperature of static mixer are within designated ranges.
The process of this scenario:

1. Setting upper and lower limits, namely safety ranges, of the flow velocity of pulp, the flow rate of chlorine dioxide and chlorine, the steam flow of bleaching tower, and the steam flow of static mixer;
2. Setting a reaction time;
3. Setting an isolation condition: the temperature of leaching tower, and the temperature of static mixer being between set upper and lower limits;
4. Setting an emergency trigger condition: no safety problem, not needed;
5. Setting an emergency plan: giving an alarm, and handling according to an actual situation;
6. Setting a heuristic end condition: successive N heuristic results being lower than results obtained based on current optimal operation knowledge, under the same basic working condition;
7. Acquiring current values of the flow velocity of pulp, the flow rate of chlorine dioxide and chlorine, the steam flow of bleaching tower, and the steam flow of static mixer, that is, acquiring current operation data;
8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; detecting the isolation condition during the waiting process; if the isolation condition is met, returning heuristic data to a previous value by means of a revertive control mechanism; and

10. Checking whether the end condition is met; if not, returning to Step 7.

Embodiment 89: Black liquor evaporation control

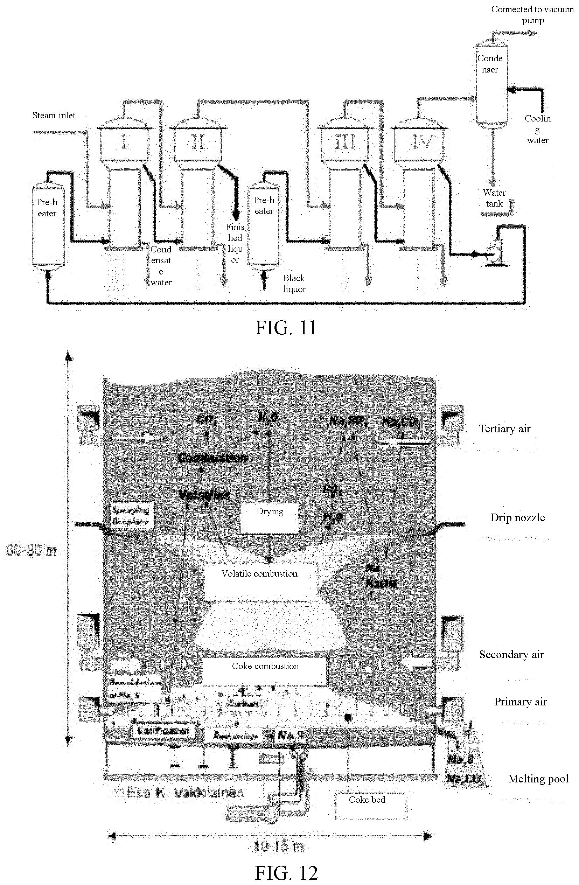

The machine heuristic learning method for operation behavior record management in Embodiment 1 is applied to an optimal operation scheme of black liquor evaporation control. Referring to FIG. 11, the process of this scenario is as follows:

Pulping black liquor is waste liquor produced after alkaline pulping of plant fiber materials, and is brown in color. If the black liquor produced by pulp and paper mills is directly discharged without any treatment, water resources will be severely polluted, and resource waste will be caused.

The purpose of black liquor evaporation is to increase the concentration of black liquor to an extent suitable for combustion. If the concentration and flow rate of inlet dilute black liquor, and the pressure and quantity of inlet steam are manually controlled, a satisfying effect cannot be realized by one time of evaporation, and evaporation has to be carried out multiple times, which leads to high energy consumption.

This scenario mainly has the following attributes:

Basic working condition: black liquor composition, black liquor level (liquid level of evaporators, flash tanks, black liquor tanks and flash-pots), concentration of black liquor, and effective total pressure difference of evaporation devices ;

Operation data: concentration and flow rate of inlet dilute black liquor, and the pressure and quantity of inlet steam

Optimization objective: to make the total unit steam consumption of outlet black liquor evaporation as low as possible.

Optimization constraint condition: the concentration of outlet black liquor is greater than or equal to a configured value.

The process of this scenario:

1. Setting upper and lower limits, namely safety ranges, of the concentration and flow rate of inlet dilute black liquor, and the pressure and quantity of inlet steam;
2. Setting a reaction time;
3. Setting an isolation condition: no safety problem, not needed;
4. Setting an emergency trigger condition: no safety problem, not needed;
5. Setting an emergency plan: giving an alarm, and handling according to an actual situation;
6. Setting a heuristic end condition: realizing optimal control of energy-saving and consumption reduction of steam;
6. Setting a heuristic end condition: successive N heuristic results being lower than results obtained based on current optimal operation knowledge, under the same basic working condition;
8. Randomly selecting one operation item from the operation data, randomly generating a new operation item within the safety range of the operation item, writing the new operation item into a control system, and automatically executing the new operation item by the device;
9. Waiting to the end of the reaction according to a waiting time; and
10. Checking whether the end condition is met; if not, returning to Step 7.

Embodiment 90: Control of black liquor combustion

The machine heuristic learning method for operation behavior record management in Embodiment 1 is applied to an optimal operation scheme of black liquor combustion control. Referring to FIG. 12, the process of this scenario is as follows:

After being heated and concentrated in an evaporator, dilute black liquor obtained after cooking is sprayed into an alkali recovery boiler and is combusted to generate heat, non-combusted black liquor and inorganic salt fall onto a coke bed below to be subjected to a reduction reaction at high temperature, and most $Na_2SO$ is reduced into $Na_2S$ in the reaction process, and then melt flows out of the boiler through a nozzle to form green liquor, and the green liquor is causticized to form white liquor used for pulping.

The alkali recovery boiler, as a main device of a combustion system, is complex in process object and operating mechanism; when the number of spray lances, liquor flow rate of spray lances, opening degree for primary air, secondary air and tertiary air, feed water flow, and heavy oil flow are regulated by manual operations and analogue instruments, it is difficult to realize an ideal operating condition, the initial input for building the alkali recovery boiler is extremely high, which becomes a bottleneck restraining further improvement of the production efficiency of pulp mills. It is of great importance for improving economic benefits and social benefits of the pulp mills to realize high reduction efficiency and maximum heat efficiency by improving the combustion performance of the alkali recovery boiler.

This scenario mainly has the following attributes:

Basic working condition: concentration of black liquor, flow rate of black liquor, pressure, flow rate and temperature of primary air and secondary air at the outlet of air pre-heater, flow rate and pressure of tertiary air, feed water temperature, feed water pressure, and drum water level;

Operation data: number of spray lances, liquor flow rate of spray lances, opening degree for primary air, secondary air and tertiary air, feed water flow, and heavy oil flow;

Optimization objective: to make the combustion heat efficiency of the alkali recovery boiler as high as possible.

Calculation formula:

$$\text{Heat efficiency} = \text{available heat/total heat released by fuel} * 100\%$$

$$= \text{boiler capacity} * (\text{steam enthalpy - feed water enthalpy})/\text{fuel consumption}$$

$$* \text{ lower heating value of fuel}$$

$$= \text{steam quantity} * (\text{steam enthalpy - feed water enthalpy})/\text{fuel consumption}$$

$$* \text{ lower heating value of fuel}$$

Optimization constraint condition: the total air volume of the boiler, the drum water level, the temperature deviation of upper and lower walls of the drum, the vibration value of the alkali recovery boiler, and the negative pressure of the hearth are less than configured values.

The process of this scenario:

1. Setting upper and lower limits, namely safety ranges, of the number of spray lances, the liquor flow rate of spray lances, the opening degree for primary air, secondary air and tertiary air, the feed water flow, and the heavy oil flow;
2. Setting a reaction time;
3. Setting an isolation condition: the total air volume of the boiler, the drum water level, the temperature deviation of upper and lower walls of the drum, the vibration value of the alkali recovery boiler, and the negative pressure of the hearth being between set upper and lower limits;
4. Setting an emergency trigger condition: no safety problem, not needed;
5. Setting an emergency plan: giving an alarm, and handling according to an actual situation;
6. Setting a heuristic end condition: successive N heuristic results being lower than results obtained based on current optimal operation knowledge, under the same basic working condition;
7. Acquiring current values of the number of spray lances, the liquor flow rate of spray lances, the opening degree for primary air, secondary air and tertiary air, the feed water flow, and the heavy oil flow, that is, acquiring current operation data;
8. Randomly selecting one operation item from the operation data, randomly generating a new operation item within the safety range of the operation item, writing the new operation item into a control system, and automatically executing the new operation item by the device;
9. Waiting to the end of the reaction according to a waiting time; detecting the isolation condition during the waiting process; if the isolation condition is met, returning heuristic data to a previous value by means of a revertive control mechanism; and
10. Checking whether the end condition is met; if not, returning to Step 7.

Embodiment 91: Aluminum electrolysis control

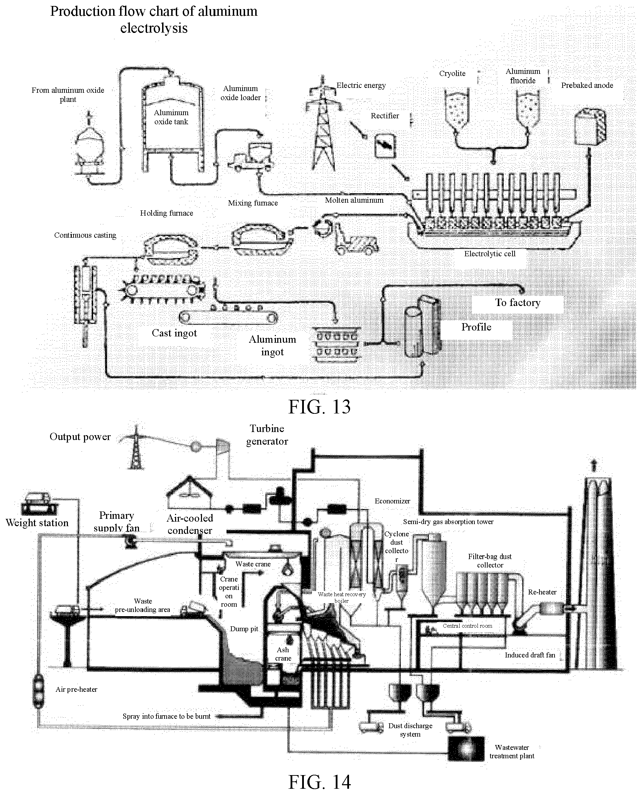

The machine heuristic learning method for operation behavior record management in Embodiment 1 is applied to aluminum electrolysis control. Referring to FIG. 13, the process of this scenario is as follows:

Process: aluminum oxide is dissolved in molten cryolite to form a uniform melt with good electrical conductivity; carbon materials are used as a cathode and anode; after direct current is applied, an electrochemical reaction occurs on the cathode and the anode. Anodic gas is generated on the anode, and molten aluminum is separated out on the cathode, periodically extracted out of the electrolytic cell through a vacuum ladle, and conveyed to a casting affiliated factory to be re-melted into aluminum ingots. During normal processing in the electrolytic cell, a cell controller controls the feed interval and the feed quantity according to the concentration of aluminum oxide, and in actual production, the feed interval has to be manually adjusted due to external factors such as equipment, to meet production requirements. Because strong-nonlinearity and many unpredictable factors have a great influence on the aluminum electrolysis process, the concentration of aluminum oxide in the electrolytic cell cannot be measured easily; the actually controllable range of the concentration of aluminum oxide varies when the electrolytic cell is in different states, which makes it difficult to accurately control the concentration of aluminum oxide in the electrolytic cell. At present, the concentration of aluminum oxide in large pre-roasting aluminum electrolytic cells is controlled within 1.5%-3.5%, in China. In the electrolytic process, if the concentration of aluminum oxide is too high, the problems of deposition at the bottom of the cell, instability of a molten aluminum layer, and resistance increase will be caused; if the concentration of aluminum oxide is too low, an anode effect will be caused, reducing the current efficiency. So, it is necessary to make the energy consumption of aluminum electrolysis as low as possible by using an AI system based on a comprehensive consideration of the factors such as voltage, feed quantity of aluminum oxide, feed interval of aluminum oxide, temperature of electrolytic cell, molecular ratio of electrolyte, pole pitch, aluminum level, electrolyte level, and thickness of insulation material.

This scenario mainly has the following attributes:

Basic working condition: site of electrolytic cell, average voltage of electrolytic cell, composition of aluminum oxide (water content, sodium content, and the like), form of aluminum oxide (sandy or powdery), and thickness of insulation materials;

Operation data: voltage, feed quantity of aluminum oxide, feed interval of aluminum oxide, temperature of electrolytic cell, molecular ratio of electrolyte, pole pitch, aluminum level, and electrolyte level;

Optimization objective: to make the energy consumption of aluminum electrolysis as low as possible;

Optimization constraint condition: the current intensity, magnetic field distribution of electrolytic cell, and aluminum output are within configured ranges.

The process of this scenario:

1. Setting upper and lower limits, namely safety ranges, of the voltage, the feed quantity of aluminum oxide, the feed interval of aluminum oxide, the temperature of electrolytic cell, the molecular ratio of electrolyte, the pole pitch, the aluminum level, and the electrolyte level;

2. Setting a reaction time;

3. Setting an isolation condition: no safety problem, not needed;

4. Setting an emergency trigger condition: no safety problem, not needed;

5. Setting an emergency plan: giving an alarm, and handling according to an actual situation;

6. Setting a heuristic end condition: successive N heuristic results being lower than results obtained based on current optimal operation knowledge, under the same basic working condition;

7. Acquiring current values of the voltage, the feed quantity of aluminum oxide, the feed interval of aluminum oxide, the temperature of electrolytic cell, the molecular ratio of electrolyte, the pole pitch, the aluminum level, and the electrolyte level, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; and

10. Checking whether the end condition is met; if not, returning to Step 7.

Embodiment 92: Heating control of aluminum alloy melting

The machine heuristic learning method for operation behavior record management in Embodiment 1 is applied to heating control of aluminum alloy melting. The process of this scenario is as follows:

Process: aluminum alloy preparation (in melting furnace) → auxiliary material calculation → melting process control (adding of temperature-controlled alloy) → alloy melting →electromagnetic stirring.

In the aluminum alloy melting process, the factors such as melting temperature, melting time and heating rate have a great impact on the oxidative melting loss. If the melting temperature is too high, alloy oxidization will be aggravated; by increasing the heating rate, the melting time can be shortened, thus reducing the oxidative melting loss. So, the selection of the heating condition of aluminum alloy melting is actually a problem about how to reduce the reaction time of aluminum alloy and oxygen under high temperature in the melting process. Therefore, it is necessary to accurately control the aluminum alloy melting process by using an AI system based on a comprehensive consideration of the factors such as feed sequence, melting temperature, melting time, oil pressure, oil quantity, fuel-oil ratio, combustion air flow, and dosage of covering agent, so as to reduce the oxidative melting loss of aluminum alloy.

This scenario mainly has the following attributes:

Basic working condition: aluminum type, furnace pressure, furnace temperature, and aluminum melting rate;

Operation data: feed sequence, melting temperature, oil pressure, oil quantity, combustion air flow, and dosage of covering agent;

Optimization objective: to realize accurate control of the aluminum alloy melting process;

Optimization constraint condition: the temperature rise rate, melting temperature, heating rate, and fuel-oil gas of the melting surface are within configured ranges.

The process of this scenario:

1. Setting upper and lower limits, namely safety ranges, of the feed sequence, the melting temperature, the oil pressure, the oil quantity, the combustion air flow, and the dosage of covering agent;

2. Setting a reaction time;

3. Setting an isolation condition: no safety problem, not needed;

4. Setting an emergency trigger condition: no safety problem, not needed;

5. Setting an emergency plan: giving an alarm, and handling according to an actual situation;

6. Setting a heuristic end condition: successive N heuristic results being lower than results obtained based on current optimal operation knowledge, under the same basic working condition;

7. Acquiring current values of the feed sequence, the melting temperature, the oil pressure, the oil quantity, the combustion air flow, and the dosage of covering agent, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; and

10. Checking whether the end condition is met; if not, returning to Step 7.

Embodiment 93: Operation control of aluminum alloy refining

The machine heuristic learning method for operation behavior record management in Embodiment 1 is applied to operation control of aluminum alloy refining. The process of this scenario is as follows:

Process: feeding melt into holding furnace → adding alloy → dehydrogenation → deslagging and refining → slagging-off and covering → standing (15-30 minutes) → checking and testing melt composition →adjusting alloy composition → adjusting the temperature → qualified aluminum alloy melt → preparation for casting.

Aluminum alloy refining is a process for removing gaseous and non-metallic impurities in molten alloy to homogenize alloy composition, and is an extremely important process for smelting. A proper refining agent should be used for refining, and the additive amount (about 0.5%-0.7% of the mass of alloy) of the refining agent and the refining temperature should be properly controlled. In the refining process, the refining agent is pressed about 2/3 below the molten alloy in batches by a bell jar, and is evenly, slowly and gently rotated clockwise, and the molten metal should not be drastically stirred, which may otherwise increase the hydrogen content and bring impurities into the molten melt. Therefore, it is necessary to reduce the use of the refining agent by using an AI system based on an overall consideration of the factors such as refining temperature, refining time, nitrogen pressure, nitrogen consumption, nitrogen injection time before refining, nitrogen injection time after refining, dosage of refining agent, and power supply rate.

This scenario mainly has the following attributes:

Basic working condition: molten aluminum temperature, molten aluminum composition (Fe, Si, Ti, CO, $CO_2$, $H_2$, and the like), and nitrogen pressure;

Operation data: refining time, nitrogen flow, nitrogen injection time before refining, nitrogen injection time after refining, dosage of refining agent, and power supply rate;

Optimization objective: to reduce the use of refining agent and make the gas content of molten aluminum as low as possible.

Optimization constraint condition: the use of refining agent is less than a configured value.

The process of this scenario:

1. Setting upper and lower limits, namely safety ranges, of the refining time, the nitrogen flow, the nitrogen injection time before refining, the nitrogen injection time after refining, the dosage of refining agent, and the power supply rate;

2. Setting a reaction time;

3. Setting an isolation condition: no safety problem, not needed;

4. Setting an emergency trigger condition: no safety problem, not needed;

5. Setting an emergency plan: giving an alarm, and handling according to an actual situation;

6. Setting a heuristic end condition: successive N heuristic results being lower than results obtained based on current optimal operation knowledge, under the same basic working condition;

7. Acquiring current values of the refining time, the nitrogen flow, the nitrogen injection time before refining, the nitrogen injection time after refining, the dosage of refining agent, and the power supply rate, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; and

10. Checking whether the end condition is met; if not, returning to Step 7.

Embodiment 94: Control of waste incineration equipment

The machine heuristic learning method for operation behavior record management in Embodiment 1 is applied to a waste incineration control scheme. The process of this scenario is as follows:

Waste is conveyed into a dump pit by a truck, fermented for 3-5 days, then grabbed into a hopper by a gripper, and then enter a chute, the waste in the chute is conveyed forward by a pusher to fire grates which comprise a drying area, a combustion area, and a complete combustion area, the waste is pushed downwards with staggered movement of the fire grates to sequentially pass through these areas of the fire grates, and finally, the waste is completely combusted and discharged out of the hearth. According to the difference in composition, drying condition and time on the fire grates of waste, the incineration effect will be improved by prolonging the residence time of the waste on the fire grates, under the premise of keeping other conditions unchanged. However, the treatment capacity of an incinerator will be reduced if the residence time is too long, and incomplete combustion of waste will be caused if the residence time is too short, so the residence time should be determined according to specific circumstances. Combustion air passes through the fire grates from below to be mixed with the waste, primary air used for waste incineration enters the incinerator after passing through a steam-to-air heater and a gas-to-air heater, and secondary air is fresh air delivered through a pipeline exclusive to the incinerator. Flue gas generated when the waste is incinerated in the incinerator passes through the heated surface of the boiler to generate steam, and the steam drives a turbine to drive a generator to generate power; and cooled flue gas is discharged after being purified, the waste incineration capacity will be improved with the increase of the steam flow.

The general flow diagram is shown in FIG. 14:

This scenario mainly has the following attributes:

Basic working condition: temperature and humidity in dump pit, furnace draft, turbulivity, material thickness, boiler water level, CO concentration in incinerator, O2 concentration, temperature in incinerator, pressure of superheated steam, temperature of superheated steam, feed water temperature of boiler, operating pressure of drum, hot-air temperature, exhaust gas temperature, water jet capacity of sprayer, and drum water level;

Operation data: fermentation time of waste in dump pit, feed time, residence time of feeder, travel distance of feeder, residence time of waste on fire grates, movement speed of fire grates, and time, pressure, temperature and volume of primary air supply; residence time of waste in combustion furnace, and set temperature in incinerator;

Optimization objective: to make the steam flow of the boiler as high as possible;

Optimization constraint condition: the CO concentration of flue gas is less than 60mg/m 3, and the center of flame color is within a configured area.

The process of this scenario:

1. Setting upper and lower limits, namely safety ranges, of the fermentation time of waste in dump pit, feed time, the residence time of feeder, the travel distance of feeder, the residence time of waste on fire grates, the movement speed of fire grates, and the time, pressure, temperature and volume of primary air supply; the residence time of waste in combustion furnace, and the set temperature in the incinerator;

2. Setting a reaction time;

3. Setting an isolation condition: the boiler feed water level being between set upper and lower limits;

4. Setting an emergency trigger condition: no safety problem, not needed;

5. Setting an emergency plan: giving an alarm, and handling according to an actual situation;

6. Setting a heuristic end condition: successive N heuristic results being lower than results obtained based on current optimal operation knowledge, under the same basic working condition;

7. Acquiring current values of the fermentation time of waste in dump pit, feed time, the residence time of feeder, the travel distance of feeder, the residence time of waste on fire grates, the movement speed of fire grates, and the time, pressure, temperature and volume of primary air supply; the residence time of waste in combustion furnace, and the set temperature in the incinerator, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; detecting the boiler feed water level during the waiting process; if the boiler feed water level is not within a set range, returning heuristic data to a previous value by means of a revertive control mechanism; and

10. Checking whether the end condition is met; if not, returning to Step 7.

Embodiment 95: Control of traffic tunnel lighting

The machine heuristic learning method for operation behavior record management in Embodiment 1 is used for management of a traffic tunnel lighting system. The process of this scenario is as follows:

Energy consumption of traffic tunnels is mainly from lighting facilities, ventilating facilities and tunnel monitoring facilities, and particularly, in operation management of long tunnels, extra-long tunnels and tunnel groups, energy consumption of tunnel lighting facilities and ventilating facilities accounts for about 90% of the total energy consumption of traffic tunnels.

The tunnel lighting system is a high-energy-consumption system during tunnel operation. Tunnel lighting generally includes entrance lighting, internal lighting and exit lighting, and the requirements for entrance lighting are stricter. Controllable parameters of tunnel lighting equipment include circuit voltage, and service power of lights, and the optimization objective is to make the daily power consumption of traffic tunnel lighting equipment as low as possible.

This scenario mainly has the following attributes:

Basic working condition: light intensity outside tunnel, and traffic flow;

Operation data: circuit voltage, and service power of lights;

Optimization objective: to make the daily power consumption of traffic tunnel lighting equipment as low as possible;

Optimization constraint condition: the tunnel lighting brightness and uniformity meet configured values.

The process of this scenario:

1. Setting upper and lower limits, namely safety ranges, of the circuit voltage, and the service power of lights;
2. Setting a reaction time;
3. Setting an isolation condition: the tunnel lighting brightness and uniformity being between set upper and lower limits;
4. Setting an emergency trigger condition: no safety problem, not needed;
5. Setting an emergency plan: giving an alarm, and handling according to an actual situation;
6. Setting a heuristic end condition: successive five heuristic results being lower than results obtained based on current optimal operation knowledge, under the same basic working condition;
7. Acquiring current values of the circuit voltage and the service power of lights, that is, acquiring current operation data;
8. Randomly selecting one operation item from the operation data, randomly generating a new operation item within the safety range of the operation item, writing the new operation item into a control system, and automatically executing the new operation item by the device;
9. Waiting to the end of the reaction according to a waiting time; detecting the isolation condition during the waiting process; if the isolation condition is met, returning heuristic data to a previous value by means of a revertive control mechanism; and
10. Checking whether the end condition is met; if not, returning to Step 7.

Embodiment 96: Control of building lighting

The machine heuristic learning method for operation behavior record management in Embodiment 1 is used for building lighting management. The process of this scenario is as follows:

Generally, lighting in public areas of buildings is controlled by the manager party in a unified manner. To ensure normal lighting in the public areas of buildings, lighting equipment should be adjusted and controlled according to many factors. Controllable parameters of building lighting equipment include the number of lights and on-off of lights, and the optimization objective is to make the daily power consumption of the building lighting equipment as low as possible.

This scenario mainly has the following attributes:

Basic working condition: light intensity in building;

Operation data: the number of lights, and on-off of lights;

Optimization objective: to make the daily power consumption of the building lighting equipment as low as possible;

Optimization constraint condition: to control the lighting brightness to meet a configured value.

The process of this scenario:

1. Setting upper and lower limits, namely safety ranges, of the number of lights, and on-off of lights;
2. Setting a reaction time;
3. Setting an isolation condition: controlling the lighting brightness between set upper and lower limits;
4. Setting an emergency trigger condition: no safety problem, not needed;
5. Setting an emergency plan: giving an alarm, and handling according to an actual situation;
6. Setting a heuristic end condition: successive ten heuristic results being lower than results obtained based on current optimal operation knowledge, under the same basic working condition;
7. Acquiring current values of the number of lights, and on-off of lights, that is, acquiring current operation data;
8. Randomly selecting one operation item from the operation data, randomly generating a new operation item within the safety range of the operation item, writing the new operation item into a control system, and automatically executing the new operation item by the device;
9. Waiting to the end of the reaction according to a waiting time; detecting the isolation condition during the waiting process; if the isolation condition is met, returning heuristic data to a previous value by means of a revertive control mechanism; and
10. Checking whether the end condition is met; if not, returning to Step 7.

Embodiment 97: Energy-saving of air-conditioner in extra-large space building

The machine heuristic learning method for operation behavior record management in Embodiment 1 is applied to an energy-saving scenario/system of an air-conditioner in an extra-large space building. The process of this scenario is as follows:

By analysis on building energy consumption, energy consumption of the air-conditioning system accounts for 45% of the total building energy consumption, and this proportion will be larger in extra-large space such as comprehensive office buildings. Traditional environmental control and air distribution design leads to great energy consumption and cannot accurately meet the comfort requirements in working areas. Buildings for different purposes and different areas in the same building have different environmental comfort requirements, so there is a great difference in requirements for cooling and heating loads and fresh air volume of the air-conditioning system of buildings, and an unreasonable operating mode will result in great power consumption of the air-conditioning system and poor comfort. So, it is necessary to make the energy consumption of the air-conditioning system as low as possible under the precondition of guaranteeing conform, to fulfill the purposes of environmental friendliness, energy saving, and comfort of buildings.

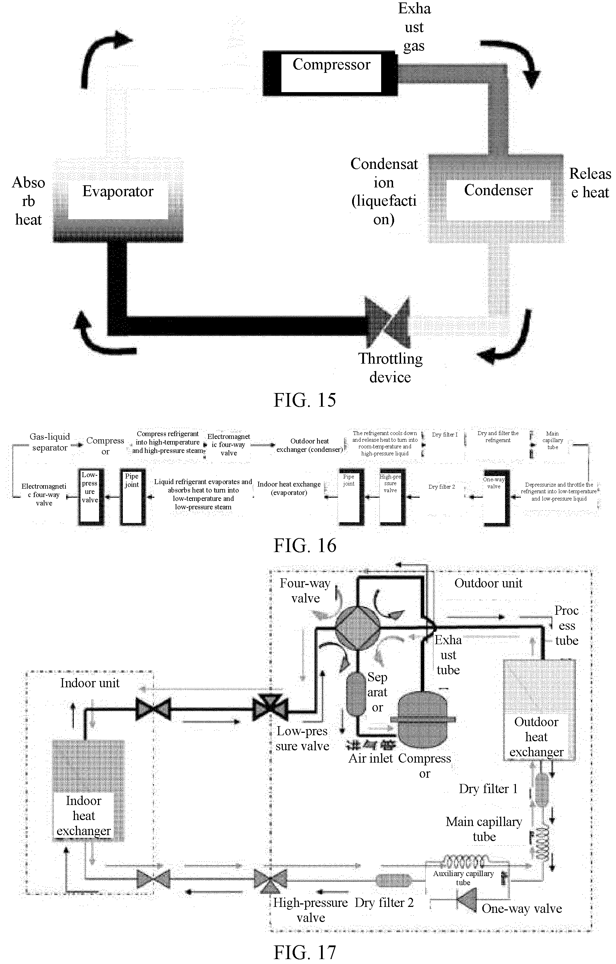

FIG. 15 illustrates a main structure of the air-conditioner;

FIG. 16 illustrates the refrigerating principle of the air-conditioner;

FIG. 17 illustrates the heating principle of the air-conditioner;

This scenario mainly has the following attributes:

Basic working condition: external environmental temperature, external environmental humidity, set regional temperature, temperature of heat recovery tank, inlet water temperature of air-conditioner, indoor $CO_2$ concentration, and current month;

Operation data: set temperature of main unit, on-off state of fan, gear of fan, air inlet mode, and air velocity at air inlet;

Optimization objective: to make the power consumption of the air-conditioner in per unit area as low as possible;

Optimization constraint condition: the temperature, humidity, PM2.5 concentration and air velocity obtained by sensors in personnel areas are within configured ranges.

The process of this scenario:

1. Setting upper and lower limits, namely safety ranges, of the set temperature of main unit, the on-off state of fan, the gear of fan, the air inlet mode, and the air velocity at air inlet;
2. Setting a reaction time;
3. Setting an isolation condition: the temperature, humidity, PM2.5 concentration and air velocity obtained by sensors in personnel areas being between set upper and lower limits;
4. Setting an emergency trigger condition: no safety problem, not needed;
5. Setting an emergency plan: giving an alarm, and handling according to an actual situation;
6. Setting a heuristic end condition: successive N heuristic results being lower than results obtained based on current optimal operation knowledge, under the same basic working condition;
7. Acquiring current values of the external environmental temperature, the external environmental humidity, the set regional temperature, the temperature of heat recovery tank, the inlet water temperature of air-conditioner, the indoor $CO_2$ concentration, and the current month, that is, acquiring a current basic working condition;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; detecting the emergency trigger condition and the isolation condition during the waiting process; if the emergency trigger condition is met, starting the emergency plan; if the isolation condition is met, returning heuristic data to a previous value by means of a revertive control mechanism; and

10. Checking whether the end condition is met; if not, returning to Step 7.

Embodiment 98: Control of coal direct liquefaction

The machine heuristic learning method for operation behavior record management in Embodiment 1 is applied to a coal direct liquefaction process. The process of this scenario is as follows:

Coal liquefaction is a technique for converting solid coal into liquid products (liquid hydrocarbon fuels such as gasoline and diesel, or chemical materials) through mechanical processing. Coal liquefaction includes direct liquefaction and indirect liquefaction, which have different requirements for coal quality.

Coal direct liquefaction is a process of converting coal into liquid fuels through hydrocracking under the action of hydrogen and catalyst, and hydrocracking is a reaction of splitting hydrogen molecules into small molecules. Because hydrocracking is the major approach for realizing coal direct liquefaction, coal direct liquefaction is also called coal hydro-liquefaction. Controllable parameters in the coal direct liquefaction process include hydrogen addition, reaction temperature, reaction pressure, catalyst dosage, gas/liquid ratio, and recycle hydrogen concentration, and the optimization objective is to make the liquefaction efficiency as high as possible.

This scenario mainly has the following attributes:

Basic working condition: coal type, water content of coal, coal quality (reactivity, volatiles, ash melting point, and clinkering property), coal granularity, and property of catalyst;

Operation data: hydrogen addition, reaction temperature, reaction pressure, catalyst dosage, gas/liquid ratio, and recycle hydrogen concentration;

Optimization objective: to make the liquefaction efficiency as high as possible;

Optimization constraint condition: the quality parameter of liquefaction products meets a configured value.

The process of this scenario:

1. Setting upper and lower limits, namely safety ranges, of the hydrogen addition, the reaction temperature, the reaction pressure, the catalyst dosage, the gas/liquid ratio, and the recycle hydrogen concentration;

2. Setting a reaction time;

3. Setting an isolation condition: the quality parameter of liquefaction products being between set upper and lower limits;

4. Setting an emergency trigger condition: all operating parameters of the reactor being between set upper and lower limits;

5. Setting an emergency plan: giving an alarm, and handling according to an actual situation;

6. Setting a heuristic end condition: successive ten heuristic results being higher than results obtained based on current optimal operation knowledge, under the same basic working condition;

7. Acquiring current values of the hydrogen addition, the reaction temperature, the reaction pressure, the catalyst dosage, the gas/liquid ratio, and the recycle hydrogen concentration, that is, acquiring current operation data;

8. Randomly selecting one operation item from the operation data, randomly generating a new operation item within the safety range of the operation item, writing the new operation item into a control system, and automatically executing the new operation item by the device;

9. Waiting to the end of the reaction according to a waiting time; detecting the emergency trigger condition and the isolation condition during the waiting process; if the emergency trigger condition is met, starting the emergency plan; if the isolation condition is met, returning heuristic data to a previous value by means of a revertive control mechanism; and

10. Checking whether the end condition is met; if not, returning to Step 7.

From the above description, compared with the prior art, the machine heuristic learning method, system and device for operation behavior record management provided by the invention have the following advantages:

1. The invention solves the problem of an accumulation of operation experience for automated production lines and unattended devices, and provides enhanced technical support for the application of an operation behavior record management method, system and device in these fields;

2. The invention also realizes the innovation of operation behavior records of the operation behavior record management method, system and device, thus enabling the operation behavior record management method, system and device to break through the limitations of historical data, and optimize and evolve toward a more advanced self-operation and self-learning direction.

The invention is illustratively described above with reference to embodiments. Obviously, the specific implementations of the invention are not limited to the above embodiments, and all inessential improvements made based on the method concept and technical solutions of the invention, or direct applications of the concept and technical solutions of the invention to other occasions without any improvement should fall within the protection scope of the invention.

**Claims**

1.  A machine heuristic learning method for operation behavior record management, comprising:

    establishing a safety range of operation data;
    setting a constraint condition and a heuristic end condition, and setting an emergency plan for the constraint condition;
    performing a heuristic process: acquiring current basic working condition data, operation data and an emergency plan, wherein the operation data comprises at least one operation data dimension, and in case of no emergency plan, only the operation data is acquired; selecting at least one operation data dimension from the operation data by means of a random algorithm, randomly generating a value within a safety range of the selected operation data dimension to form new operation data of the selected operation data dimension, automatically executing the new operation data by a device, and entering a heuristic working state;
    checking the constraint condition; if the constraint condition is not met, starting the emergency plan if any;
    performing, after a working condition is stable, self-learning on the basic working data, the new operation data and evaluation data generated therefrom if the heuristic working state is not changed; and
    if the heuristic end condition is not triggered, performing a next heuristic process; or, if the heuristic end condition is triggered, ending the heuristic self-learning state.

2.  The machine heuristic learning method for operation behavior record management according to Claim 1, wherein the constraint condition comprises a precondition of an optimization objective, a compliant constraint, and a negative list of operation data;

    the precondition of the optimization objective means that the optimization objective is fulfilled under the condition of meeting the precondition;
    the compliant constraint refers to a case, appearing in various result evaluation data and caused by the basic working condition data and operations, that violates national standards, hinders the quality of products from reaching the standard, and has a negative influence on a subsequent process
    the negative list of the operation data refers to dangerous operation behaviors that should be prohibited out of consideration of device and personnel security.

3.  The machine heuristic learning method for operation behavior record management according to Claim 1, wherein the isolation condition is stricter than the constraint condition; and when the isolation condition is triggered in the heuristic working state, it is necessary to return to a previous operation.

4.  The machine heuristic learning method for operation behavior record management according to Claim 1, wherein the emergency plan comprises a preset value of the operation data and an alarm mode; and when the emergency plan is started, the operation data is modified into the preset value, and an alarm is triggered

5.  The machine heuristic learning method for operation behavior record management according to Claim 1, wherein the heuristic end condition is that a coverage rate of the basic working condition data reaches a preset proportion.

6.  The machine heuristic learning method for operation behavior record management according to Claim 1, wherein the evaluation data generated from the basic working condition data and the operation data comprises an optimization objective value or a restrictive result value.

7.  The machine heuristic learning method for operation behavior record management according to Claim 6, wherein if the evaluation data is superior to recorded evaluation data corresponding to other operation data under the same basic working condition data, an operation behavior record set is updated.

8.  A machine heuristic learning system for operation behavior record management, adopting the machine heuristic learning method for operation behavior record management according to any one of Claims 1-7, and comprising: a basic working condition data acquisition module, an operation data acquisition module, an evaluation data acquisition module and a data analysis module, wherein:

    the basic working condition data acquisition module acquires basic working condition data and transmits the basic working condition data to the data analysis module;
    the operation data acquisition module acquires operation data and transmits the operation data to the data analysis module;
    the evaluation data acquisition module acquires or calculates evaluation data and transmits the evaluation data to the data analysis module;
    the data analysis module pre-stores corresponding basic working condition data, operation data, evaluation data and an emergency plan, a constraint condition, an isolation condition, a heuristic end condition, and a safety range of the operation data;
    the data analysis module randomly generates new operation data within the safety range of the operation data, and enters a heuristic working state; checks the constraint condition, and if the constraint condition is not met, starts the emergency plan if any; performs, after a working condition is stable, self-learning on the basic working condition data, the new operation data and the evaluation data generated therefrom to form new operation behavior records if the heuristic working state is not changed; enters a next heuristic process if the heuristic end condition is not triggered; and ends the heuristic self-learning state if the heuristic end condition is triggered.

9.  A machine heuristic learning device for operation behavior record management, adopting the machine heuristic learning method for operation behavior record management according to any one of Claims 1-7, and comprising: a basic working condition data acquisition device, an operation data acquisition device, an evaluation data acquisition device and a data analysis device, wherein:

    the basic working condition data acquisition device acquires basic working condition data and transmits the basic working condition data to the data analysis device;
    the operation data acquisition device acquires operation data and transmits the operation data to the data analysis device;
    the evaluation data acquisition device acquires or calculates evaluation data and transmits the evaluation data to the data analysis module;
    the data analysis device pre-stores corresponding basic working condition data, operation data, evaluation data and an emergency plan, a constraint condition, an isolation condition, a heuristic end condition, and a safety range of the operation data;
    the data analysis device randomly generates new operation data within the safety range of the operation data, and enters a heuristic working state; checks the constraint condition, and if the constraint condition is not met, starts the emergency plan if any; performs, after the working condition is stable, self-learning on the basic working condition data, the new operation data and the evaluation data generated therefrom to form new operation behavior records if the heuristic working state is not changed; enters a next heuristic process if the heuristic end condition is not triggered; and ends the heuristic self-learning state if the heuristic end condition is triggered.

FIG. 1

FIG. 2

FIG. 3

FIG. 4

FIG. 5

FIG. 6

FIG. 7

FIG. 8

FIG. 9

FIG. 10

FIG. 11

FIG. 12

Production flow chart of aluminum electrolysis

FIG. 13

FIG. 14

FIG. 15

FIG. 16

FIG. 17

## INTERNATIONAL SEARCH REPORT

| | International application No. |
|---|---|
| | **PCT/CN2020/086200** |

**A. CLASSIFICATION OF SUBJECT MATTER**

G06N 20/00(2019.01)i

According to International Patent Classification (IPC) or to both national classification and IPC

**B. FIELDS SEARCHED**

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

CNPAT, WPI, EPODOC, CNKI: 厦门邑通软件科技有限公司, 刘煜, 孙再连, 梅瑜, 试探, 算法, 学习, 评价, 约束, 条件, 结束, 随机, 应急, 触发, 试错, 优化, 强化, heuristic, reinforcement, learning, action, iterative, control, optimize, update, restrict, condition, random

**C. DOCUMENTS CONSIDERED TO BE RELEVANT**

| Category* | Citation of document, with indication, where appropriate, of the relevant passages | Relevant to claim No. |
|---|---|---|
| X | CN 102043905 A (JIANGMEN POWER SUPPLY BUREAU, GUANGDONG POWER GRID CORPORATION) 04 May 2011 (2011-05-04) <br> description, paragraphs [0074]-[0137], and figures 1-3 | 1-9 |
| A | CN 102207928 A (HOHAI UNIVERSITY, CHANGZHOU) 05 October 2011 (2011-10-05) <br> entire document | 1-9 |
| A | CN 108632860 A (ZHEJIANG UNIVERSITY OF TECHNOLOGY) 09 October 2018 (2018-10-09) <br> entire document | 1-9 |
| A | CN 109241552 A (HARBIN ENGINEERING UNIVERSITY) 18 January 2019 (2019-01-18) <br> entire document | 1-9 |
| A | CN 110297704 A (CHANGSHA UNIVERSITY) 01 October 2019 (2019-10-01) <br> entire document | 1-9 |
| A | CN 110081889 A (GUANGDONG UNIVERSITY OF TECHNOLOGY) 02 August 2019 (2019-08-02) <br> entire document | 1-9 |

☑ Further documents are listed in the continuation of Box C.　　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 September 2020** | **28 September 2020** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2020/086200** |

| C. | DOCUMENTS CONSIDERED TO BE RELEVANT | |
| --- | --- | --- |
| Category* | Citation of document, with indication, where appropriate, of the relevant passages | Relevant to claim No. |
| A | US 6871160 B2 (SCIENTIFIC MONITORING INC.) 22 March 2005 (2005-03-22) entire document | 1-9 |

Form PCT/ISA/210 (second sheet) (January 2015)

## INTERNATIONAL SEARCH REPORT
### Information on patent family members

| International application No. |
| --- |
| **PCT/CN2020/086200** |

| Patent document cited in search report | | | Publication date (day/month/year) | Patent family member(s) | | | Publication date (day/month/year) |
| --- | --- | --- | --- | --- | --- | --- | --- |
| CN | 102043905 | A | 04 May 2011 | CN | 102043905 | B | 04 June 2014 |
| CN | 102207928 | A | 05 October 2011 | CN | 102207928 | B | 24 April 2013 |
| CN | 108632860 | A | 09 October 2018 | None | | | |
| CN | 109241552 | A | 18 January 2019 | None | | | |
| CN | 110297704 | A | 01 October 2019 | CN | 110297704 | B | 19 June 2020 |
| CN | 110081889 | A | 02 August 2019 | None | | | |
| US | 6871160 | B2 | 22 March 2005 | US | 2003120402 | A1 | 26 June 2003 |

Form PCT/ISA/210 (patent family annex) (January 2015)